(19) Europäisches Patentamt
European Patent Office
Office européen des brevets

(11) EP 2 722 600 A1

(12) EUROPEAN PATENT APPLICATION

(43) Date of publication:
23.04.2014 Bulletin 2014/17

(51) Int Cl.:
*F24D 19/10* (2006.01) *G06Q 50/06* (2012.01)

(21) Application number: 13158606.7

(22) Date of filing: 11.03.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 16.10.2012 IT MI20121737

(71) Applicant: Albia SA
6900 Lugano (CH)

(72) Inventor: Soresini, Massimiliano
27010 SANTA CRISTINA E BISSONE PV (IT)

(74) Representative: Modiano, Micaela Nadia
Modiano & Partners
Via Meravigli 16
20123 Milano (IT)

# (54) Energy saving method, particularly for buildings

(57) An energy saving method, particularly for buildings, characterized in that it comprises the steps of:
- checking (1) for the Internet availability of an electric power supply control unit;
- checking (2) for the availability of an ERP presence management system;
- checking (8) for the availability of history and self-learning data;
- reading (11) the configuration of the setup parameters;
- initializing (12) a check timer;
- adjusting the lighting and the electrical consumers (algorithm 1);
- adjusting the temperature (algorithm 2);
- storing (15) the system variables;
- checking (16) that the check timer has been triggered.



Printed by Jouve, 75001 PARIS (FR)

## Description

The present invention relates to an energy saving method, particularly for buildings.

Currently, the methods for saving energy in various types of buildings are unable to ensure substantial energy savings, due to the difficulty in monitoring and estimating all the sources of energy consumption present in a building and in the rooms that form it.

The aim of the present invention is to provide an energy saving method, particularly for residential rooms or working rooms, that solves the problem described above and overcomes the limitations of the background art, making it possible to obtain energy savings in the order of 25%.

Within this aim, an object of the present invention is to provide an energy saving method capable of giving the greatest assurances of reliability and safety of use.

Another object of the invention is to provide an energy saving method that does not require any invasive intervention on the building.

This aim and these and other objects that will become more apparent hereinafter are achieved by an energy saving method, particularly for buildings, **characterized in that** it comprises the steps of:

- checking for the Internet availability of an electric power supply control unit;
- checking for the availability of an ERP presence management system;
- checking for the availability of history and self-learning data;
- reading the configuration of the setup parameters;
- initializing a check timer;
- adjusting the lighting and the electrical consumers (algorithm 1);
- adjusting the temperature (algorithm 2);
- storing the system variables;
- checking that said check timer has been triggered.

Further characteristics and advantages of the present invention will become more apparent from the description of a preferred but not exclusive embodiment of an energy saving method, illustrated by way of non-limiting example with the aid of the accompanying drawings, wherein:

Figures 1 and 1a are views of the flowchart of the algorithm designated as "main" algorithm;

Figures 2 to 2g are views of the flowchart of the algorithm for the electrical and lighting management of the room, designated as algorithm no. "1". "1";

Figures 3 to 3h are views of the flowchart of the algorithm for the thermal management of the room, designated as algorithm no. "2";

Figure 4 is a view of the flowchart of the algorithm for managing the restart from manual interventions, designated as algorithm "K";

Figures 5 to 5d are views of the flowchart of the algorithm for calculation of electrical consumption per square meter, designated as algorithm "D";

Figures 6 and 6b are views of the flowchart of the algorithm for the calculation of the temperature of the room, designated as algorithm "N";

Figure 7 is a view of the flowchart of the algorithm for the calculation of thermal equilibrium, designated as algorithm "E".

With reference to the cited figures, the energy saving method comprises a "main" algorithm, shown in Figure 1, that in turn calls two secondary algorithms (algorithm "1" and algorithm "2"), shown respectively in Figures 2 and 3. The "main" algorithm can conveniently call also two further algorithms (algorithm "K" and algorithm "D"), shown respectively in Figures 4 and 5.

The second secondary algorithm (algorithm "2") can call two further algorithms (algorithm "N" and algorithm "E"), shown respectively in Figures 6 and 7.

The "main" algorithm uses the knowledge of a plurality of values relating to the residential room or working room of interest, including:

- Floor number
- Intended use
- Orientation
- Walls adjoining other rooms of the same building
- Walls adjoining other buildings

- Net average height
- Net average width
- Net average depth
- Net average area
- Net volume
- Internal plaster
- Insulation
- Wall insulation
- Floor
- Wall transmittance
- Covering transmittance
- Floor transmittance
- Windows/glazing type

    - Total glazed area
    - Window insulation
    - Frame type
    - Glass type
    - Light transmittance
    - Casing area
    - Presence of alarm system
    - Internal solar shading
    - External solar shading
    - Degree of transparency
    - Color
    - Double door or window

- Door/access type

    - Total occupied area
    - Presence of alarm system

- Radiating surface type
- Total radiating surface
- Electrical system type

    - Width
    - Depth
    - Height
    - Presence of control panel
    - Operating voltage
    - Components

- Lighting type
- Existence of control systems for maintaining constant lighting values
- Type of control system for optimizing natural light
- Presence of an alarm system
- Presence of passage/presence sensor
- Presence of twilight sensor
- Number of work stations
- List of machines/devices
- Number of people
- Internet connection
- Number of network outlets
- Number of electrical outlets
- Number of junction boxes
- Number of lamp holders

The main algorithm makes use, moreover, of the knowledge of a plurality of general values that are related to the building in which the residential room or working room of interest is located, can be obtained by means of a technical check-up, and include:

- Location of the building
- Classification of the building
- Position of the building
- Type of building
- List of rooms
    - Number of rooms
    - Number of people
- Type of rooms
- Geographic location (climate region)
- Construction year
- Energy class
- Region with natural gas network
- Type of construction
- Energy sources used
- Type of light
- Heating type
- Cooling type
- Number of floors
- Building orientation
- Building shadings
- Free sides of building perimeter
- Roof type
- Total walkable area
- Area exposed to the sun
- Total heated area
- Total cooled area
- Total unheated area
- Inhabited area
- Average height of heated rooms
- Average height of cooled rooms
- Average height of unheated rooms
- Weekly working hours or presence hours
- Season
- Annual working days or presence days
- Average winter temperature of the rooms
- Average spring temperature of the rooms
- Average summer temperature of the rooms
- Average fall temperature of the rooms
- Average internal humidity
- Presence of an alarm system
- Presence of a presence management system
- Presence of a passage/presence sensor
- Presence of an Internet connection
- Presence of structured wiring
- Presence of a business ERP system
- Presence of twilight switch
- Room dimensions
    - Average net height
    - Useful area
    - Gross area

    - Net volume
    - Gross volume

- Glazed area
- Radiating area
- Number of internal lighting points
- Number of external lighting points
- Number of work stations
- Number of machines
- Thermal capacity
- Ventilation type
- Opaque dispersion elements

    - Number
    - Area
    - Position
    - Transmittance
    - Protrusions/Obstructions

        - Number
        - Dimensions
        - Distance
        - Depth
        - Height

- Floor transmittance
- Wall transmittance
- Covering transmittance
- Transparent dispersion elements

    - Window insulation type
    - Frame type
    - Glass type
    - Glass perimeter
    - Frame + glass area
    - Luminous transmission factor
    - Casing area

- Solar shading type
- Transparency degree
- Number of double-glazing doors or windows
- Exposure of double-glazing doors or windows
- Electrical system type

    - Location
    - Width
    - Depth
    - Height
    - Presence of a control panel
    - Operating voltage
    - Components
    - Remote control
    - Domotics

- Lighted area
- Installed power per unit area
- Type of control system depending on presence
- Type of lamps used indoors

- Number of lamps used indoors
- Number of lamps used outdoors
- External twilight switch
- Heating system type
    - Thermal power station use
    - Thermal power station location
    - Year of installation
    - Delivered electric power
    - Type of fuel used
    - Boiler power type
    - Boiler thermal power
    - Boiler location
- Adjustment system
    - Type of adjustment
    - Characteristics of adjustment
- Emission system
    - Terminal type
    - Number of terminals
    - Average terminal power
- Other heat generation system
- Presence of photovoltaic system
    - Delivered power
- Presence of climate control system
    - Delivered power
- Distribution system
    - Type of distribution system
    - Degree of insulation
    - Electric auxiliary devices
- Storage system
    - Storage system location
    - Electric auxiliary devices
- Type of generators
    - Traditional generator
    - Multistage/modulating generator
    - Condensing generator
    - Multistage/modulating condensing generator
    - Hot air generator
    - Heat pump
    - Remote heating
    - Co-generation
- Type of operation
- Order of operation

- Presence of ACS generation
- Efficiency output
- Type of fuel
- Type of generation
- Mechanical ventilation system
    - Output electrical power
    - AV distribution electrical power
    - Air treatment electrical power
    - DV distribution electrical power
- ACS system
- Number of sanitary fixtures
- Delivered electrical power
- Distribution type
- Distributed electrical power
- Average temperature of the fluid

The energy saving method is described hereinafter with reference to the algorithms, the flowcharts of which are shown in the accompanying figures.

The main algorithm starts by checking for the Internet availability of an electric power supply control unit (step 1), connected to electric power supply control devices, designated in the figures as "GT-power".

If it is absent, the algorithm continues; if it is present, the algorithm reads the data from the electric power supply control unit (step 2) and modifies and stores the history data (step 3), so as to then send any signals/alarms that come from electric power supply control devices or the like to the control unit (step 4). Then it continues.

The main algorithm continues by checking for the availability of an ERP (Enterprise Resource Planning) presence management system (step 5):

if it is absent, the algorithm continues;
if it is present, the algorithm reads the data from the ERP system (step 6), modifies and stores the history data (step 7), and continues.

The algorithm continues by checking for the availability of history and self-learning data (step 8): if they are absent, the algorithm continues; if they are present, the algorithm reads the history data (step 9), modifies the history and self-learning data and stores their variations (step 10). Then it continues.

The algorithm continues by reading the configuration of the client parameters (step 11) and by initializing a check timer (step 12).

The main algorithm then executes algorithm 1 (step 13) in order to adjust the lighting and the electrical consumers in the room and then algorithm 2 (step 14) to adjust the temperature of said room.

The system variables and the parameters are then stored (step 15) and then a check whether the check timer has been triggered is performed (step 16).

If the check timer has not been triggered, the algorithm continues; if the check timer has been triggered, algorithm K (step 17) is executed to perform reactivation from manual interventions and algorithm D (step 18) is executed to calculate the consumptions expressed in $kWh/m^2$, storing the result (step 19).

The algorithm then returns to the beginning of the execution and continues cyclically.

The main algorithm calls algorithm 1 in order to adjust the lighting and the electrical consumers in the room. The flowchart of the algorithm 1 is shown in Figure 2 and described hereinafter.

Algorithm 1 does not provide for any thermal adjustment (warm/cold). Algorithm 1 might not consider some lighting points and some electrical outlets because they might be excluded from automatic adjustment by means of the configuration cycle. Moreover, each power point configured as a light consumer (e.g., a lamp) will be considered in this algorithm in the lighting adjustment part.

If the configuration provides for manual intervention for switching on or switching off, this overrides the automatic settings. However, reference is always made to the algorithm K for restoring lighting, electrical consumers and temperature adjustment.

Algorithm 1 starts by reading and loading system variables (step 20) and by initializing a variable k (step 21) and continues by checking for the presence of electric power supply control devices (step 22).

If they are present, the algorithm continues; if they are absent, the algorithm 1 checks for the presence of a domotics system (step 23). If a domotics system is present, the algorithm continues.

If a domotics system is absent, the algorithm checks for the presence of a remote control system of the electrical system (step 24). If such system is present, the algorithm continues; if it is absent, the algorithm moves on to analyzing the next room (i.e., the algorithm increases by one unit the value of k).

The light adjustment cycle starts by checking whether an automatic light adjustment system is present or not (step 25), inside the room with index k being analyzed, capable of controlling the luminous flux. If it is present, the automatic switching on/switching off is adjusted by this system (step 26) and thus one moves on to the cycle for adjusting the electrical consumers.

If the automatic light adjustment system is absent, the algorithm moves on to classifying the intended use of the room being analyzed (step 27). In fact, it is necessary to know first of all the intended use of the room being considered in order to classify it as a passage room or working room (step 28).

If the room is for passing through, the lights must switch on only when a person passes, therefore one must check for the presence or absence of a passage/presence sensor (step 29): if present, the automatic switching on/switching off is adjusted by the sensor (step 30) and therefore one moves on to the electrical consumer adjustment cycle.

If the passage/presence sensor is absent, the algorithm reads the data according to configuration (step 31) in order to analyze whether to leave the manual setting of the switches or verify the luminous intensity for any switching on of the lights.

Then the desired configuration set up by the user is analyzed in order to verify the existence of an automatic adjustment (step 32) on the basis of which the lights switch on automatically if there is insufficient light. If the setting is not automatic, the system keeps the lights switched off and one moves on therefore to the electrical consumer adjustment cycle.

If the setting is automatic, the algorithm checks whether the current time is a working time (step 33). If it is a working time, a check for the presence of the twilight sensor (step 34) is made. If the twilight sensor is present, the automatic switching on/switching off is adjusted by the sensor (step 35) and therefore one moves on to the electrical consumer adjustment cycle.

If the twilight sensor is absent, the algorithm initializes a variable $P_u$ to zero (step 36) and moves on to the execution of the subroutine of indirect assessment of luminous intensity (step 37, which will be analyzed hereinafter), which returns the value of the lighting (step 36a).

If the lighting is sufficient, the system switches off the lights and one then moves on to the electrical consumer adjustment cycle.

If the lighting is insufficient, the configuration data are read so that the system switches on the lights (all, ½, ⅓). Then one moves on to the electrical consumer adjustment cycle.

If instead it is not working time, the lights remain switched off and the algorithm moves on to the electrical consumer adjustment cycle.

If the room is a working room instead of a passage room, it is necessary to consider first of all, as a basic rule, that the lights remain switched off even during office hours if the lighting is sufficient. A check is made, therefore, to determine whether it is currently working time(step 38): if it is, the presence of the twilight sensor (step 39) is checked. If the twilight sensor is present, the automatic switching on/switching off is controlled by the sensor (step 40) and one moves on therefore to the electrical consumer adjustment cycle.

If the twilight sensor is absent, the algorithm initializes the variable $P_u$ to 1 (step 41) and moves on to the execution of the subroutine of indirect assessment of luminous intensity (step 37), which returns the value of the lighting (step 41a).

If the lighting is sufficient, the system switches off the lights and one moves on, therefore, to the electrical consumer adjustment cycle.

If the lighting is insufficient, the configuration data are read so that the system switches on the lights (all, ½, ⅓), and then one moves on to the electrical consumer adjustment cycle.

If instead it is currently not working time, the presence of a passage/presence sensor is checked (step 42): if it is present, the presence of a person inside the room is checked (step 43). If the person is present, the lights are switched on (step 44) and then one moves on to the electrical consumer adjustment cycle.

If the person is absent, the system switches off the lights (step 45) and then one moves on to the electrical consumer adjustment cycle.

If the passage/presence sensor is absent, the configuration data are read (step 46) for analyzation of whether to leave the manual setting of the switches or verify the luminous intensity for any switching on of the lights according to the configuration.

If a non-automatic setting exists (step 47), the system leaves the lights off (step 48) and then move moves on to the electrical consumer adjustment cycle; if an automatic setting does not exist (step 47), automatic switching on/switching off is adjusted by the system and therefore the lights are switched off and then one moves on to the electrical consumer adjustment cycle.

At the end of the light adjustment cycle, the electrical consumer adjustment cycle beings. First of all, the configuration of each power point is checked (step 49) for verification which points can be switched off and which ones instead must always be kept active, the latter being the following:

- power points to which the machines that according to configuration cannot be adjusted automatically are connected;
- consumers used for cooling/heating, which are managed by a different algorithm.

Subsequently, one checks whether the room with index k being considered is a passage room or a working room (step 50): if the room is a passage room, one checks whether it is currently working time (step 51).
If it is working time, the outlets are enabled (step 52); if it is not working time, the outlets are disabled (step 53).
If the room is a working room, one checks for the presence of a passage/presence sensor (step 54): if it is present, one checks for the presence of a person inside the room (step 55). If the person is present, the system enables the electrical outlets (step 56); if the person is absent, the system switches off the electrical outlets that can be modified (step 58).
If the passage/presence sensor is absent, one checks whether it is currently working time (step 59): if it is working time, the system activates the outlets (step 60); if it is not working time, the system switches off all the outlets (step 61).
Finally, the algorithm increases by one unit the variable k (step 62) and checks whether this index is greater than the number of rooms (step 63): if it is greater, the algorithm stops -(step 64); if it is not greater, the algorithm moves on to analyzing the next room (step 65).
The subroutine for indirect analysis of luminous intensity is described hereinafter.
The algorithm checks the situation of the instantaneous natural light by means of the location of the room being considered and, more generally, the location of the building, on the basis of its latitude and longitude (step 66). This data item can be obtained in two ways:

1. from data obtainable from the Web (step 67)
2. in the absence of Web data, from tables giving the incidence of sun rays at different latitudes (step 68).

If the current time band has acceptable light conditions, for example post-dawn light and pre-sunset light (step 69), the algorithm continues. If it is currently dark (step 70), the algorithm returns a result of "100% darkness".
After this, it is necessary to check the instantaneous weather conditions by means of the Web weather systems, if available (step 71). If these weather conditions are available, the downloaded data item is checked (step 72): if the weather is cloudy, the algorithm sets the result of "100% darkness" (step 70) and checks the variable $P_u$ (step 73).
If $P_u$=0, the algorithm returns to step 36a; if $P_u$=1, the algorithm returns to step 41a.
If the weather is fair or changeable, the algorithm continues by checking whether the room is lit unilaterally (i.e., if parts with windows exist only on one side of the room, step 74). If the room is not lit unilaterally, the algorithm continues.
If the room is lit unilaterally, it is necessary to verify that the sum of the ratio between the depth of the room and its width and the depth of the room divided by the height of the floor of the upper edge of the window is less than $2/(1-p_m)$, where $p_m$ is the weighted average coefficient of the transmission of the internal surfaces in the half of the room that lies furthest from the window (step 75). The corresponding formula is $(L/W)+(L/H) < 2/(1-p_m)$: if the sum of the two ratios is less than $2/(1-p_m)$, the algorithm continues; if the sum of the two ratios is greater or equal, the algorithm produces the result of "100% darkness" (step 76).
The algorithm then continues by identifying the ratio of the luminous area (with the corresponding transmittance) to the opaque area, taking into account the following values:

- Type of glass
- Color
- Degree of transparency
- Light transmittance

If the value of light transmittance is known (step 77), the type of glass, the color and the transparency are not needed; otherwise this transmittance is calculated by means of said values (step 78).
One then calculates the ratio of the available luminous area ($x = (\%S_v*\tau)/\%S_p$) between the glazed area ($S_v$) multiplied by the known or calculated value of transmittance, ($\tau$) and the perimetric area of the room (Sp) (step 79), and one compares it with the value of 12.5% (step 80). If this ratio is lower than 12.5%, the algorithm sets the result of "100% darkness" (step 81) and checks the variable $P_u$(step 82).
If $P_u$= 0, the algorithm returns to step 36a; if $P_u$= 1, the algorithm returns to step 41a.
If the ratio is greater than 12.5%, the value of the percentage is maintained (step 83) and one checks whether the glazed area is shaded by any obstacles (step 84), evaluating the ratio between the luminous area and the cone of shadow generated by obstacles arranged in front of the glazed pants and the doors.

For calculating this ratio, the following values are necessary:

- Room orientation
- Window location
- Door location
- Season / day / hours / minutes /seconds
- Location of the building (in order to know the position of the sun with respect to the building)
- Weather conditions
- Location of external shading obstacles
- Floor number
- Status and position of the external lighting (if possible).

This ratio is calculated as:

$$\eta_i = (\Sigma_{(i=0:n)}(\tau_i A_i \varepsilon_i \Psi_i)) / ((1-p_m)*S),$$

where n is the number of windows of the room, $\tau$ is the transmittance of the glass, A is the area of the window, $\varepsilon$ is the "window" factor of the window, $\Psi$ is the reduction factor of the factor $\varepsilon$ and S is the area of the wall.

Then one checks whether this ratio between the luminous area and the cone of shadow is smaller or greater than 1% (step 85). If the ratio between the luminous area and the cone of shadow is less than 1%, the algorithm sets the result of "100% darkness" (step 86) and checks the variable $P_u$(step 87).

If $P_u$= 0, the algorithm returns to step 36a; if $P_u$= 1, the algorithm returns to step 41a.

If this ratio between luminous area and cone of shadow is greater than 1%, the algorithm applies the value of (100 - x %) to the percentage stored previously (step 88) and checks whether a system for adjusting the natural light is present (step 89).

If this system is present, the algorithm increases the application of the previous point by 20% (step 90), sets the result to light with a percentage of confidence that is the result of said increase (step 91), and checks the variable $P_u$ (step 92).

If $P_u$= 0, the algorithm returns to step 36a; if $P_u$= 1, the algorithm returns to step 41a.

If this system is absent, the algorithm sets the result to light with a percentage of confidence that is the result of said increase (step 91) and checks the variable $P_u$ (step 92).

If $P_u$= 0, the algorithm returns to step 36a; if $P_u$= 1, the algorithm returns to step 41a.

If the domotics system or the electrical system remote control system is present, the present algorithm must have access to the functions of switching on/off both the lighting points and the electrical outlets. The expression "modifiable outlets" is understood to refer to the power points to which the machines that by configuration cannot be adjusted automatically, or the consumers used for cooling/heating, which are managed by another algorithm, are connected.

The main algorithm also calls the algorithm 2 in order to adjust the temperature of the room. The flowchart of the algorithm 2 is shown in Figure 3 and described hereinafter.

The algorithm 2 starts by reading the input variables (step 93) and by initializing the support variable k (step 94) and then continues by checking for the presence of electric power supply control devices (step 95). If they are present, the algorithm continues; if they are absent, one checks for the presence of a domotics system (step 96). If the domotics system is present, the algorithm continues; if it is absent, one checks for the presence of an automatic climate control system (step 97). If said climate control system is present, the algorithm stops (step 98); if it is absent, the algorithm continues.

One then moves on to the classification of the intended use of the room (step 99) and to the execution of the algorithm N (step 100) for the calculation of the temperature of the room, either direct or indirect, by means of the temperature of the adjoining rooms. The algorithm N will be described hereinafter. One then checks whether the room k being considered is a passage room (step 101). If the room is a passage room, the algorithm continues with the adjustment of the non-working/residential rooms (step 102); if the room is not a passage room, one checks whether it is working time (step 103). If it is not working time, the algorithm continues by adjusting the non-working/residential rooms (step 104).

If it is working time, one checks for the existence of a passage/presence sensor (step 105). If said sensor is absent, one checks for the presence of people by means of an ERP/timesheet system (step 106). If there are people, the algorithm continues with room adjustment in normal mode (step 107); if there are no people, the algorithm continues with room adjustment in economode.

If instead a passage/presence sensor exists, one checks for the presence of people (step 109): if there are no people, the algorithm continues with economode adjustment; if there are people, the algorithm continues with adjustment in the normal mode (step 107).

Climate control in the normal mode occurs by executing the algorithm E (step 110) of the room with index k in order to obtain the thermal behavior of said room expressed in kWh and loaded in the variable $kWh_{ten}(k)$. The algorithm E will be described hereinafter. Then the algorithm verifies whether it is summertime (step 111).

If it is not summertime, one calculates the adjustment temperature ($T^o{}_{reg}(k)$) (step 112) by means of the formula:

$$T^o{}_{int}(k) - (T^o{}_{rifINV} + (T^o{}_{\Delta ist}\,(k))/2).$$

The result is converted into kWh and loaded into the variable $kWh_{reg}(k)$ (step 113).

Then the algorithm checks whether the absolute value of the difference between the internal temperature of the room k being considered and the winter reference temperature is greater than half of the hysteresis delta of the room k (step 114): if it is greater, the algorithm activates the heating, applying the power contained in the variable $kWh_{reg}(k)$ (step 115), and continues; if it is not greater, the algorithm continues.

If instead it is summertime, one calculates the adjustment temperature ($T^o{}_{reg}(k)$) (step 116) by means of the formula:

$$T^o{}_{int}(k) - (T^o{}_{rifEST} - (T^o{}_{\Delta ist}\,(k))/2\ ).$$

The result is converted into kWh and loaded into the variable $kWh_{reg}(k)$ (step 117).

Then the algorithm checks whether the absolute value of the difference between the internal temperature of the room k being considered and the summer reference temperature is greater than half of the hysteresis delta of the room k (step 118): if it is greater, the algorithm activates the cooling system, applying the power contained in the variable $kWh_{reg}(k)$ (step 119), and continues; if it is lower, the algorithm continues.

The algorithm continues by increasing the index k of the rooms (step 120) and checking whether said index is greater than, or equal to, the number of rooms (step 121): if it is smaller, the algorithm returns to the adjustment of the new room with index k (step 122); if it is greater, the algorithm stops (step 123).

Climate control in economode occurs by calculating the average temperature of the adjoining rooms, loaded into the variable $T^o{}_{med}$(step 124). Then the difference between the internal temperature of the room k and the average temperature is calculated, loading the variable $T^o{}_{dif}$ (k) (step 125). This temperature is converted into kWh and loaded into the variable $kWh_{dir}(k)$ (step 126). Likewise, the hysteresis delta is converted into kWh and loaded into the variable $kWh_{ist}(k)$ (step 127). The algorithm continues by verifying whether the absolute value of the power $kWh_{dif}(k)$ is greater than the absolute value of the power $kWh_{ist}(k)$ (step 128); if it is not greater, the algorithm continues by checking whether the status of the climate control system is active (step 129). If the climate control system is active, the algorithm deactivates it (step 130) and continues; if it is not active, the algorithm continues by increasing the index k of the rooms (step 131) and checking whether it is greater than, or equal to, the number of rooms (step 132). If it is smaller, the algorithm moves on to the adjustment of the new room with index k (step 122); if it is greater, the algorithm stops (step 133).

If instead the absolute value of the power $kWh_{dir}(k)$ is greater than the absolute value of the power $kWh_{ist}(k)$, the algorithm calculates the difference in absolute value between the power $kWh_{dif}(k)$ and the power of the hysteresis delta, loading the result into the variable $\Delta kWh_{reg}$ (step 134). Then the algorithm E is executed (step 135) so as to obtain the thermal behavior of the room with index k, which is expressed in kWh, and the result is loaded into the variable $kWh_{ten}(k)$ (step 136).

Then one checks whether this power is greater than the content of the variable $\Delta kWh_{reg,}$ or not, i.e., one checks whether $\Delta kWh_{reg} < kWh_{ten}(k)$ (step 137). If this power is greater than the content of the variable $\Delta kWh_{reg,}$, the algorithm loads it into the variable $\Delta kWh_{reg,}$ itself, overwriting its content (step 138), and checks that the absolute value of $T^o{}_{dif}(k)$ is greater than $T^o{}_{\Delta ist}(k)$ (step 139). If the absolute value of $T^o{}_{dif}(k)$ is greater, then the algorithm continues; otherwise, if the value of $T^o{}_{dif}(k)$ is not greater than $T^o{}_{\Delta ist}(k)$, the algorithm continues by checking whether the status of the climate control system is active (step 129). If it is active, it deactivates it (step 130) and continues. If it is not active, the algorithm continues by increasing the index k of the rooms (step 131) and checking whether it is greater than, or equal to, the number of rooms (step 132), to move on to the adjustment of the new room with index k if said index is lower than the number of rooms; if the index k is greater, the algorithm stops.

The algorithm then continues by verifying whether it is summertime (step 140); if it is not summertime, the algorithm checks whether the internal temperature of the room k being considered is higher than the sum of the winter reference temperature increased by half of the hysteresis delta (step 141), i.e.,

$$T°_{int}(k) > T°_{rifINV} + (T°_{\Delta ist}(k)/2).$$

If the internal temperature is not higher than this sum, the algorithm activates the heating system, applying an energy equal to half of $\Delta kWh_{reg}$ (step 142), and continues; if the internal temperature is higher, the algorithm continues.

If instead it is summertime, the algorithm checks whether the internal temperature of the room k being considered is lower than the summer reference temperature minus half of the hysteresis delta (step 143), i.e.,

$$T°_{int}(k) < T°_{rifEST} - (T°_{\Delta ist}(k)/2).$$

If the internal temperature is higher than this difference, the algorithm activates the cooling system, applying an energy equal to half of $\Delta kWh_{reg}$ (step 144), and continues; if the internal temperature is lower than this difference, the algorithm continues.

The algorithm then continues by increasing the index k (step 131) and checking whether it is greater than, or equal to, the number of rooms (step 132), in order to move on to the adjustment of the new room with index k if said index is smaller than the number of rooms. If it is greater, the algorithm stops.

The algorithm then continues with the climate control of the non-working/residential rooms and checks for the presence of a heating or cooling system in the room with index k (step 145): if this system is absent, the algorithm moves on to the analysis of the next room; if it is present, the algorithm verifies whether at least one of the adjacent rooms is climate-controlled (step 146).

If none of the adjacent rooms is heated, the algorithm continues by analyzing the next room. If at least one room adjacent to the room with index k is heated/cooled, the algorithm checks whether the room with index k being analyzed is of the working type or residential type (or in any case whether the presence of people in it is to be expected) (step 147). If it is, the algorithm continues, moving on to analyzing the next room; otherwise the algorithm checks for the presence of a passage sensor (step 148). If the sensor is present, the algorithm checks for the presence of one or more people (step 149) and if there are people present the algorithm continues by moving on to analyzing the next room. If instead said sensor does not exist, or if there are no people present, the algorithm continues.

The algorithm continues by calculating the average temperature of the adjoining rooms ($T°_{med}$), as long as they are of the working/residential type (step 150). It then moves on to calculating the difference in temperature ($T°_{dif}$) between the internal temperature of the room with index k and the average temperature of the adjoining working/residential rooms (step 151). Then it moves on to converting the resulting $T°_{dif}(k)$ of the previous calculation into energy expressed in kWh ($kWh_{dif}(k)$) (step 152). Then it calculates the average of the hysteresis deltas applied to the adjoining rooms ($T°_{\Delta Mist}$) (step 153) and converts it into energy expressed in kWh ($KWh(T°_{\Delta Mist})$) (step 154).

Then it checks whether the absolute value of $kWh_{dif}(k)$ is greater than $KWh(T°_{\Delta Mist})$ (step 155); if it is not greater, the algorithm continues, moving on to the next room. If it is greater, the algorithm calculates the difference between the two energies and applies its absolute value ($\Delta kWh_{reg}$) (step 156).

Then the algorithm E is activated (step 157) for determining the thermal behavior of the room being considered, expressed in kWh, and the variable $kWh_{ten}$ of the room with index k is loaded (step 158). The algorithm then checks whether the absolute value of $kWh_{reg}$ is lower than the absolute value of said variable $kWh_{ten}$ (step 159): if it is greater, the algorithm continues; if it is lower, the variable $kWh_{reg}$ is loaded with the value of $kWh_{ten}$(step 160) and then the algorithm continues.

The algorithm then verifies whether $T°_{dif}(k)$ is greater than the hysteresis delta of the room with index k involved (step 161): if it is greater, the algorithm continues; if it is not greater, the algorithm checks whether the climate control system (cooling/heating) is active (step 162), in order to deactivate it (step 163) and move on to the analysis of the next room.

The algorithm then checks whether it is summertime (step 164): if it is summertime, the algorithm checks whether the internal temperature of the room is lower than the summer reference temperature reduced by half of the hysteresis delta of the room being considered (step 165), in which case the algorithm continues; otherwise it performs the activation of the cooling system, applying an energy equal to $\Delta kWh_{reg}/4$ (step 166).

If it is not summertime, the algorithm checks whether the internal temperature of the room k is higher than the winter reference temperature increased by half of the hysteresis delta (step 167): if the internal temperature is not higher than this value, the algorithm performs the activation of the heating system, applying an energy equal to $\Delta kWh_{reg}/4$ (step 168); otherwise the algorithm continues.

The algorithm then continues by increasing the index k by one unit (step 169) and checking whether this index is greater than the total number of rooms (step 170), in order to resume the control of the room with the new index k, or in order to stop.

With reference to the algorithm 2, internal temperature is understood to be the temperature of the room/environment being considered, whereas external temperature is understood as the atmospheric temperature in degrees Celsius (C$^o$). Moreover, the adjustment of the heating/cooling system is performed by supplying the exact power based on the thermal status of each room. If the climate control system does not allow this type of adjustment, the algorithm merely switches it on and off.

The main algorithm, besides calling said two algorithms "algorithm 1" and "algorithm 2", can also call the algorithms "algorithm K" and "algorithm D", the flowcharts of which are shown respectively in Figures 4 and 5, and will be described hereinafter.

The algorithm K, the flowchart of which is shown in Figure 4, starts by loading the system variables (step 171) and continues by checking for the presence of a domotics system (step 172). If this system is present, the algorithm restores the automatic functionality of the lighting points, electrical outlets and climate control points (step 173), then it stops (step 174). If this system is absent, the algorithm checks for the presence of the remote control system of the electrical system (step 175). If the remote control system is present, the algorithm restores the automatic functionality of the lighting points, electrical outlets and climate control points (step 176), then stops (step 177). If the remote control system is absent, the algorithm continues.

The algorithm then continues with the initialization of the variable k (step 178) in order to perform the cycle for verifying the status of all the electric power supply control devices (electricity, brightness, heating).

The algorithm checks, therefore, for the presence of a sensor of these devices (step 179): if it is absent, the algorithm continues; if it is present, the algorithm reads the type of device and its status (step 180), then verifies whether this status is manual (step 181). If the status is manual, the automatic status of the electric power supply control device is reactivated (step 182) and the algorithm continues. If the status is not manual, the algorithm continues.

The algorithm then moves on to increasing the variable k by one unit (step 183) and to check whether this variable is greater than the quantity of electric power supply control devices (step 184): if it is smaller, the algorithm goes back to check a new electric power supply control device; otherwise the algorithm stops (step 185).

The algorithm D, the flowchart of which is shown in Figure 5, starts by loading the input variables (step 186), then continues by checking for the presence of an electrical panel (step 187) upstream of the system provided with meters for reading the used power levels (net with respect to the meters of the supplier of the electrical services). If the electrical panel is present, the algorithm reads the total kWh from the electrical panel (step 188) and, following the calculation of the ratio between the area of the room (designated by $m^2v$) and the useful area of the building (designated by $m^2_l$) (step 189), it applies it to the total power used and subsequently divides it by the square meter area of the room itself (step 190), thus obtaining the power used per $m^2$, which is placed in output (step 191) with the consequent closure of the algorithm (step 192).

If instead no electrical panel is present, the algorithm checks for the presence of the electric power supply control devices or of devices capable of determining the on/off status of lighting, electrical or climate-control consumers (step 193). If these devices are not present, the algorithm sets the internal variable $KWh_{tot}$ to zero (step 194), arranges it in output (step 191) and stops (step 192).

If these devices are present, the index k is initialized (step 195) and the cycle to determine the power used by the lighting points that are switched on begins (step 196). Then it performs the sum $KWh_1$ of the powers of each switched-on lighting point with index k (step 197, where the subscript 1 designates the lighting point and the subscript L designates the switched-on lamp). Then it checks whether the index k is greater than, or equal to, the quantity of the lighting points present in the room (step 198): if it is not greater, the algorithm goes back to performing the previous addition; otherwise the algorithm moves on to performing the addition $KWh_d$ of the powers of each device/machine connected to the enabled outlets with index k (step 199, where the subscript d designates the power point and the subscript D designates the device/machine), and exits from the cycle when k exceeds the quantity of power points of the room (step 200) and continues.

Any production of hot sanitary water (ACS in acronym) is then checked (step 201): if there is production, the algorithm loads the expressed used power (optionally converted into KWh) in the variable $KWh_r$ (step 202); otherwise it continues.

One then moves on to verifying whether the current period is a period for using the cooling system (step 203): if this is not the case, the algorithm checks whether the heating system is of the centralized type (with a boiler, with a diesel generator, with remote heating, etcetera) (step 204), in which case it checks whether the heating is on (step 205). If the heating is on, the algorithm calculates the power used by the heating system, relating it to the area of the room, and stores the result in the variable $KWh_r$ (step 206, where the subscript r designates the generic heating system and the subscript RC designates the generalized heating system). Then the algorithm continues. If the heating system is not active, the algorithm continues.

If the heating system is not of the centralized type, the index k is initialized (step 207) and performs the addition of the power of each active heating point with index k that comprises the powers used for the optional distribution and ventilation systems (step 208, where the subscript PR designates the heating point). This cycle stops when the index k exceeds the quantity of the heating points (step 209). The algorithm continues.

If instead we are in a cooling period, the algorithm checks for the presence of a centralized cooling system (step 210). If a cooling system is present, one verifies whether the cooling is active (step 211). If it is active, one performs the calculation of the power used by cooling, relating it to the area of the room, and stores the result in the variable $KWh_r$ (step 212), considering also the power used for distribution and ventilation; then the algorithm continues. Otherwise the algorithm continues.

If cooling is not centralized, the addition of the powers of each active cooling point with index k is performed (step 213) and this cycle is exited when the index k exceeds the quantity of cooling points (step 214). The algorithm then continues.

At the end of the cycles for calculation of the powers used in the climate control system, the algorithm performs the addition of the powers obtained from the various types of use (step 215); it divides this sum by the useful area of the room and loads its value in the variable $KWh_{tot}$, which is arranged in output (step 191). Then the algorithm stops (step 192).

The present algorithm K is functional when it is possible to identify the active/inactive lighting points, the enabled/non enabled outlet points and the status of the points associated with climate control (heating, cooling).

The algorithm 2, described previously, can call the algorithms "algorithm N" and "algorithm E", the flowcharts of which are shown respectively in Figures 6 and 7. The algorithms "N" and "E" are described hereinafter.

The first step of the algorithm N is the loading of the input variables (step 216), followed by checking for the presence of an external temperature sensor (step 217): if it is not present, one checks the feasibility of reading the temperature from the Web (step 218). If this reading is not feasible, the external temperature is loaded from tables of the average temperatures of the period by using the location of the room (step 219) and then the variable $T^o_{est}$ (step 220) is loaded.

If instead reading from the Web is feasible, the value of the external temperature is loaded in the variable $T^o_{est}$ (step 221). If the external temperature sensor is present, the variable $T^o_{est}$ is loaded with the value obtained from the sensor itself (step 222).

The algorithm then checks for the presence of an internal temperature sensor of the room being considered (step 223). If it is present, the algorithm loads the variable $T^o_{int}$ with the temperature obtained from the sensor (step 224) and then continues. If there is no sensor, the algorithm checks whether a temperature sensor is present in the adjoining rooms (step 225). If a temperature sensor is present in the adjoining rooms, the algorithm reads the temperature from the sensors of the adjoining rooms (step 226) and loads the detected temperature average in the variable $T^o_{int}$ (if more than one sensor is present) (step 227). Then the algorithm continues.

If there are no temperature sensors in the adjoining rooms as well, one checks for the presence of at least one sensor in the whole building (step 228): if it is present, the variable $T^o_{int}$ is loaded with the average of the temperatures detected in the various rooms (step 229) and continues; if it is not present, one checks for the presence of at least one temperature history datum of that room (step 230).

If a history datum is present, the algorithm loads the variable $T^o_{int}$ with the history temperature of the room (step 231); if it is not present, the algorithm assigns to the variable $T^o_{int}$ the value of the external temperature loaded in $T^o_{est}$ (step 232) and continues.

The algorithm continues with the calculation of the overall coefficient of heat exchange between the room being considered and the adjoining heated rooms and stores the result thereof in the variable $H_{RN}$ (step 233) by means of the formula

$$H_{RN} = \rho_A * C_A \left(\sum_k b_{VEK} * V_{VEK}\right) * th$$

where $\rho_A * C_A$ indicates the volume heat capacity of the air (equal to 1200 J/m$^2$), $V_{VEK}$ is the volume flow-rate of the air flow, $b_{VEK}$ is the correction factor of the temperature of the air flow, and th is the average period of detection per hour.

One continues with the calculation of the overall coefficient of heat exchange between the adjoining rooms and the outside, stored in the variable $H_{RE}$ (step 234), by means of the formula

$$H_{RE} = \rho_A * C_A \left(\sum_k b_{VEK} * V_{VEK}\right) * th$$

Then one checks whether $H_{RN}$, $H_{RE}$ and $\Phi$ (which indicates the heat flow generated inside the room) contain valid data (step 235). If they contain valid data, the algorithm calculates the temperature of the room (step 236) according to the formula $T^o_{VN} = (\Phi + T^o_{int} * H_{RN} + T^o_{est} * H_{RE}) / (H_{RN} + H_{RE})$ and continues.

If the data are not valid, the algorithm calculates the sum of the areas of the walls adjoining the heated rooms, storing the result in the variable $A_{PR}$ (step 237), and then continues by calculating the sum of the areas of the walls that are adjoining the outside and stores the result in the variable $A_{PE}$ (step 23 8).

Finally, it calculates the temperature of the room (step 239) according to the formula

$$T^o_{VN} = ((A_{PR} * K_1 * T^o_{int}) + (A_{PE} * K_2 * T^o_{est})) / ((A_{PR} * K_1) + (A_{PE} * K_2))$$

where $K_1$ is the transmittance of the walls that are adjoining the heated rooms and $K_2$ is the transmittance of the walls that are adjoining the outside. Then the algorithm continues.

The algorithm stops with the output of the temperature of the room being considered, expressed in C° ($T^o_{VN}$) (step 240).

As regards the algorithm "E", the flowchart of which is shown in Figure 7, it starts by reading the system variables (step 241) and by initializing the index k (step 242). Then it calculates the area of the closure element (doors and windows) designated by the index k, which comprises the frame and the optional casing (step 243). It stores the result thereof in the variable A. Then it performs the calculation of the solar thermal inputs (step 244, where I is the solar radiation that is incident on the closure element (door or window) expressed in Wh/m$^2$, including the absorptions of opaque walls, $F_O$ is the corrective coefficient regarding shadings, $F_T$ is the corrective coefficient regarding curtains, $F_G$ is the corrective coefficient regarding the frame, $F_{SM}$ is the corrective coefficient related to movable shadings, Fsv is the solar factor of the glass), calculating their sum by means of the variable $Q_S$ with the result of the product of the solar radiation incident on the closure element expressed in Wh/m$^2$ multiplied by the area calculated previously, multiplied by the corrective coefficient of the shadings, multiplied by the corrective coefficient of the curtains, multiplied by the solar factor of the glass (thermal transmittance of the closure element). The value of $F_O$ is calculated with the following formula:

$F_O = F_{OR} * F_{OV} * F_{FIN}$, where $F_{FIN}$ indicates external obstructions, $F_{OV}$ indicates vertical protrusions and $F_{OR}$ horizontal protrusions. In the specific instance, moreover, $F_G$ is the ratio between the area of the glass and the total area of the closure element. If there are no reliable data, the corrective factor relating to the frame $F_G$ is 0.8. $F_{SM}$ is calculated by means of the formula:

$$F_{SM} = [(1 - f_t) * g_s + f_t * g_A] / g_A$$

where $f_t$ is the fraction of time in which solar shielding is used, therefore it depends on the climate, the season and the solar exposure; $g_S$ is the transmittance of the total solar energy of the window when the solar shading is used; $g_A$ is the transmittance of the total solar energy of the window when the solar shading is not used.

It then checks that the index k is greater than, or equal to, the number of closure elements (step 245): if it is lower, the index k is increased by one unit (step 246) and the algorithm goes back to calculating the area of the next closure element; if it is greater, the algorithm continues by calculating the thermal inputs given by the floor (step 247), expressed in Wh/m$^2$ and obtained by multiplying the thermal input by the unit of area multiplied by the usable area of the floor, loading the result in the variable $Q_P$.

Likewise, the calculation of the thermal inputs supplied by the ceiling is performed (step 248) by multiplying the internal input by the unit of area multiplied by the usable area of said ceiling. The result is stored in the variable $Q_C$.

Then one moves on to calculating the thermal inputs obtained from the walls (step 250), reinitializing the index k (step 249) and storing in $Q_R$ the sum of the product of the internal input of each wall designated by k multiplied by the useful area of the wall itself.

The algorithm then checks whether the index k is greater than, or equal to, the number of walls (step 251): if it is lower, the index k is increased by one unit (step 252) and the algorithm returns to the sum of the thermal inputs of the walls; if it is greater, the algorithm moves on to calculating the thermal inputs of all the "movable" components that are present in the room/environment (step 253, where $a_M$ designates the internal input per m$^2$ of the area of the wall, expressed in Wh/m$^2$, $AU_R$ designates the useful area of the wall in m$^2$, $a_M$ designates the internal input per m$^2$ of the area occupied by the machines expressed in Wh/m$^2$, $N_M$ designates the number of machines, $a_L$ designates the internal

input per $m^2$ of the area occupied by the lamps expressed in $Wh/m^2$, $N_L$ designates the number of lamps, $a_U$ designates the internal input per $m^2$ of the area occupied by the people expressed in $Wh/m^2$, $N_U$ designates the number of people, ACS designates the thermal input of the sanitary hot water) and stores the result in the variable $Q_{MO}$, calculated by means of the product of the internal input of the machines multiplied by the number of said machines, added to the thermal input of the lamps multiplied by the number of said lamps, added to the thermal input induced by the people that occupy the room, added to the thermal input multiplied by the number of said people, added to the thermal input of the sanitary hot water (ACS).

Then the algorithm performs the addition of the variables $Q_S + Q_P + Q_C + Q_R + Q_{MO}$ (step 254), loading its result in the variable $OUT_C$.

The algorithm then continues by checking for the presence of an external temperature sensor (step 255): if it is not present, the algorithm checks for the feasibility of reading the temperature from the Web (step 256). If this reading is not feasible, the algorithm loads the external temperature from tables of the average temperatures of the period, using the location of the room (step 257), and then loads the variable $T^o_{est}$ (step 258).

If reading from the Web is feasible, the algorithm loads the value of the external temperature in the variable $T^o_{est}$ (step 259).

If an external temperature sensor is present, the algorithm loads the variable $T^o_{est}$ with the value obtained from the sensor (step 260).

The algorithm then checks for the presence of an internal temperature sensor of the room being considered (step 261): if it is present, the algorithm loads the variable $T^o_{int}$ with the temperature obtained from the sensor (step 262) and then continues; if it is not present, the algorithm checks whether a temperature sensor is present in the adjoining rooms (step 263). If sensors are present in the adjoining rooms, the algorithm reads the temperature from the sensors of the adjoining rooms (step 264) and loads in the variable $T^o_{int}$ the average of the detected temperatures (if more than one sensor is present) (step 265). Then the algorithm continues.

If there are no sensors present in the adjoining rooms, the algorithm checks for the presence of at least one sensor in the entire building (step 266): if it is present, it loads the variable $T^o_{int}$ with the average of the temperatures detected in the various rooms (step 267) and continues; if it is absent, the algorithm checks for the presence of at least one temperature history datum of that room (step 268). If this history datum exists, the algorithm loads the variable $T^o_{int}$ with the historical temperature of the room (step 269); if it does not exist, the algorithm assigns to the variable $T^o_{int}$ the value of the external temperature loaded in $T^o_{est}$ (step 270) and continues.

The algorithm then continues by assigning to the variable $\Delta T^o$ the absolute value of the difference between the two temperatures (step 271).

The system then initializes the variable k (step 272), i.e., the index of the internal cycle, in order to calculate the conductances of the various layers of the wall. It loads the coefficient ($\lambda$) of the thermal conductance of the various materials that constitute the layer with index k (step 273). Then it calculates the area of the total surface of the layer indicated by the variable k and stores it in the support variable As with index k (step 274). Then it performs the calculation of the reciprocal of the conductance of the layer (step 275), taking care to normalize the coefficient $\lambda$ on the basis of the thickness of the layer by means of the formula

$$\lambda(k) = \lambda(k) / \text{ layer thickness } (k).$$

The algorithm then loads the result in the support variable RC (step 276), calculating its sum, then it checks whether there are thermal bridges in the wall, floor and ceiling with index k (step 277).

If there are no thermal bridges, the algorithm continues; if there are, the algorithm checks for the presence of the data of the thermal bridges (step 278).

If these data of the thermal bridges are available, the algorithm performs the addition of the product of the linear coefficient (kl) of each thermal bridge with the length (L) thereof and loads its value in the variable PT (step 279); if these data are not available, the algorithm loads the percentage increase of the dispersion of the area with index k (step 280) and stores the result in the variable MAGG%. Then it decreases the value of the variable RC by the quantity expressed by MAGG% (step 281) and continues.

The algorithm then checks whether the index k is still smaller than the number of layers to be analyzed (step 282): if it is smaller, it increases the index k by one unit (step 283) and returns to the calculation of the area of the total surface of the new layer; if it is greater, the algorithm stores in the support variable $D_{TR}$ the result of the reciprocal of RC (step 284), which represents the thermal dispersion of all the walls, including the ceiling and floor, in $Wh/m^2$.

The algorithm then reinitializes the index k to the value 1 (step 285) and moves on to a calculation of the area of the door or the window (closure elements) with index k, storing the result in the variable $A_G$ (step 286). Then it calculates the area of the projection of the frame of the door or the window with index k, storing its result in the variable $A_F$ (step 287), and the perimeter of the frame of the door or the window with index k, storing the result in the variable $L_G$ (step 288). Then the algorithm moves on to calculate the total dispersion $D_{TF}$ of the closure element with index k (step 289), generating its sum according to the following formula:

$$D_{TF} = D_{TF} + (A_G*U_V+A_F*U_G+L_G*\psi)/(A_G+A_F),$$

where $U_V$ designates the thermal transmittance of the glazed element, $U_G$ is the thermal transmittance of the frame, $\Psi$ is the linear transmittance of the spacer. Then the algorithm checks whether the index k is smaller than the number of closure elements (step 290): if the index k is smaller than the number of doors and windows, the algorithm increases the index k by one unit (step 291) and returns to calculating the area of the total surface of the new closure element; if instead the index k is greater than the number of doors and windows, the algorithm exits with the result of the sum of the two sums of the heat losses, respectively walls and doors/windows, multiplied by the difference between the external temperature and the internal temperature of the room.

The algorithm loads the total dispersion of the walls, the doors, the windows and any thermal bridges expressed in W/m$^2$, multiplied by the thermal difference between the inside and the outside, in the variable $OUT_B$ (step 292). The algorithm continues by calculating the overall coefficient of heat exchange by ventilation (step 293) by means of the formula

$$H_{VE} = \rho_A*C_A\ (\sum_k b_{VEK}*V_{VEK})*th$$

where $H_{VE}$ is the variable that contains the overall coefficient of heat exchange by ventilation, $\rho_A*C_A$ is the volume thermal capacity of the air (equal to 1200 J/m$^2$), $V_{VEK}$ is the volume flow-rate of the air flow, $b_{VEK}$ is the correction factor of the temperature of the air flow and th is the average period of detection on an hourly basis.

One continues by calculating the overall heat exchange stored in the variable ST (step 294) by means of the formula

$$ST = H_{VE} * (T^\circ_{int} - T^\circ_{est}).$$

Then the algorithm calculates the usable m$^2$ of the room being considered, dividing its volume by its average height, storing the result in the variable A (step 295). Then it loads the ratio between ST and A, normalizing the input of the heat exchange in W/m$^2$ in the variable $OUT_G$ (step 296).

Finally, the algorithm calculates the tendency to cool/heat the room by means of the formula:

$$D_{TVA} = (OUT_C*\eta_C - OUT_B*\eta_B - OUT_G*b)/1000,$$

loading the result in the variable $D_{TVA}$ (step 297), where $OUT_C$ designates the thermal inputs in Wh/m$^2$, $\eta_C$ is their utilization factor, $OUT_B$ is the resultant of the heat losses expressed in Wh/m$^2$ and $\eta_B$ is their utilization factor, $OUT_G$ designates the value of the heat exchanges expressed in Wh/m$^2$ after the conversion of the joules. Finally, b is the correction factor of the heat exchanges. The output of the algorithm is the content of the variable $D_{TVA}$, expressed in kWh (step 298).

In practice it has been found that the energy saving method, particularly for buildings, according to the present invention fully achieves the intended aim and objects because it allows energy saving of up to 25% in the building in which it is applied.

In particular, the main algorithm for energy saving uses additional algorithms, among which:

- the algorithm "1", which allows light adjustment and the enabling or disabling of all the electrical outlets of the building in which the method is applied;
- the algorithm "2", which allows the climate adjustment of the residential/working rooms, optimizing the consumptions of the existent systems;

- the algorithm "K", which allows an identification of the restoring of automatic operation of the electrical consumers, of the lighting and of the climate control devices following manual forcing;

- the algorithm "D", which allows determining the energy consumption expressed in $kWh/m^2$, in a room of interest, with indirect detection, i.e., without specific equipment;
- the algorithm "N", which allows determining the internal temperature of a room by means of direct reading thereof, if detectable, or indirect readings, by reading of the temperature of the adjoining rooms;
- the algorithm "E", which allows determining the tendency to energy loss or energy recovery expressed in $kWh/m^2$ of a room/environment when the surrounding conditions change.

The energy saving method thus conceived is susceptible of numerous modifications and variations, all of which are within the scope of the same inventive concept.

All the details may furthermore be replaced with other technically equivalent elements.

The disclosures in Italian Patent Application No. MI2012A001737 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

**1.** An energy saving method, particularly for buildings, **characterized in that** it comprises the steps of:

- checking for the Internet availability of an electric power supply control unit;
- checking for the availability of an ERP presence management system;
- checking for the availability of history and self-learning data;
- reading the configuration of the setup parameters;
- initializing a check timer;
- adjusting the lighting and the electrical consumers (algorithm 1);
- adjusting the temperature (algorithm 2);
- storing the system variables;
- checking that said check timer has been triggered.

**2.** The energy saving method according to claim 1, **characterized in that** said step of checking that the check timer has been triggered comprises, in case of a positive check, the steps of:

- identifying the reactivation of the automatic operation of said lighting, of said electrical consumers and of said temperature adjustment (algorithm K);
- determining energy use by indirect detection (algorithm D);
- storing the value of said energy use.

**3.** The energy saving method according to claim 1, **characterized in that**

- said step of checking for the Internet availability of the electric power supply control unit comprises, in case of a positive check, the steps of:
- reading the data of said electric power supply control unit;
- modifying the history data on the basis of said reading and storing them;
- sending an alarm to said electric power supply control unit;
- said step of verifying the availability of the ERP presence management system comprises, in case a of positive check, the steps of:
- reading the data of said ERP presence management system;
- modifying the history data on the basis of said reading and storing them;
- said step of verifying the availability of history and self-learning data comprises, in case of a positive check, the steps of:
- reading said history and self-learning data;
- modifying the history data on the basis of said reading and storing them.

**4.** The energy saving method according to one or more of the preceding claims, **characterized in that** said step of adjusting the lighting and the electrical consumers (algorithm 1) comprises the steps of:

- reading and loading the system variables;
- checking for the presence of electric power supply control devices or for the presence of a domotics system or for the presence of a remote control system;
- checking for the presence of a light adjustment system;
- adjusting the lighting by means of said light adjustment system.

5. The energy saving method according to claim 4, **characterized in that** said step of adjusting the lighting and the electrical consumers (algorithm 1) comprises the steps of:

- classifying the intended use of the room in which said method is applied;
- checking for the presence of a passage or presence sensor;
- checking the current time;
- checking for the presence of a twilight sensor;
- checking for the presence of a person;
- adjusting the lighting;
- adjusting the electrical consumers.

6. The energy saving method according to one or more of the preceding claims, **characterized in that** said step of adjusting the temperature (algorithm 2) comprises the steps of:

- reading and loading the system variables;
- checking for the presence of electric power supply control devices or for the presence of a domotics system;
- classifying the intended use of the room in which said method is applied;
- calculating the temperature of said room (algorithm N);
- checking the current time;
- checking for the presence of a passage or presence sensor;
- checking for the presence of people;
- determining the conditions of thermal equilibrium (algorithm E).

7. The energy saving method according to claim 6, **characterized in that** said step of calculating the temperature of said room (algorithm N) comprises the steps of:

- reading and loading the system variables;
- acquiring the value of the temperature outside said room by means of an external temperature sensor or by means of information from the Web or by means of periodic average temperature tables;
- acquiring the value of the temperature inside said room by means of an internal temperature sensor or by means of a temperature sensor in adjacent rooms;
- calculating the global coefficient of heat exchange between said room and adjacent internal rooms;
- calculating the global coefficient of heat exchange between said internal adjacent rooms and the outside environment.

8. The energy saving method according to claim 6, **characterized in that** said step of determining the conditions of thermal equilibrium (algorithm E) comprises the steps of:

- reading and loading the system variables;
- calculating the area of each door or window comprised in said room;
- calculating the value of the solar thermal inputs through each one of said areas;
- calculating the value of the thermal inputs from the floor;
- calculating the value of the thermal inputs from the ceiling;
- calculating the value of the thermal inputs from each wall;
- calculating the value of the thermal inputs from movable components that are present in said room;
- acquiring the value of the temperature outside said room by means of an external temperature sensor or by means of information from the Web or by means of periodic average temperature tables;
- acquiring the value of the temperature inside said room, by means of an internal temperature sensor or by means of a temperature sensor in adjacent rooms;
- calculating the cooling/heating behavior of said room.

9. The energy saving method according to claim 2, **characterized in that** said step of identifying the restoring of the automatic operation of said lighting, of said electrical users and of said temperature adjustment (algorithm K) comprises the steps of:

- reading and loading the system variables;
- checking for the presence of electric power supply control devices, or for the presence of a domotics system, or for the presence of a remote control system;
- restoring the automatic functionality of the adjustment of lighting, of electrical consumers and of the temperature.

**10.** The energy saving method according to claim 2, **characterized in that** said step of determining the use of energy by indirect detection (algorithm D) comprises the steps of:

- reading and loading the system variables;
- checking for the presence of an electrical panel;
- reading the value of electrical consumption from said electrical panel;
- in case of a negative check of said step of checking for the presence of an electrical panel, said step of determining the use of energy by indirect detection (algorithm D) comprises the steps of:
- checking for the presence of devices for controlling the lighting, electrical or climate control consumers;
- calculating the electrical consumption for each consumer;
- dividing said value of electrical consumption by the floor area of said room.

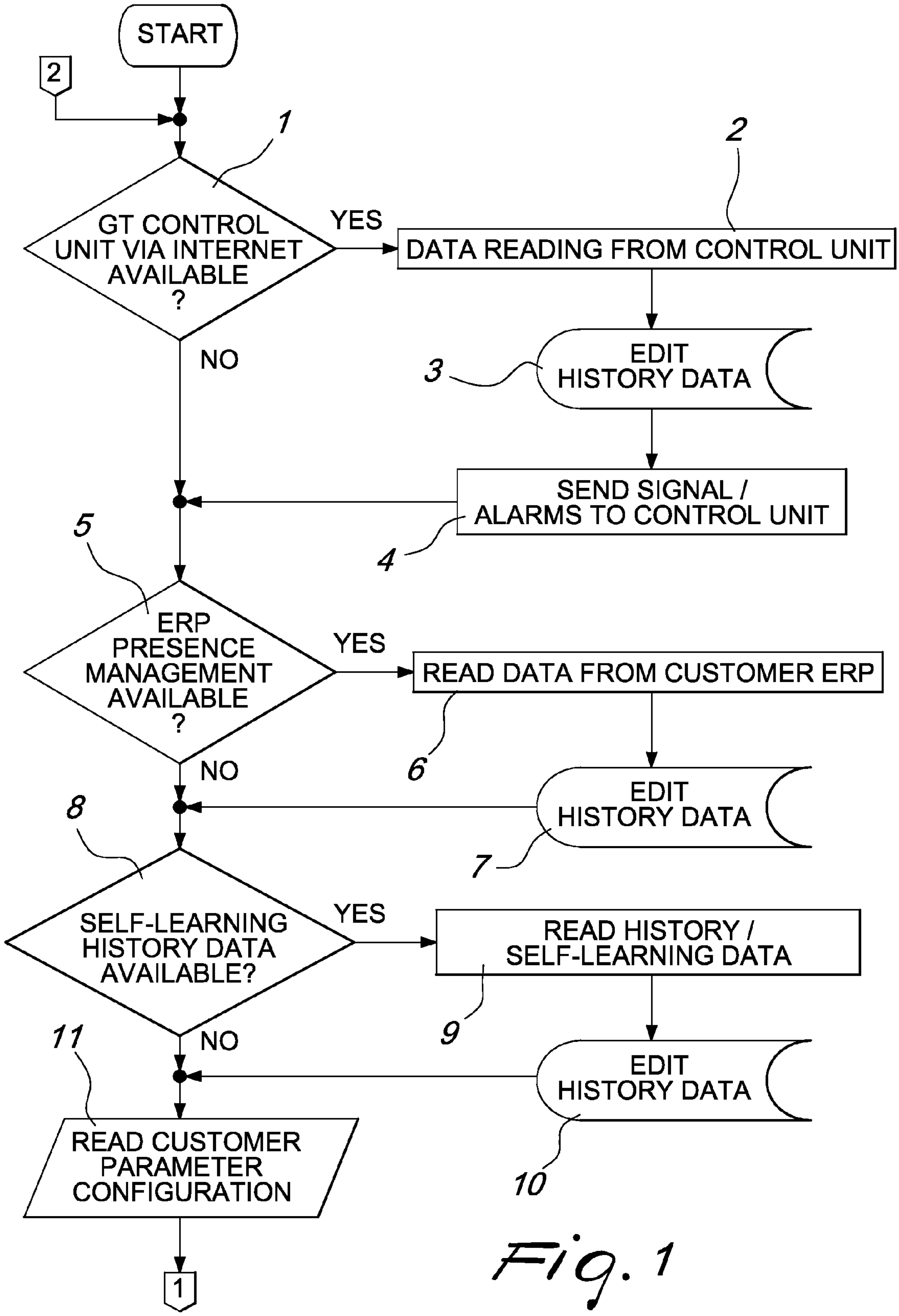
START
2
1
GT CONTROL UNIT VIA INTERNET AVAILABLE ?
YES
2
DATA READING FROM CONTROL UNIT
NO
3
EDIT HISTORY DATA
SEND SIGNAL / ALARMS TO CONTROL UNIT
4
5
ERP PRESENCE MANAGEMENT AVAILABLE ?
YES
READ DATA FROM CUSTOMER ERP
6
NO
EDIT HISTORY DATA
7
8
SELF-LEARNING HISTORY DATA AVAILABLE?
YES
READ HISTORY / SELF-LEARNING DATA
9
NO
11
EDIT HISTORY DATA
10
READ CUSTOMER PARAMETER CONFIGURATION
1

Fig. 1

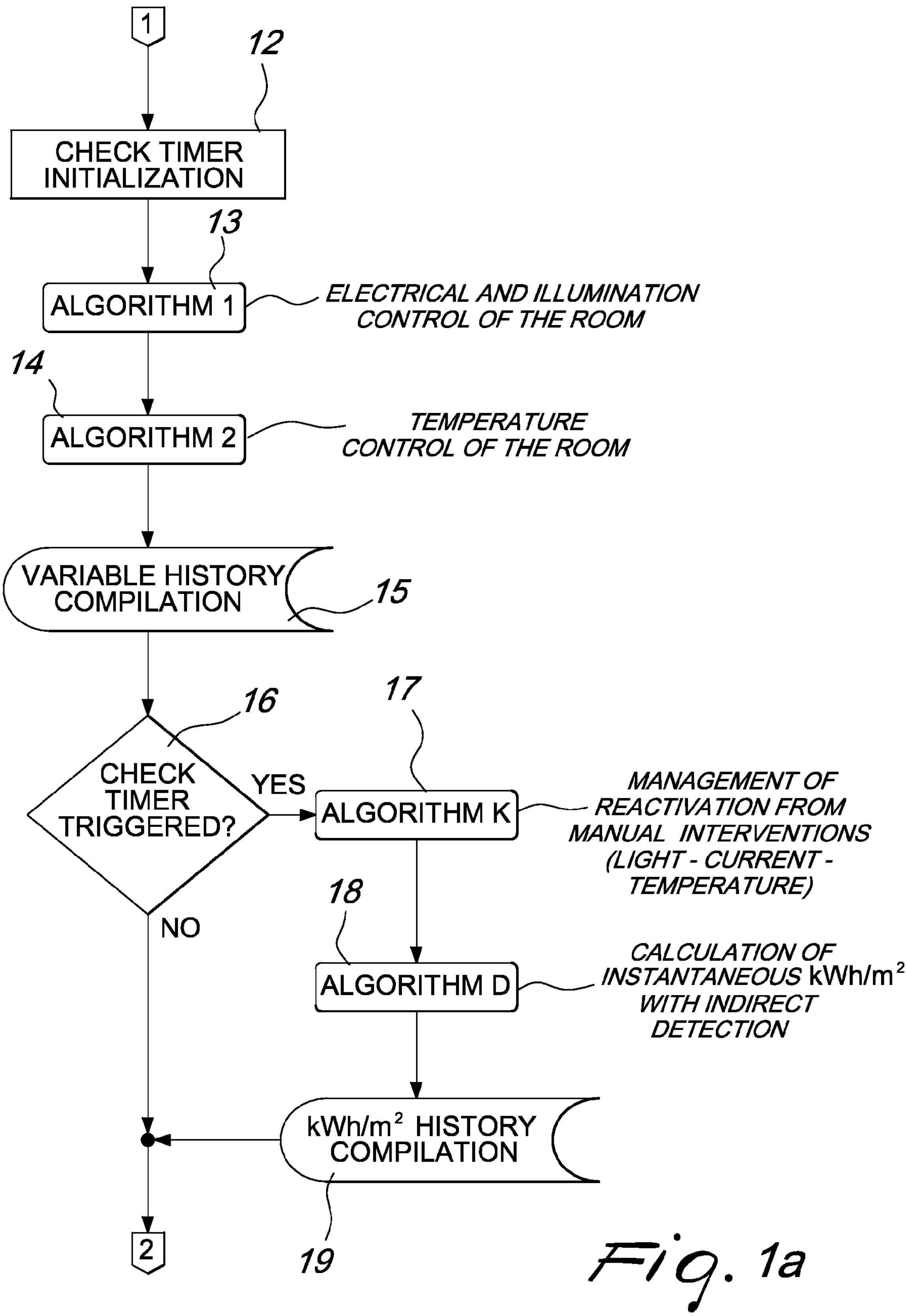
1
12
CHECK TIMER INITIALIZATION
13
ALGORITHM 1
ELECTRICAL AND ILLUMINATION CONTROL OF THE ROOM
14
ALGORITHM 2
TEMPERATURE CONTROL OF THE ROOM
VARIABLE HISTORY COMPILATION
15
16
CHECK TIMER TRIGGERED?
YES
NO
17
ALGORITHM K
MANAGEMENT OF REACTIVATION FROM MANUAL INTERVENTIONS (LIGHT - CURRENT - TEMPERATURE)
18
ALGORITHM D
CALCULATION OF INSTANTANEOUS kWh/m2 WITH INDIRECT DETECTION
kWh/m2 HISTORY COMPILATION
19
2

Fig. 1a

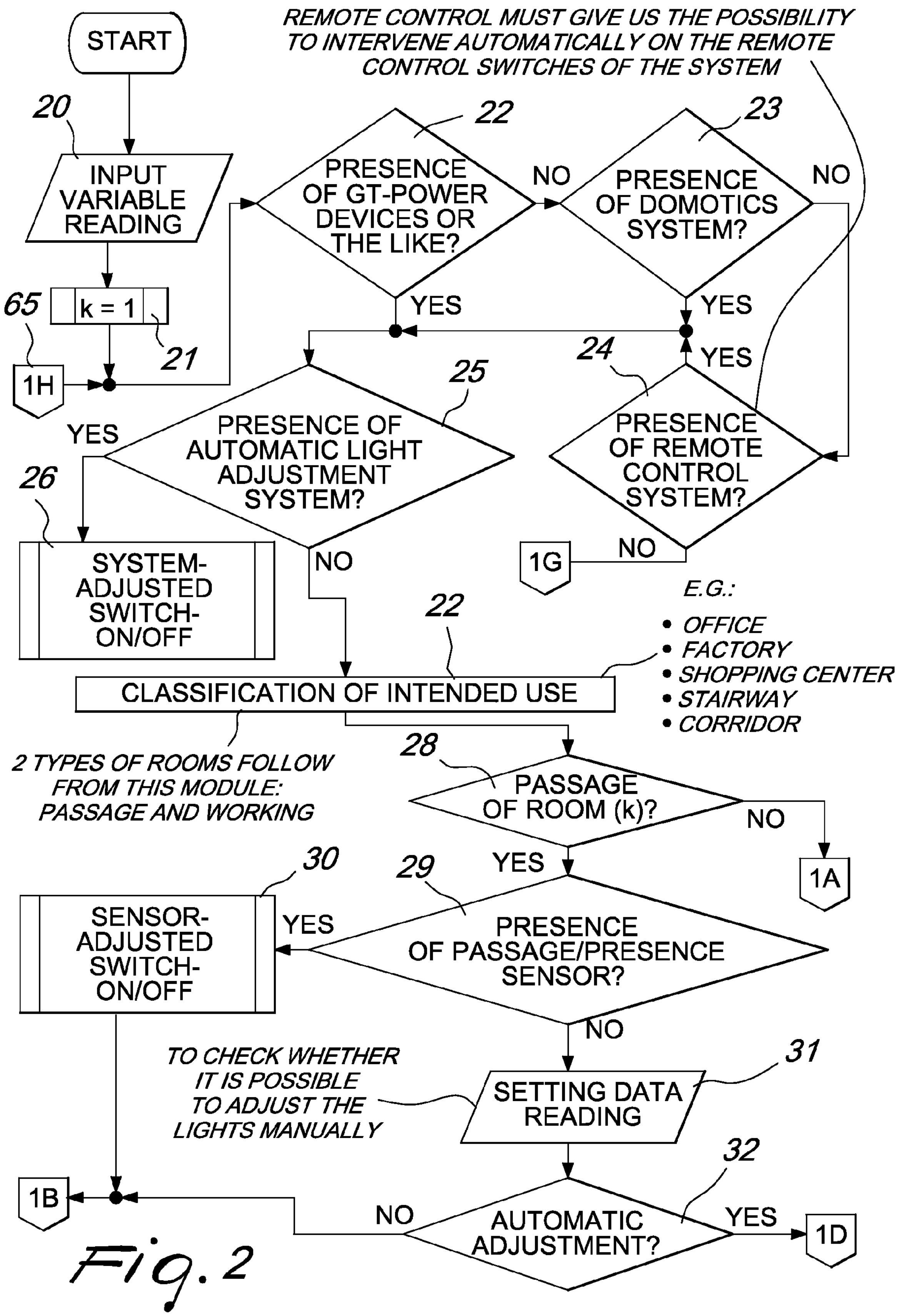
START
20
INPUT VARIABLE READING
65
k = 1
21
1H
REMOTE CONTROL MUST GIVE US THE POSSIBILITY TO INTERVENE AUTOMATICALLY ON THE REMOTE CONTROL SWITCHES OF THE SYSTEM
22
PRESENCE OF GT-POWER DEVICES OR THE LIKE?
NO
23
PRESENCE OF DOMOTICS SYSTEM?
NO
YES
YES
24
YES
25
PRESENCE OF AUTOMATIC LIGHT ADJUSTMENT SYSTEM?
YES
26
SYSTEM-ADJUSTED SWITCH-ON/OFF
NO
PRESENCE OF REMOTE CONTROL SYSTEM?
1G
NO
E.G.:
• OFFICE
• FACTORY
• SHOPPING CENTER
• STAIRWAY
• CORRIDOR
22
CLASSIFICATION OF INTENDED USE
2 TYPES OF ROOMS FOLLOW FROM THIS MODULE: PASSAGE AND WORKING
28
PASSAGE OF ROOM (k)?
NO
1A
30
29
YES
SENSOR-ADJUSTED SWITCH-ON/OFF
YES
PRESENCE OF PASSAGE/PRESENCE SENSOR?
NO
TO CHECK WHETHER IT IS POSSIBLE TO ADJUST THE LIGHTS MANUALLY
SETTING DATA READING
31
32
1B
NO
AUTOMATIC ADJUSTMENT?
YES
1D

Fig. 2

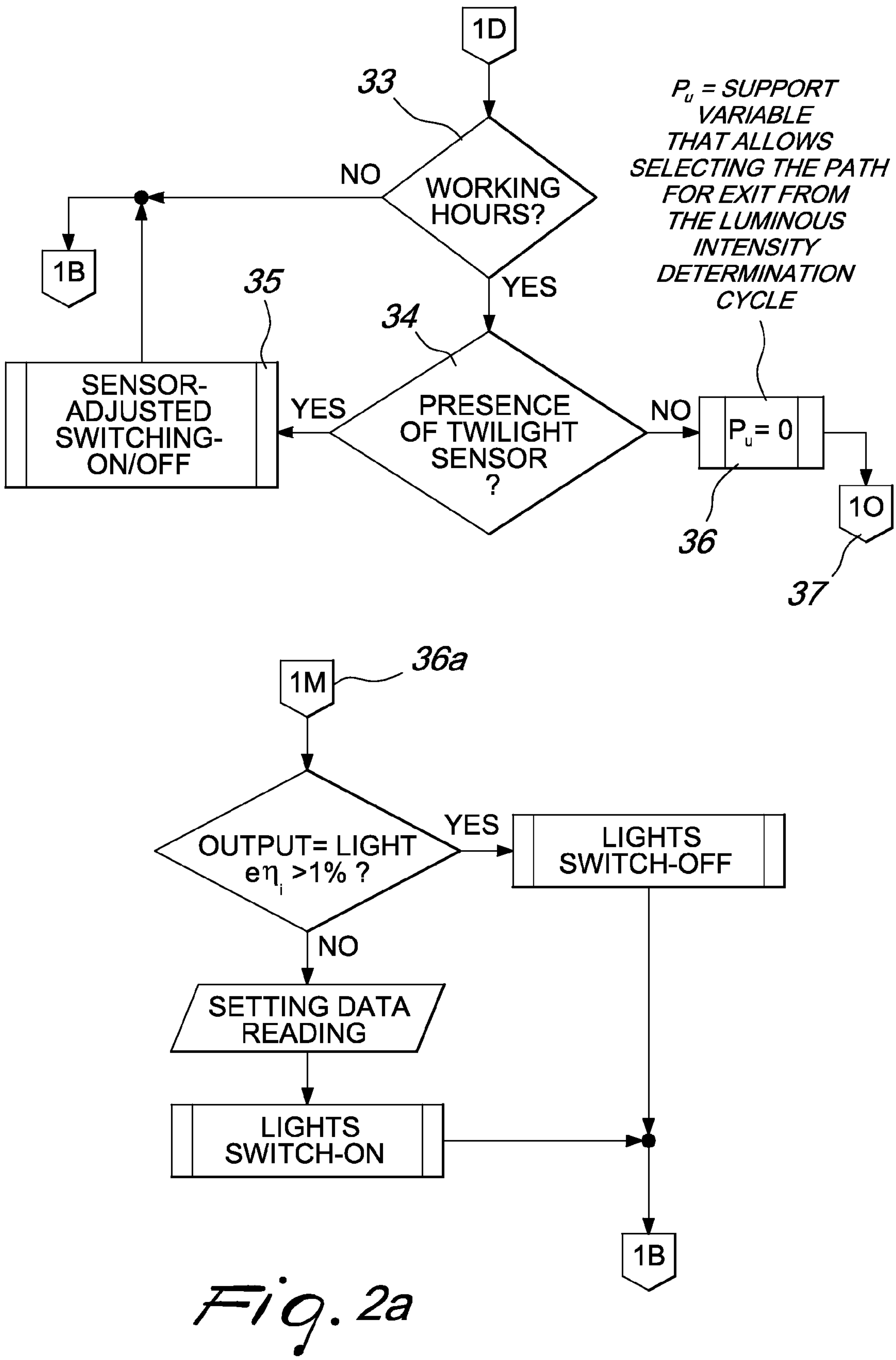
1D
33
WORKING HOURS?
NO
YES
1B
35
34
SENSOR-ADJUSTED SWITCHING-ON/OFF
YES
PRESENCE OF TWILIGHT SENSOR ?
NO
$P_u$ = SUPPORT VARIABLE THAT ALLOWS SELECTING THE PATH FOR EXIT FROM THE LUMINOUS INTENSITY DETERMINATION CYCLE
$P_u$= 0
36
1O
37
36a
1M
OUTPUT= LIGHT $e\eta_i$ >1% ?
YES
LIGHTS SWITCH-OFF
NO
SETTING DATA READING
LIGHTS SWITCH-ON
1B

Fig. 2a

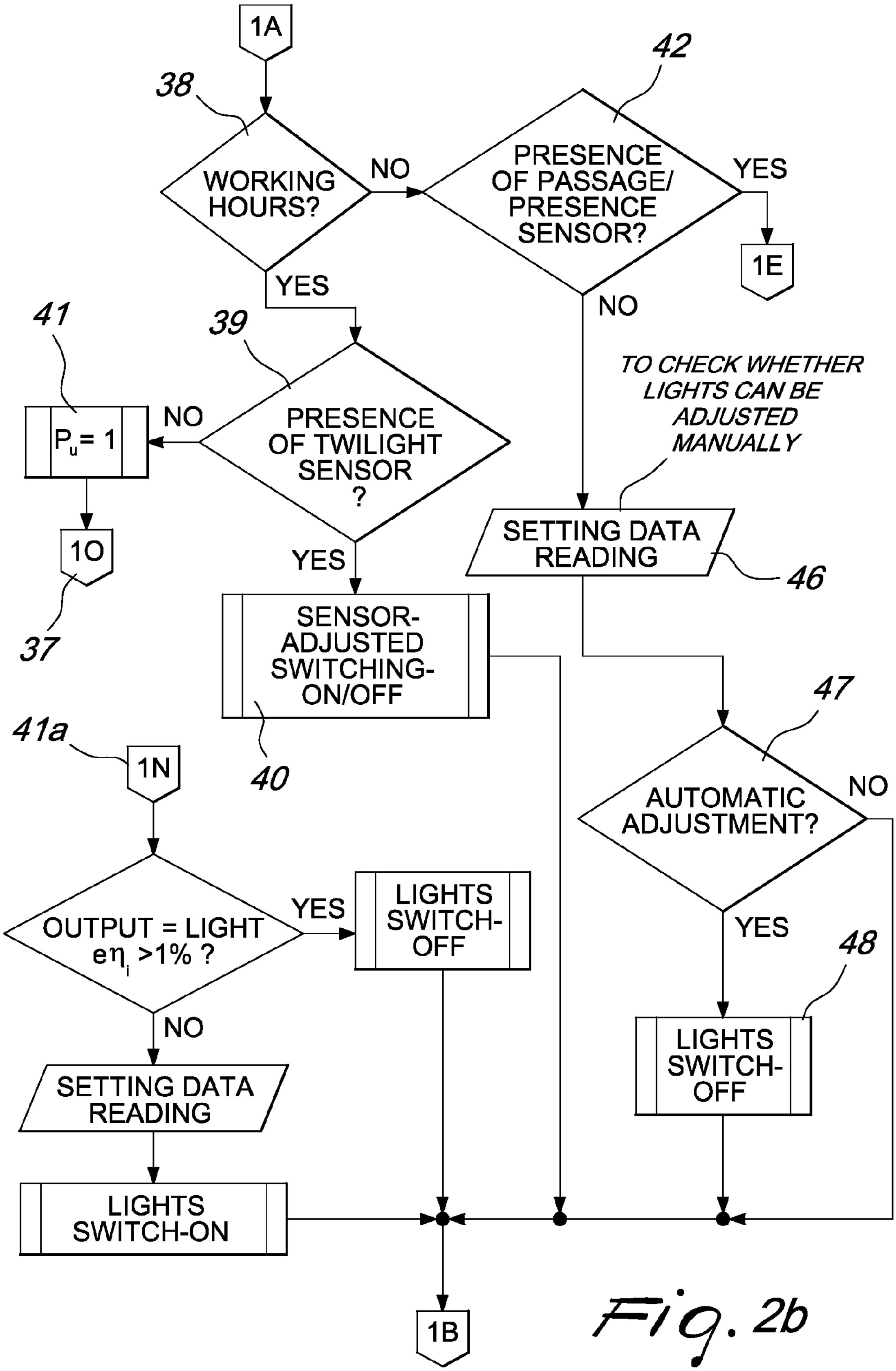
1A
38
WORKING HOURS?
NO
42
PRESENCE OF PASSAGE/ PRESENCE SENSOR?
YES
1E
YES
NO
41
39
NO
$P_u$= 1
PRESENCE OF TWILIGHT SENSOR ?
TO CHECK WHETHER LIGHTS CAN BE ADJUSTED MANUALLY
1O
YES
SETTING DATA READING
46
37
SENSOR-ADJUSTED SWITCHING-ON/OFF
47
41a
1N
40
AUTOMATIC ADJUSTMENT?
NO
OUTPUT = LIGHT $e\eta_i$ >1% ?
YES
LIGHTS SWITCH-OFF
YES
48
NO
LIGHTS SWITCH-OFF
SETTING DATA READING
LIGHTS SWITCH-ON
1B

Fig. 2b

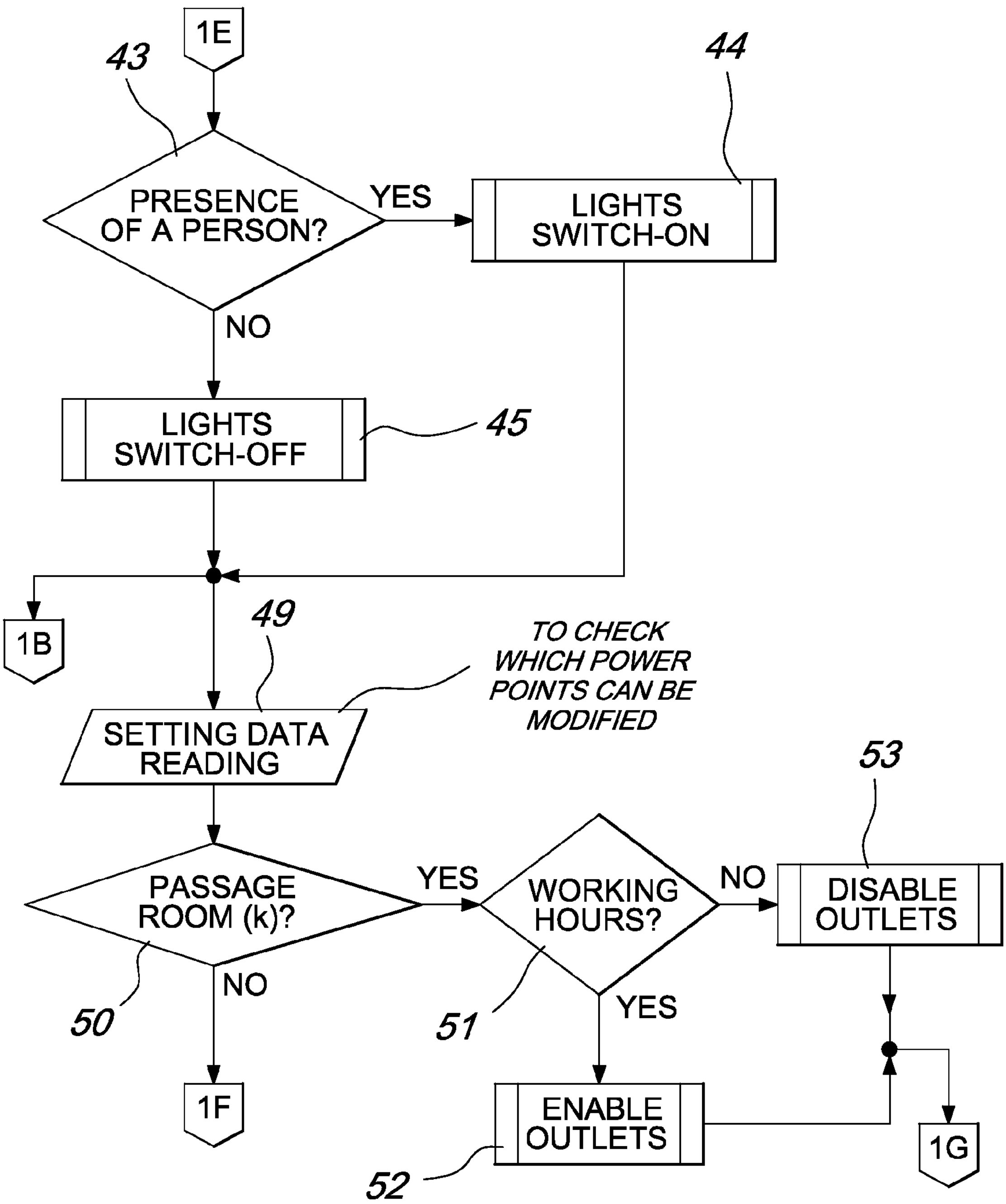
1E
43
PRESENCE OF A PERSON?
YES
44
LIGHTS SWITCH-ON
NO
LIGHTS SWITCH-OFF
45
1B
49
TO CHECK WHICH POWER POINTS CAN BE MODIFIED
SETTING DATA READING
53
PASSAGE ROOM (k)?
YES
WORKING HOURS?
NO
DISABLE OUTLETS
50
NO
51
YES
1F
ENABLE OUTLETS
52
1G

Fig. 2c

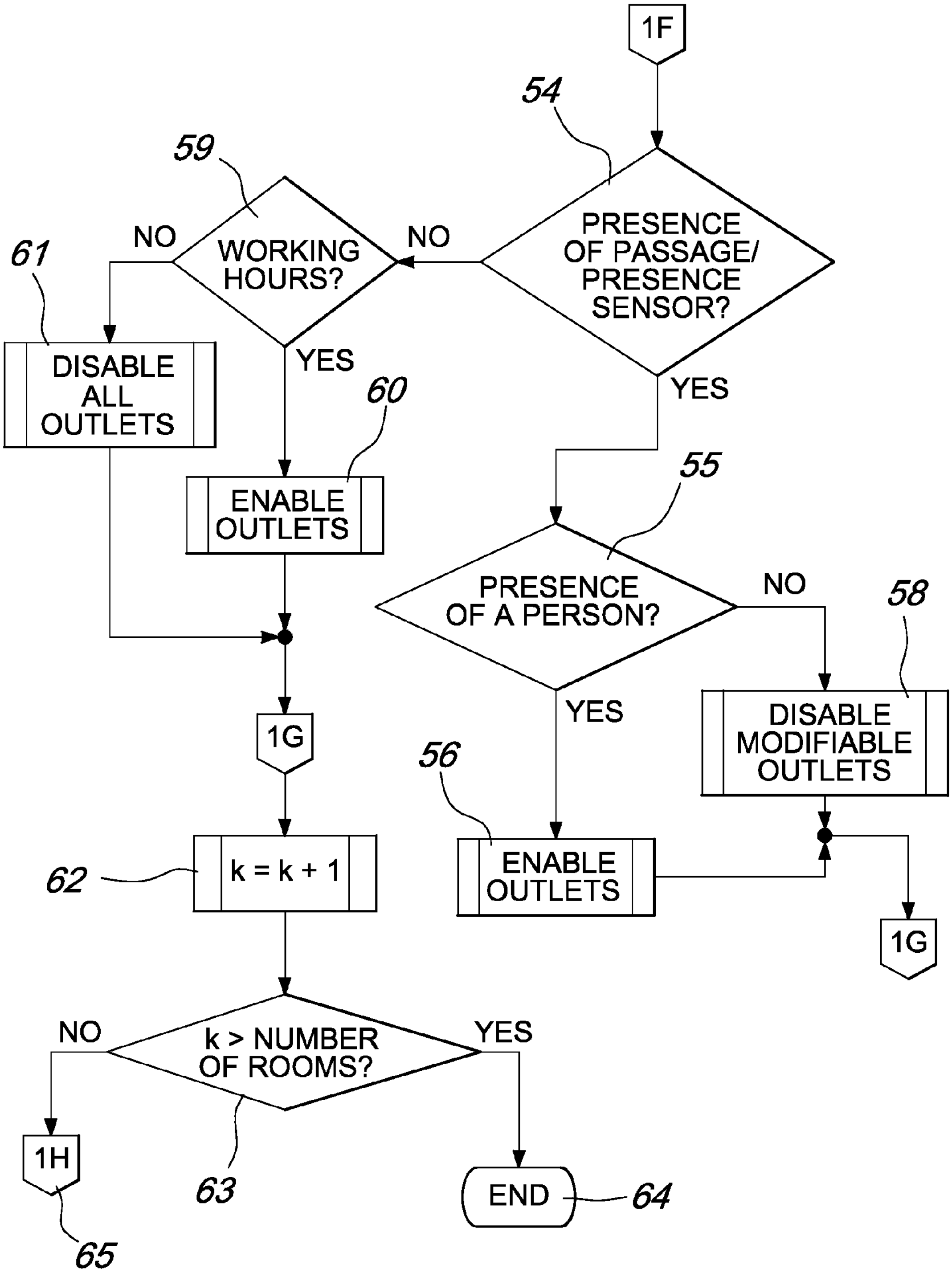
1F
54
PRESENCE OF PASSAGE/ PRESENCE SENSOR?
NO
YES
59
WORKING HOURS?
NO
YES
61
DISABLE ALL OUTLETS
60
ENABLE OUTLETS
55
PRESENCE OF A PERSON?
NO
YES
58
DISABLE MODIFIABLE OUTLETS
56
ENABLE OUTLETS
1G
1G
62
k = k + 1
NO
k > NUMBER OF ROOMS?
YES
63
1H
65
END
64

Fig. 2d

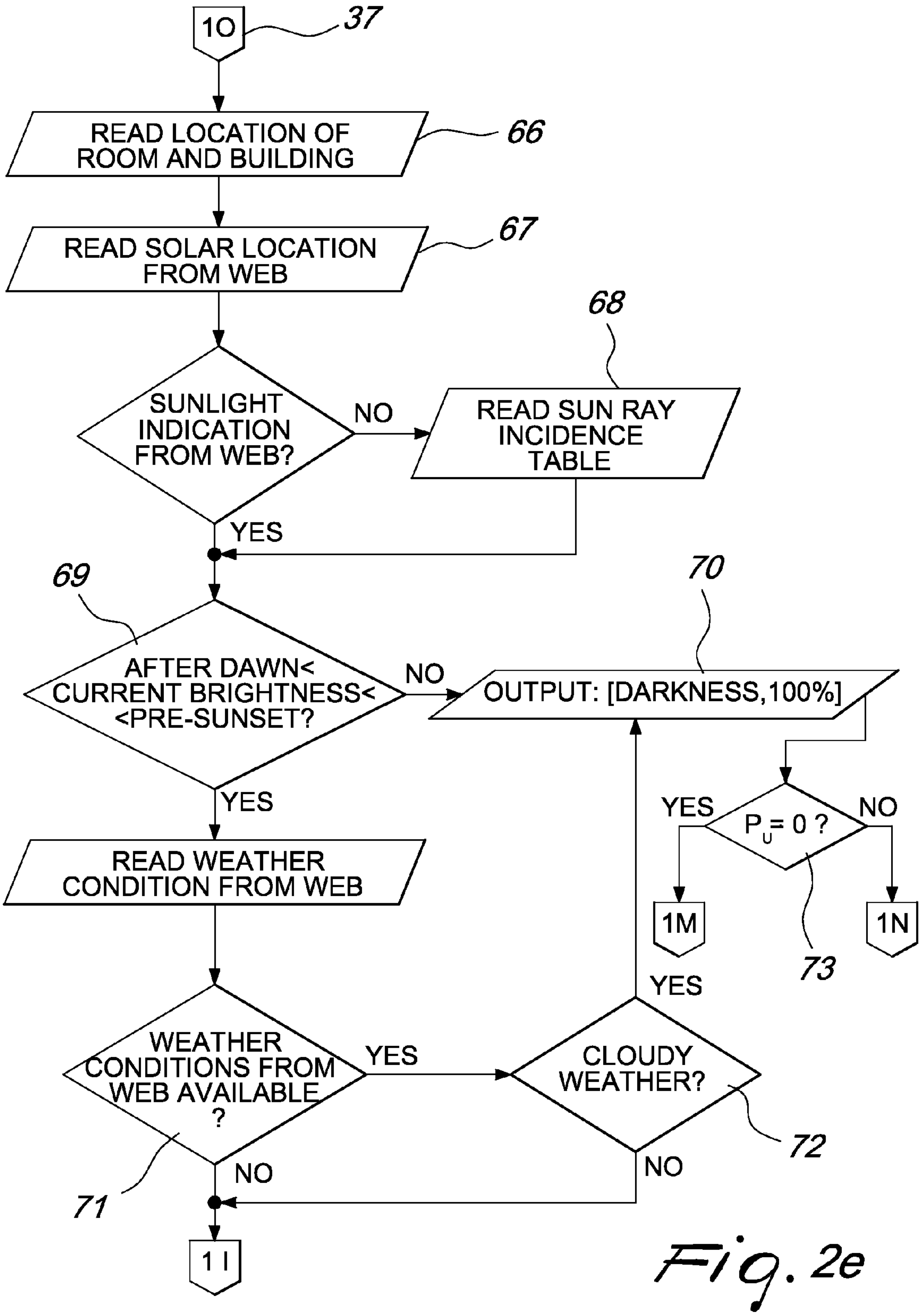
1O
37
READ LOCATION OF ROOM AND BUILDING
66
READ SOLAR LOCATION FROM WEB
67
68
SUNLIGHT INDICATION FROM WEB?
NO
READ SUN RAY INCIDENCE TABLE
YES
69
70
AFTER DAWN< CURRENT BRIGHTNESS< <PRE-SUNSET?
NO
OUTPUT: [DARKNESS,100%]
YES
YES
$P_U$ = 0 ?
NO
READ WEATHER CONDITION FROM WEB
1M
1N
73
YES
WEATHER CONDITIONS FROM WEB AVAILABLE ?
YES
CLOUDY WEATHER?
72
NO
NO
71
1 I

Fig. 2e

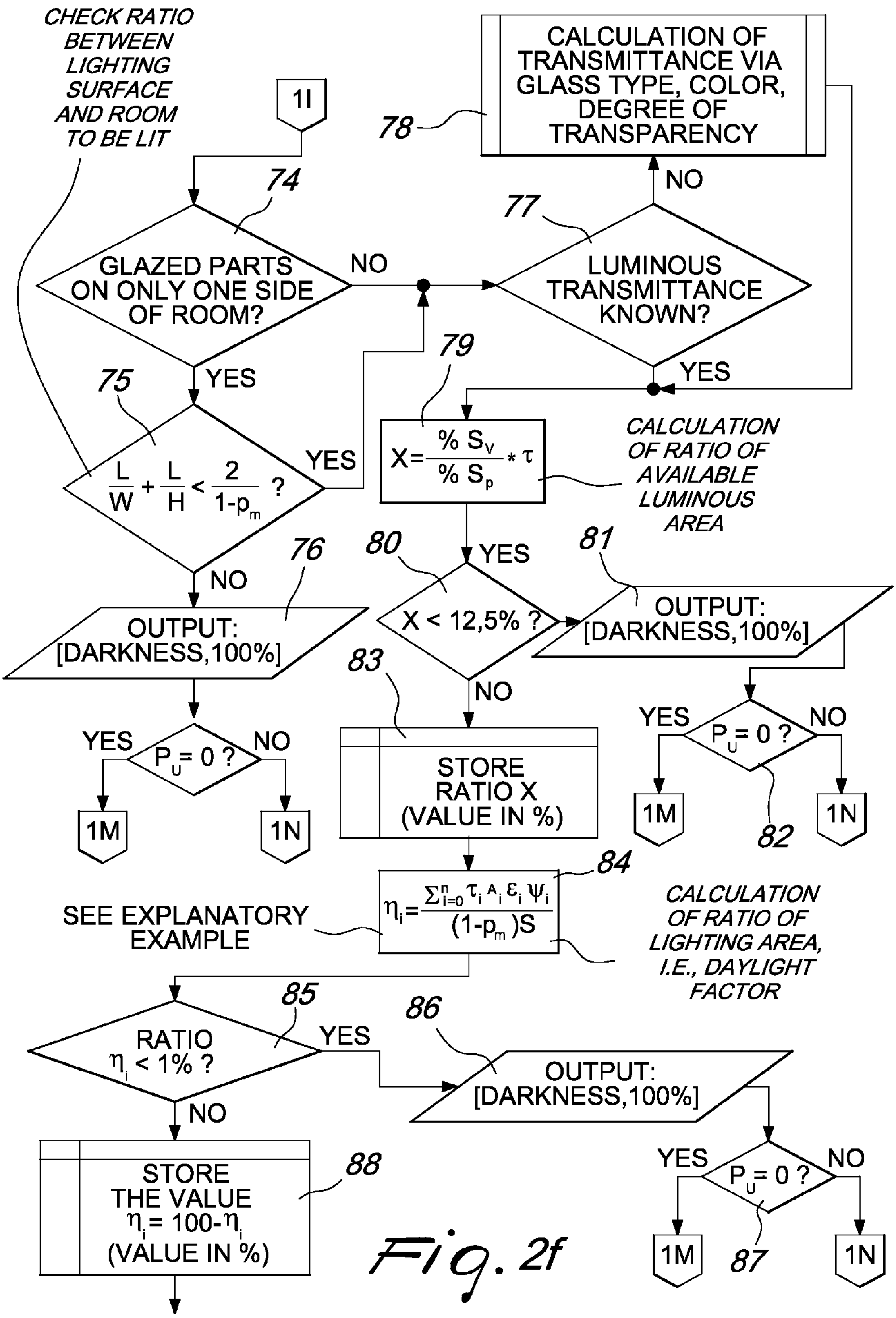
CHECK RATIO BETWEEN LIGHTING SURFACE AND ROOM TO BE LIT
1I
74
GLAZED PARTS ON ONLY ONE SIDE OF ROOM?
NO
YES
75
L/W + L/H < 2/(1-pm) ?
YES
NO
76
OUTPUT: [DARKNESS,100%]
YES
PU = 0 ?
NO
1M
1N
78
CALCULATION OF TRANSMITTANCE VIA GLASS TYPE, COLOR, DEGREE OF TRANSPARENCY
NO
77
LUMINOUS TRANSMITTANCE KNOWN?
YES
79
X = % SV / % Sp * τ
CALCULATION OF RATIO OF AVAILABLE LUMINOUS AREA
80
YES
X < 12,5% ?
81
OUTPUT: [DARKNESS,100%]
YES
PU = 0 ?
NO
1M
82
1N
NO
83
STORE RATIO X (VALUE IN %)
84
ηi = Σi=0n τi Ai εi ψi / (1-pm)S
SEE EXPLANATORY EXAMPLE
CALCULATION OF RATIO OF LIGHTING AREA, I.E., DAYLIGHT FACTOR
85
RATIO ηi < 1% ?
YES
86
OUTPUT: [DARKNESS,100%]
NO
88
STORE THE VALUE ηi = 100-ηi (VALUE IN %)
YES
PU = 0 ?
NO
1M
87
1N

Fig. 2f

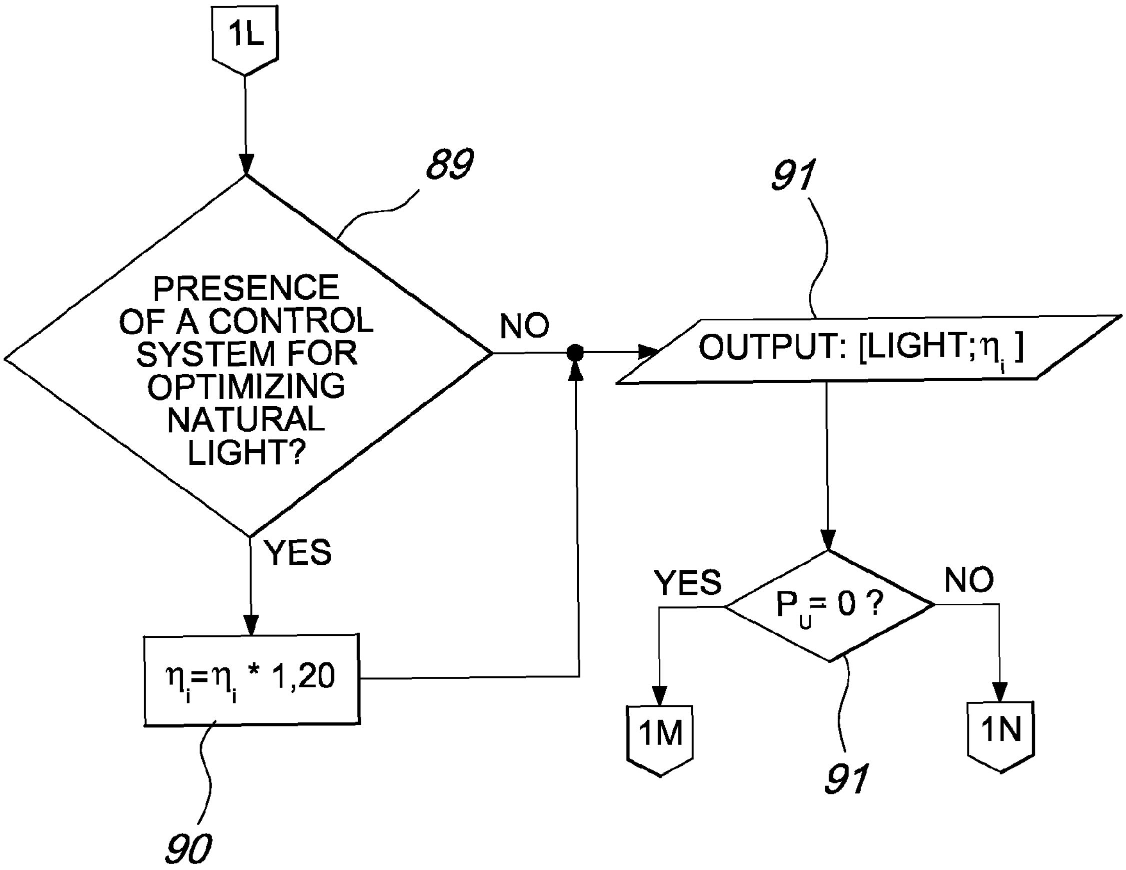
1L
89
PRESENCE OF A CONTROL SYSTEM FOR OPTIMIZING NATURAL LIGHT?
NO
YES
91
OUTPUT: [LIGHT;ηi ]
YES
Pu= 0 ?
NO
ηi=ηi * 1,20
1M
1N
91
90

Fig. 2g

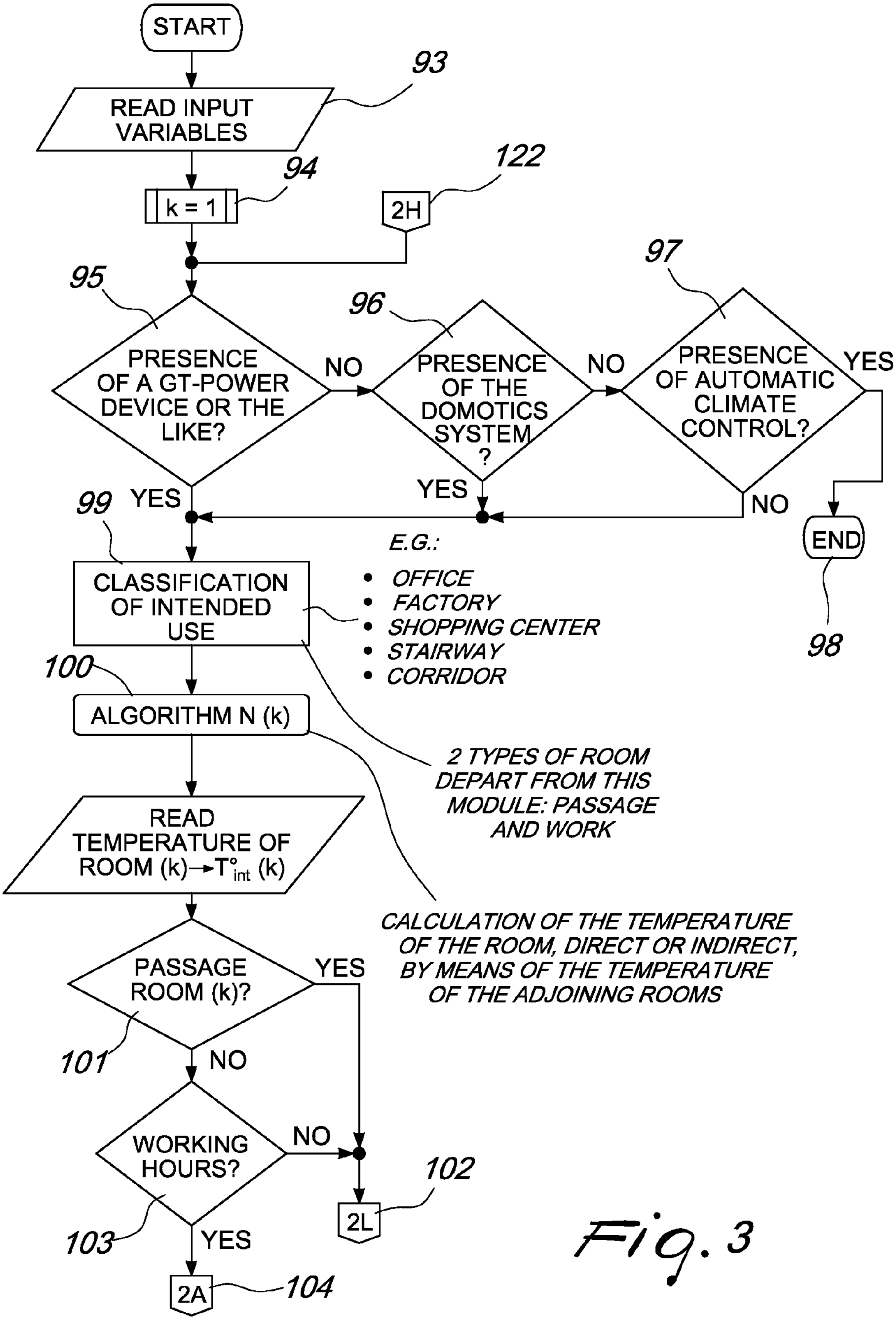
START
93
READ INPUT VARIABLES
94
k = 1
122
2H
95
PRESENCE OF A GT-POWER DEVICE OR THE LIKE?
NO
96
PRESENCE OF THE DOMOTICS SYSTEM ?
NO
97
PRESENCE OF AUTOMATIC CLIMATE CONTROL?
YES
99
YES
YES
NO
END
98
CLASSIFICATION OF INTENDED USE
E.G.:
• OFFICE
• FACTORY
• SHOPPING CENTER
• STAIRWAY
• CORRIDOR
100
ALGORITHM N (k)
2 TYPES OF ROOM DEPART FROM THIS MODULE: PASSAGE AND WORK
READ TEMPERATURE OF ROOM (k)→T°int (k)
CALCULATION OF THE TEMPERATURE OF THE ROOM, DIRECT OR INDIRECT, BY MEANS OF THE TEMPERATURE OF THE ADJOINING ROOMS
PASSAGE ROOM (k)?
YES
101
NO
WORKING HOURS?
NO
102
2L
103
YES
2A
104

Fig. 3

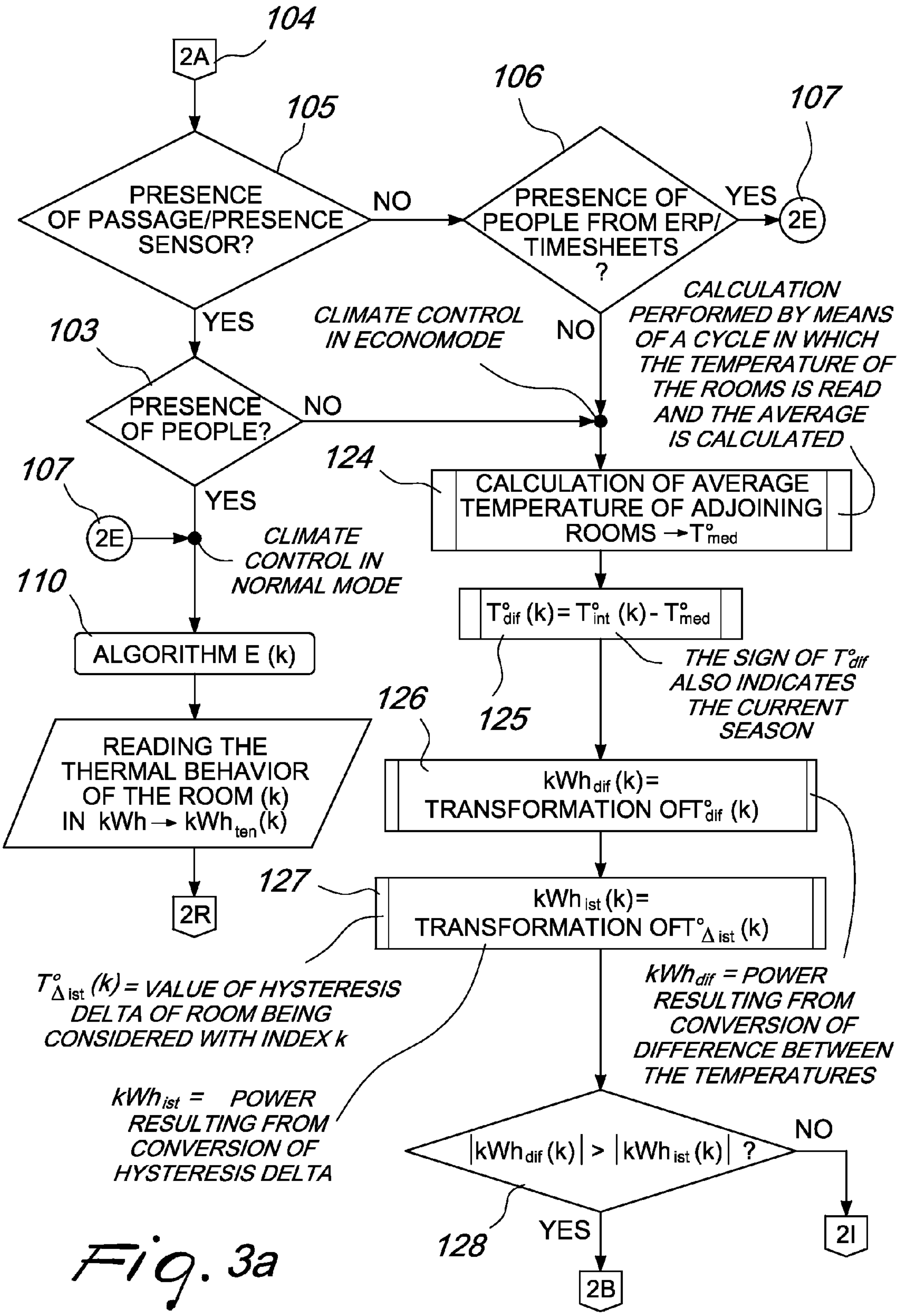

104
2A
105
PRESENCE OF PASSAGE/PRESENCE SENSOR?
NO
106
PRESENCE OF PEOPLE FROM ERP/ TIMESHEETS ?
YES
107
2E
YES
103
CLIMATE CONTROL IN ECONOMODE
NO
CALCULATION PERFORMED BY MEANS OF A CYCLE IN WHICH THE TEMPERATURE OF THE ROOMS IS READ AND THE AVERAGE IS CALCULATED
PRESENCE OF PEOPLE?
NO
124
107
YES
CALCULATION OF AVERAGE TEMPERATURE OF ADJOINING ROOMS → T°med
2E
CLIMATE CONTROL IN NORMAL MODE
110
T°dif (k) = T°int (k) - T°med
ALGORITHM E (k)
THE SIGN OF T°dif ALSO INDICATES THE CURRENT SEASON
126
125
READING THE THERMAL BEHAVIOR OF THE ROOM (k) IN kWh → kWhten(k)
kWhdif (k) = TRANSFORMATION OF T°dif (k)
127
2R
kWhist (k) = TRANSFORMATION OF T°Δ ist (k)
T°Δ ist (k) = VALUE OF HYSTERESIS DELTA OF ROOM BEING CONSIDERED WITH INDEX k
kWhdif = POWER RESULTING FROM CONVERSION OF DIFFERENCE BETWEEN THE TEMPERATURES
kWhist = POWER RESULTING FROM CONVERSION OF HYSTERESIS DELTA
NO
|kWhdif (k)| > |kWhist (k)| ?
128
YES
2I
2B


Fig. 3a

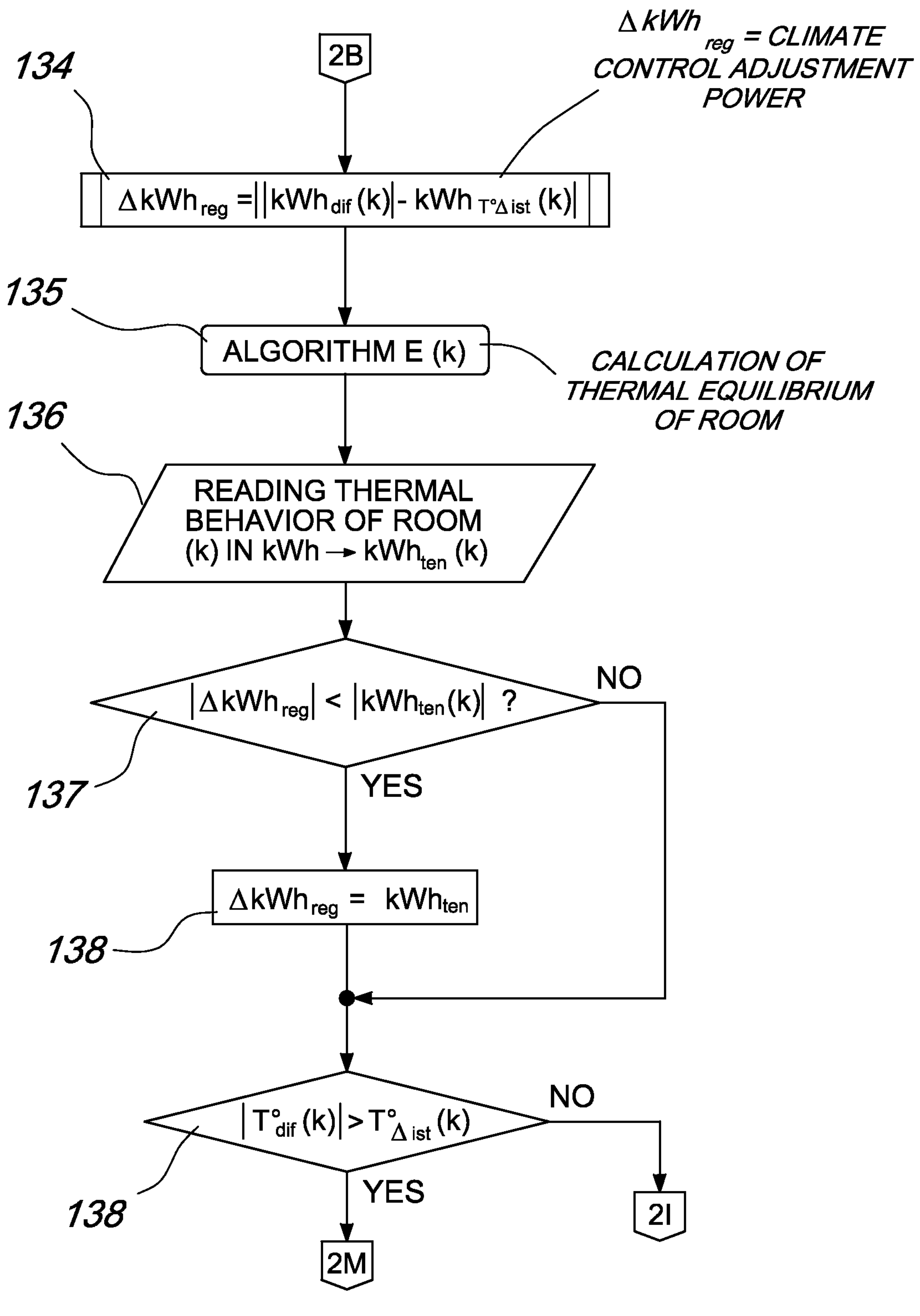
2B
134
$\Delta kWh_{reg}$ = CLIMATE CONTROL ADJUSTMENT POWER
$\Delta kWh_{reg} = ||kWh_{dif}(k)| - kWh_{T°\Delta ist}(k)|$
135
ALGORITHM E (k)
CALCULATION OF THERMAL EQUILIBRIUM OF ROOM
136
READING THERMAL BEHAVIOR OF ROOM (k) IN kWh → $kWh_{ten}$ (k)
$|\Delta kWh_{reg}| < |kWh_{ten}(k)|$ ?
NO
137
YES
$\Delta kWh_{reg} = kWh_{ten}$
138
$|T°_{dif}(k)| > T°_{\Delta ist}(k)$
NO
138
YES
2M
2I

Fig. 3b

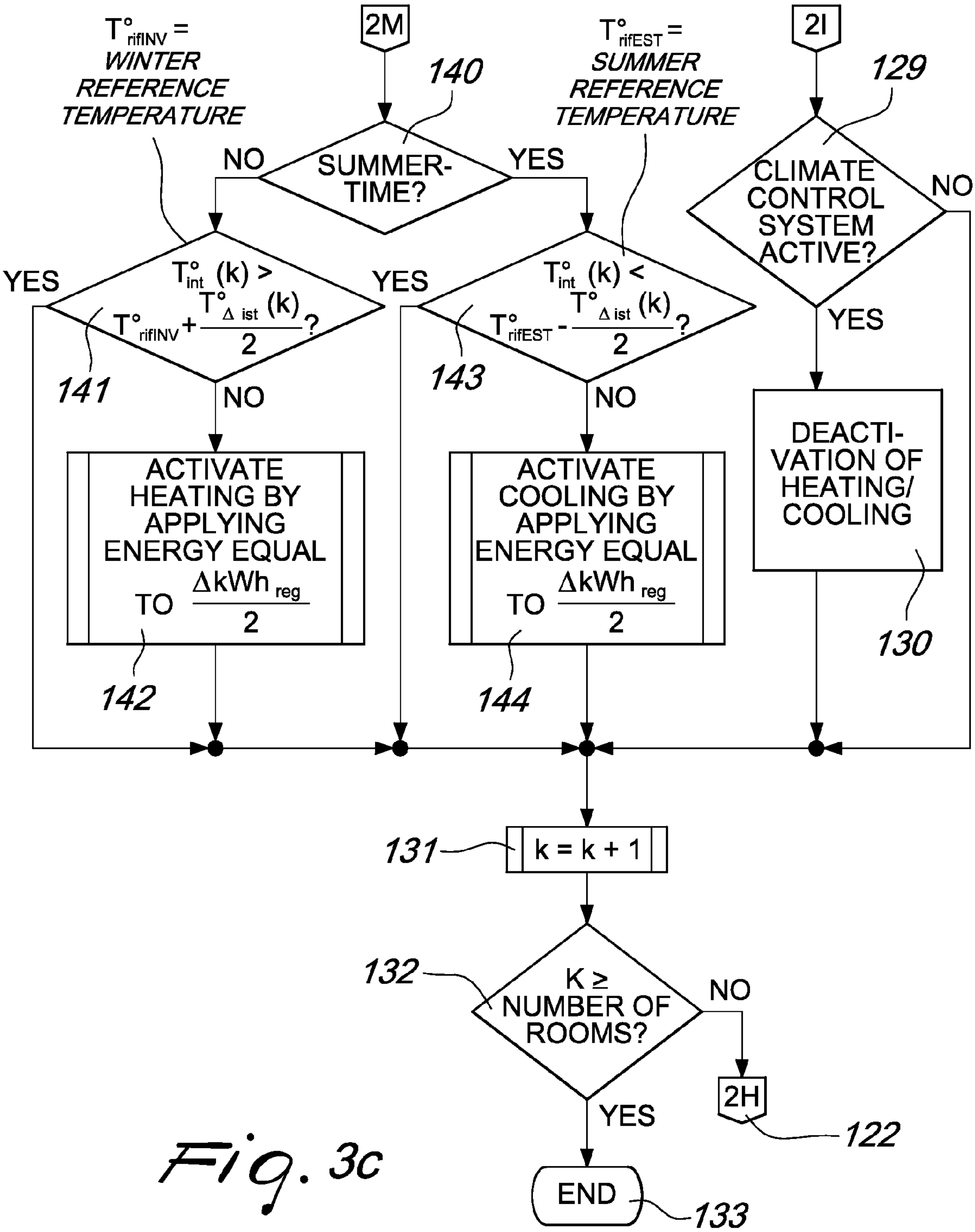
2M
140
SUMMER-TIME?
NO
YES
T°rifINV = WINTER REFERENCE TEMPERATURE
T°rifEST = SUMMER REFERENCE TEMPERATURE
T°int (k) > T°rifINV + T°Δ ist (k) / 2 ?
T°int (k) < T°rifEST - T°Δ ist (k) / 2 ?
141
143
YES
NO
ACTIVATE HEATING BY APPLYING ENERGY EQUAL TO ΔkWh reg / 2
ACTIVATE COOLING BY APPLYING ENERGY EQUAL TO ΔkWh reg / 2
142
144
2I
129
CLIMATE CONTROL SYSTEM ACTIVE?
DEACTI-VATION OF HEATING/ COOLING
130
131
k = k + 1
132
K ≥ NUMBER OF ROOMS?
2H
122
END
133

Fig. 3c

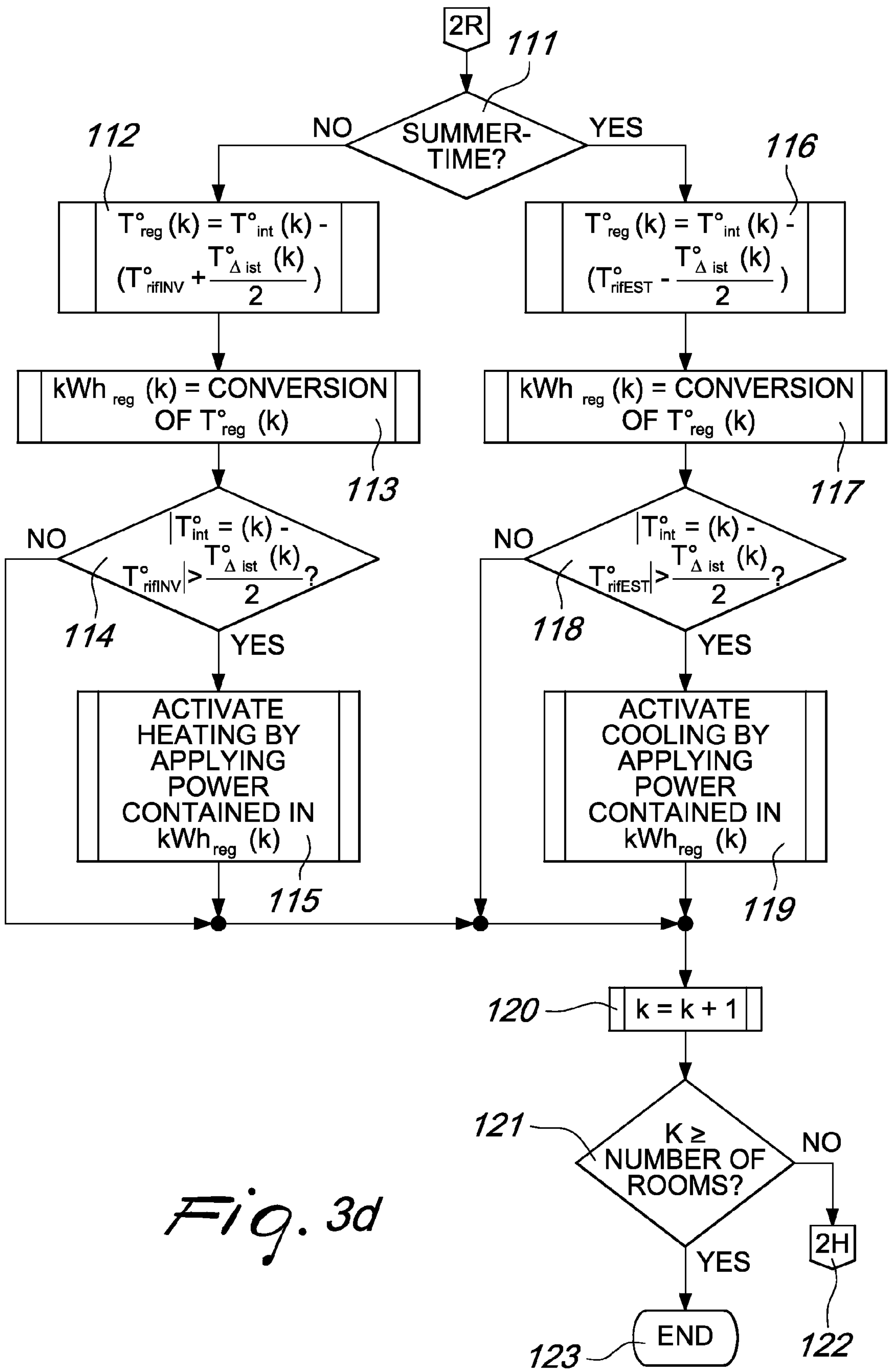
2R
111
SUMMER-TIME?
NO
YES
112
$T°_{reg}(k) = T°_{int}(k) - (T°_{rifINV} + \frac{T°_{\Delta ist}(k)}{2})$
116
$T°_{reg}(k) = T°_{int}(k) - (T°_{rifEST} - \frac{T°_{\Delta ist}(k)}{2})$
kWh $_{reg}$ (k) = CONVERSION OF $T°_{reg}$ (k)
113
kWh $_{reg}$ (k) = CONVERSION OF $T°_{reg}$ (k)
117
NO
$|T°_{int} = (k) - T°_{rifINV}| > \frac{T°_{\Delta ist}(k)}{2}$?
114
YES
NO
$|T°_{int} = (k) - T°_{rifEST}| > \frac{T°_{\Delta ist}(k)}{2}$?
118
YES
ACTIVATE HEATING BY APPLYING POWER CONTAINED IN $kWh_{reg}$ (k)
115
ACTIVATE COOLING BY APPLYING POWER CONTAINED IN $kWh_{reg}$ (k)
119
120
k = k + 1
121
K ≥ NUMBER OF ROOMS?
NO
2H
122
YES
END
123

Fig. 3d

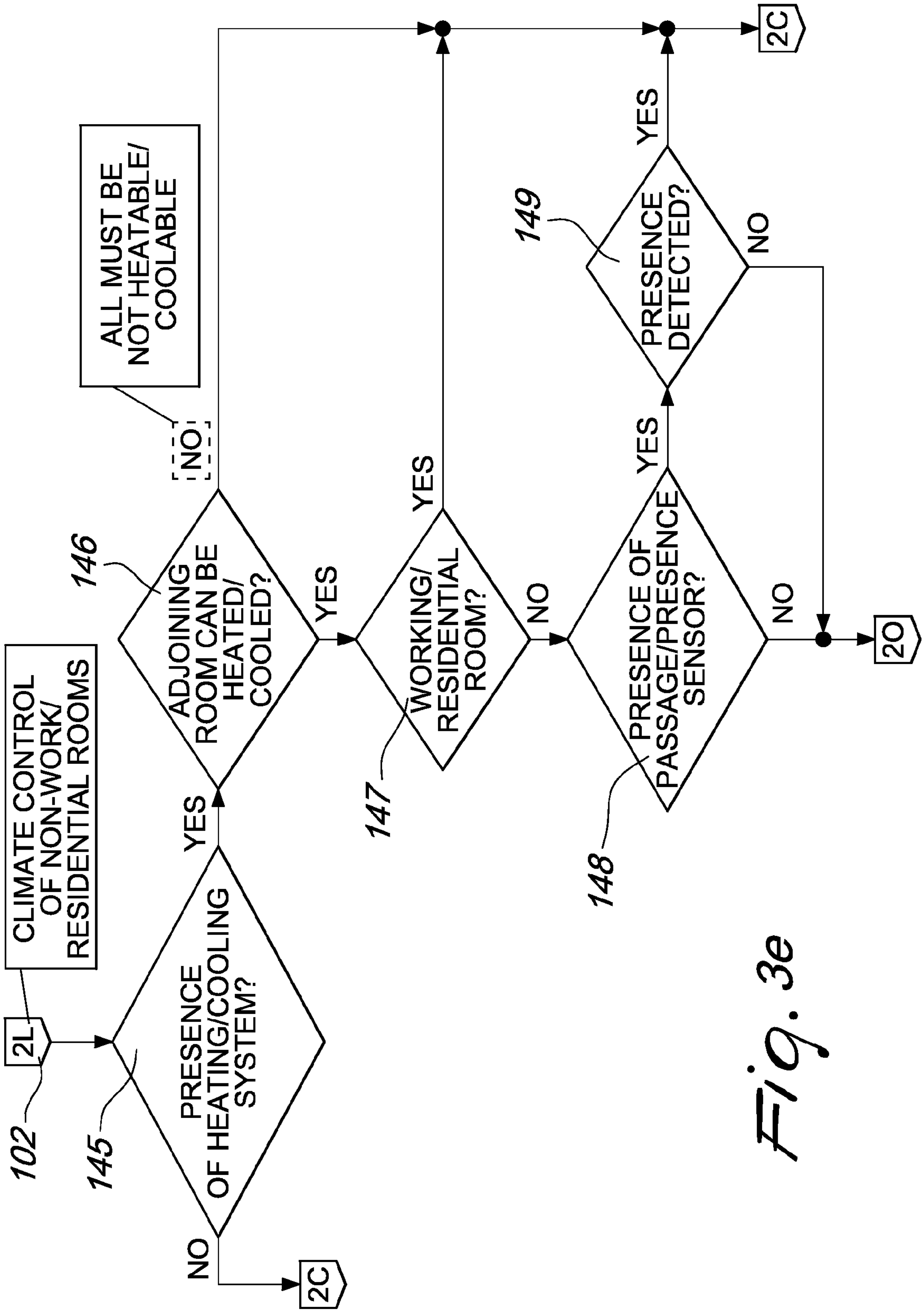
CLIMATE CONTROL OF NON-WORK/ RESIDENTIAL ROOMS
2L
102
145
PRESENCE OF HEATING/COOLING SYSTEM?
NO
2C
YES
146
ADJOINING ROOM CAN BE HEATED/ COOLED?
NO
ALL MUST BE NOT HEATABLE/ COOLABLE
YES
147
WORKING/ RESIDENTIAL ROOM?
YES
NO
148
PRESENCE OF PASSAGE/PRESENCE SENSOR?
YES
NO
149
PRESENCE DETECTED?
YES
NO
2C
2O

Fig. 3e

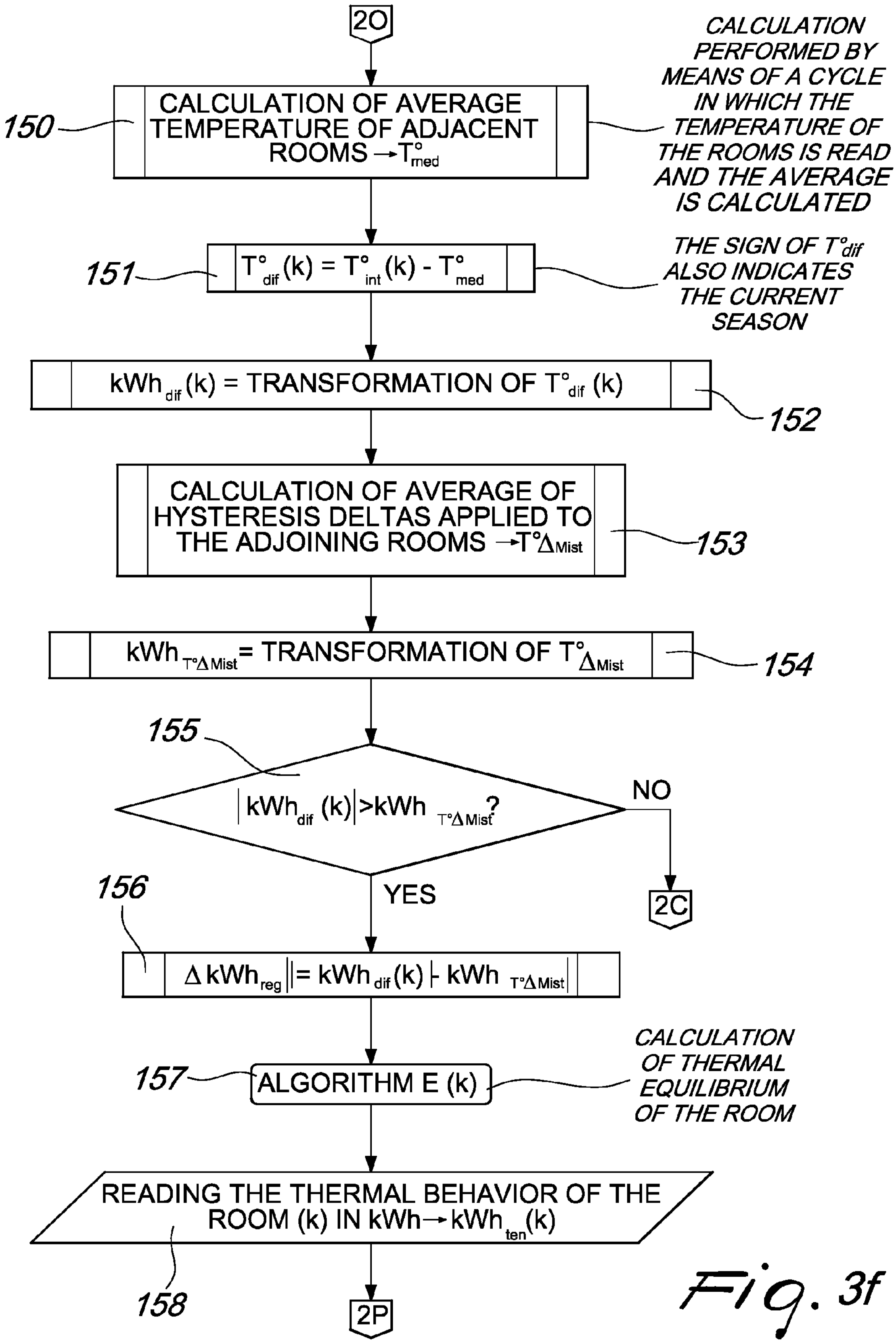

2O
CALCULATION OF AVERAGE TEMPERATURE OF ADJACENT ROOMS →T°med
150
CALCULATION PERFORMED BY MEANS OF A CYCLE IN WHICH THE TEMPERATURE OF THE ROOMS IS READ AND THE AVERAGE IS CALCULATED
T°dif (k) = T°int (k) - T°med
151
THE SIGN OF T°dif ALSO INDICATES THE CURRENT SEASON
kWhdif (k) = TRANSFORMATION OF T°dif (k)
152
CALCULATION OF AVERAGE OF HYSTERESIS DELTAS APPLIED TO THE ADJOINING ROOMS →T°ΔMist
153
kWhT°ΔMist = TRANSFORMATION OF T°ΔMist
154
155
|kWhdif (k)|>kWh T°ΔMist?
NO
2C
YES
156
ΔkWhreg = ||kWhdif (k)| - kWh T°ΔMist|
157
ALGORITHM E (k)
CALCULATION OF THERMAL EQUILIBRIUM OF THE ROOM
READING THE THERMAL BEHAVIOR OF THE ROOM (k) IN kWh→kWhten(k)
158
2P


Fig. 3f

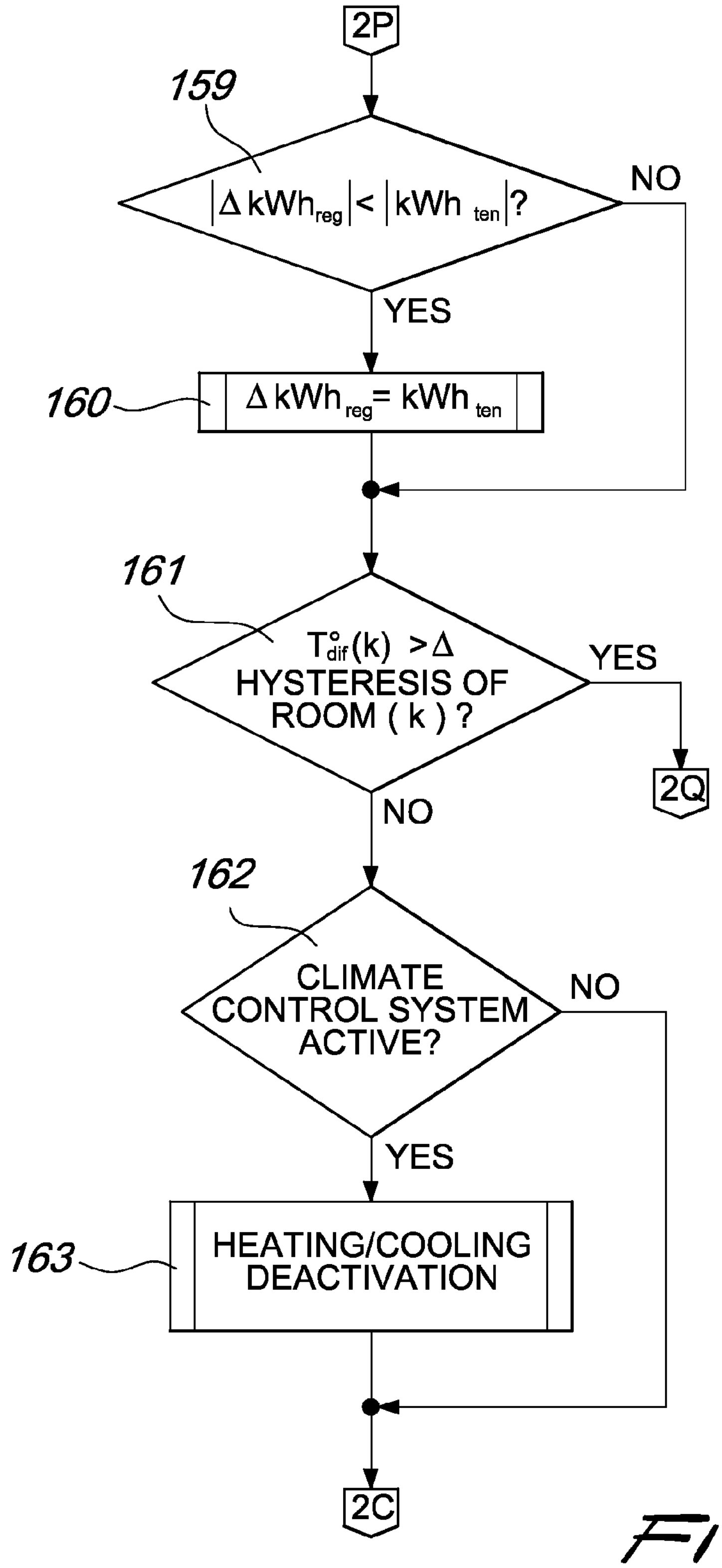
2P
159
|Δ kWh reg| < |kWh ten|?
NO
YES
160
Δ kWh reg = kWh ten
161
T°dif (k) > Δ HYSTERESIS OF ROOM ( k ) ?
YES
2Q
NO
162
CLIMATE CONTROL SYSTEM ACTIVE?
NO
YES
163
HEATING/COOLING DEACTIVATION
2C

Fig. 3g

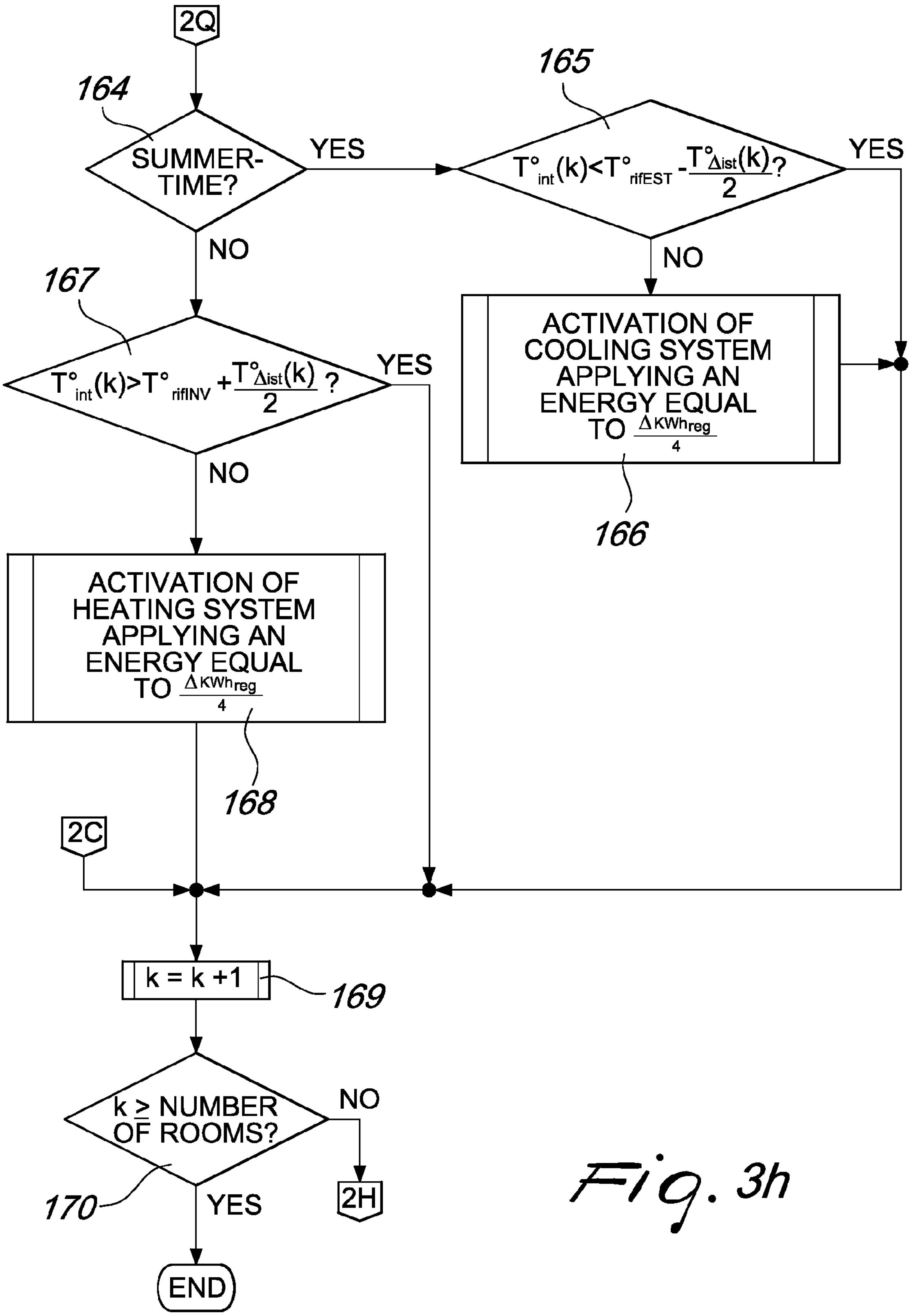
2Q
164
SUMMER-TIME?
YES
NO
165
$T°_{int}(k)<T°_{rifEST}-\frac{T°_{\Delta ist}(k)}{2}$?
YES
NO
ACTIVATION OF COOLING SYSTEM APPLYING AN ENERGY EQUAL TO $\frac{\Delta KWh_{reg}}{4}$
166
167
$T°_{int}(k)>T°_{rifINV}+\frac{T°_{\Delta ist}(k)}{2}$?
YES
NO
ACTIVATION OF HEATING SYSTEM APPLYING AN ENERGY EQUAL TO $\frac{\Delta KWh_{reg}}{4}$
168
2C
k = k +1
169
k ≥ NUMBER OF ROOMS?
NO
2H
170
YES
END

Fig. 3h

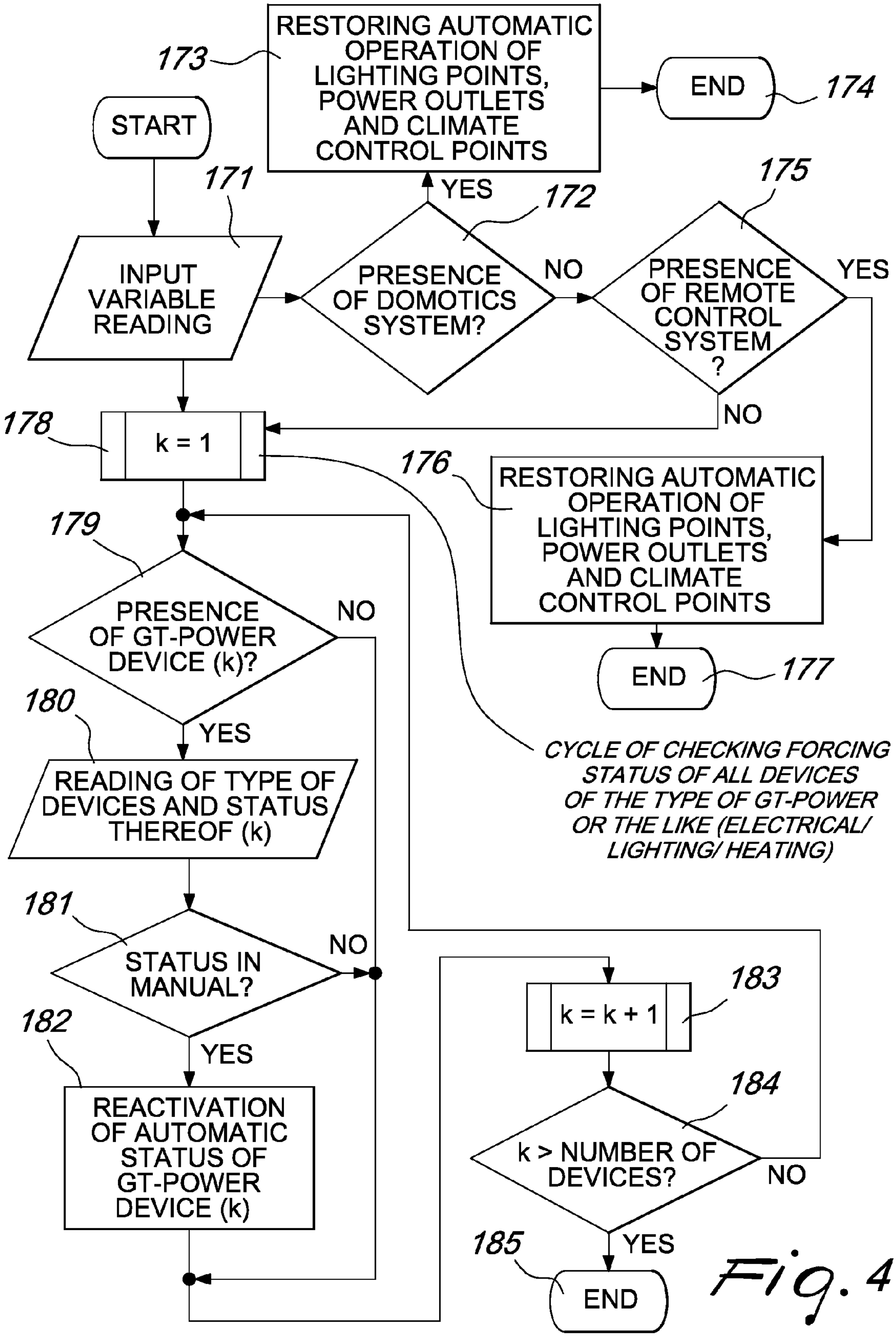
START
171
INPUT VARIABLE READING
PRESENCE OF DOMOTICS SYSTEM?
172
YES
173
RESTORING AUTOMATIC OPERATION OF LIGHTING POINTS, POWER OUTLETS AND CLIMATE CONTROL POINTS
END
174
NO
175
PRESENCE OF REMOTE CONTROL SYSTEM ?
YES
NO
176
RESTORING AUTOMATIC OPERATION OF LIGHTING POINTS, POWER OUTLETS AND CLIMATE CONTROL POINTS
END
177
178
k = 1
179
PRESENCE OF GT-POWER DEVICE (k)?
NO
YES
180
READING OF TYPE OF DEVICES AND STATUS THEREOF (k)
181
STATUS IN MANUAL?
NO
YES
182
REACTIVATION OF AUTOMATIC STATUS OF GT-POWER DEVICE (k)
CYCLE OF CHECKING FORCING STATUS OF ALL DEVICES OF THE TYPE OF GT-POWER OR THE LIKE (ELECTRICAL/ LIGHTING/ HEATING)
183
k = k + 1
184
k > NUMBER OF DEVICES?
NO
YES
185
END

Fig. 4

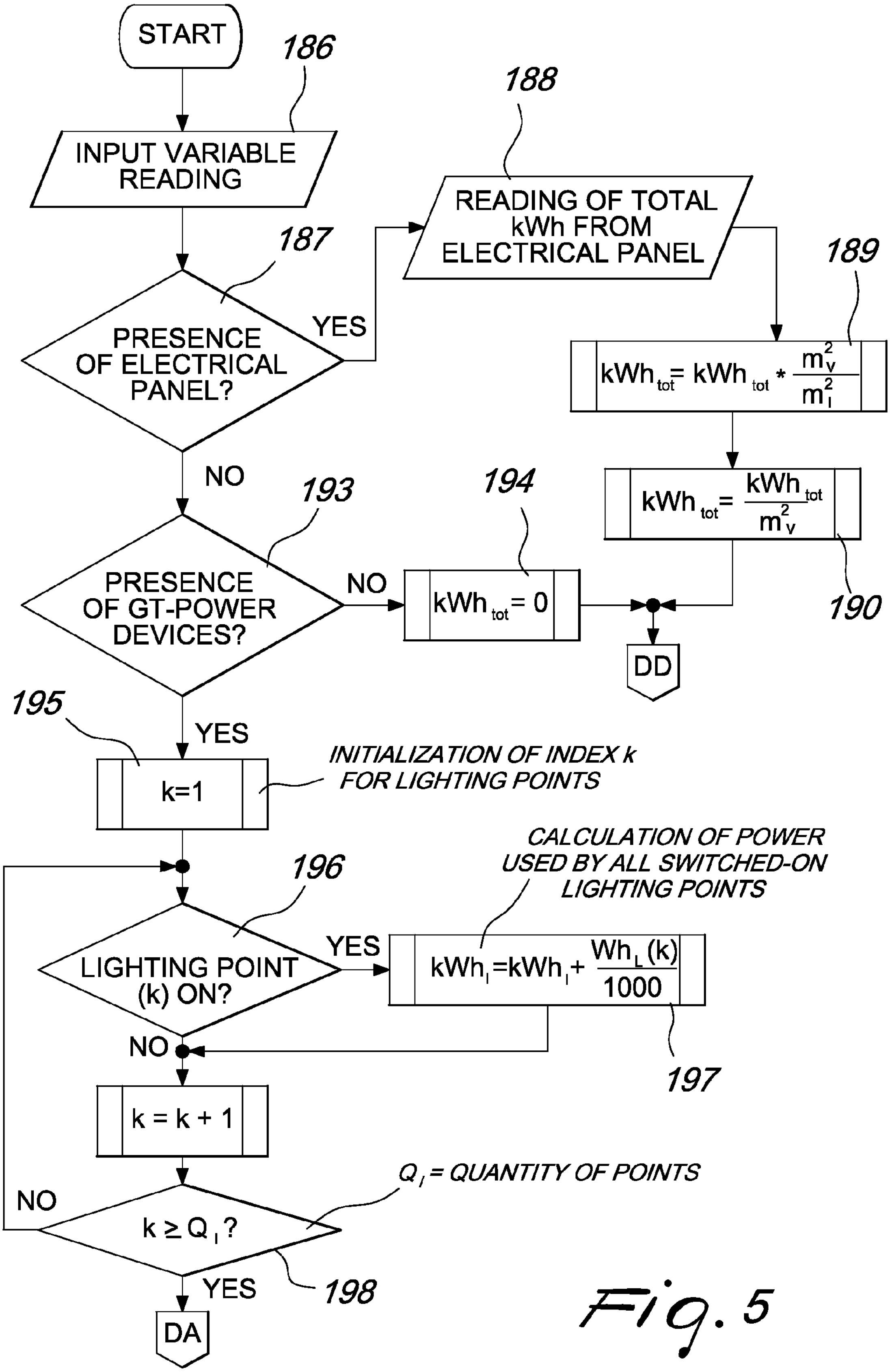
START
186
INPUT VARIABLE READING
188
READING OF TOTAL kWh FROM ELECTRICAL PANEL
187
189
PRESENCE OF ELECTRICAL PANEL?
YES
kWh tot= kWh tot * m2v / m2l
NO
193
194
kWh tot= kWh tot / m2v
PRESENCE OF GT-POWER DEVICES?
NO
kWh tot= 0
190
DD
195
YES
k=1
INITIALIZATION OF INDEX k FOR LIGHTING POINTS
CALCULATION OF POWER USED BY ALL SWITCHED-ON LIGHTING POINTS
196
LIGHTING POINT (k) ON?
YES
kWhl=kWhl+ WhL(k) / 1000
NO
197
k = k + 1
Ql = QUANTITY OF POINTS
NO
k ≥ Ql?
YES
198
DA

Fig. 5

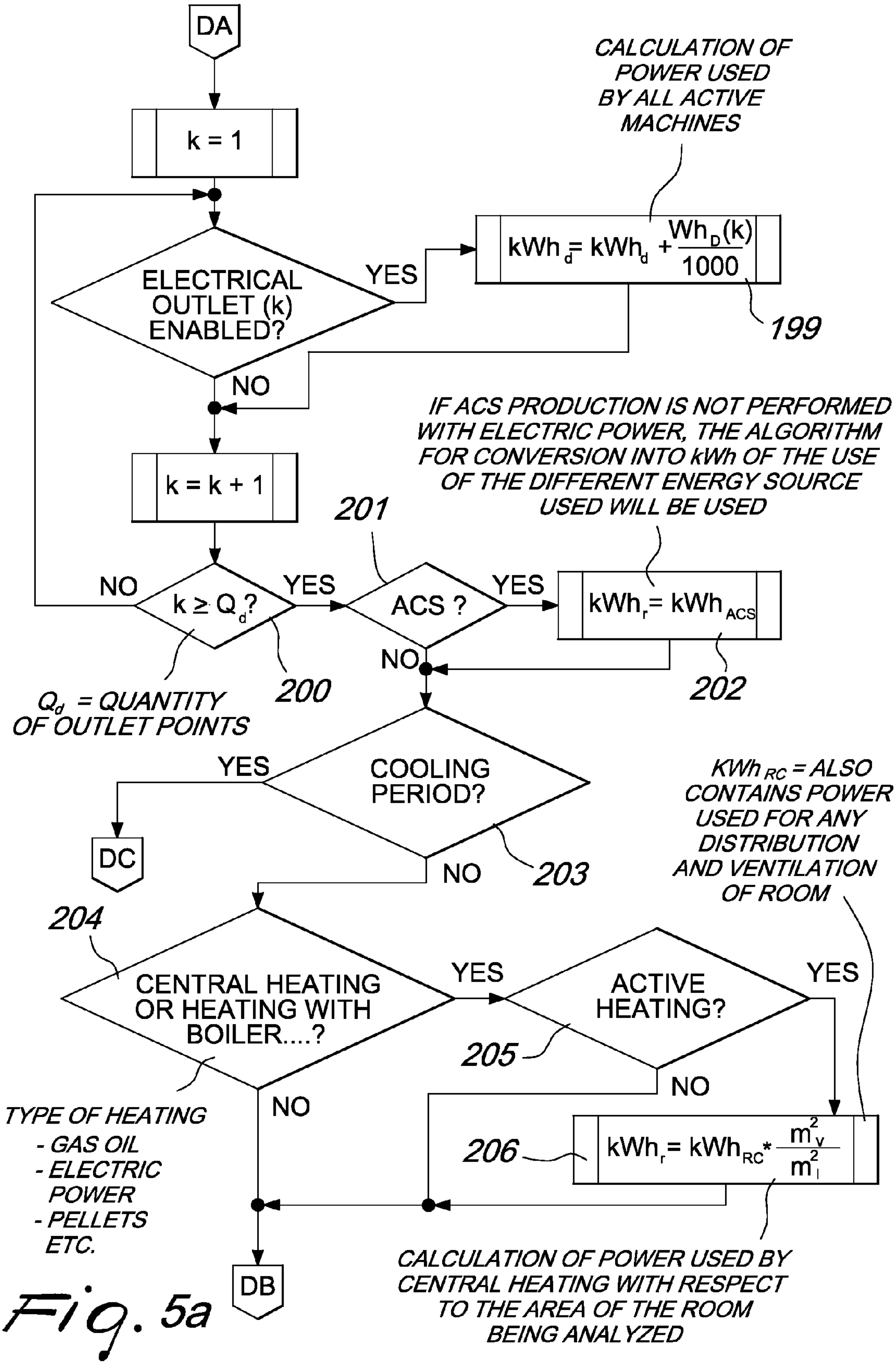
DA
k = 1
CALCULATION OF POWER USED BY ALL ACTIVE MACHINES
ELECTRICAL OUTLET (k) ENABLED?
YES
$kWh_d = kWh_d + \frac{Wh_D(k)}{1000}$
199
NO
IF ACS PRODUCTION IS NOT PERFORMED WITH ELECTRIC POWER, THE ALGORITHM FOR CONVERSION INTO kWh OF THE USE OF THE DIFFERENT ENERGY SOURCE USED WILL BE USED
k = k + 1
201
NO
$k \geq Q_d$?
YES
ACS ?
YES
$kWh_r = kWh_{ACS}$
NO
$Q_d$ = QUANTITY OF OUTLET POINTS
200
202
YES
COOLING PERIOD?
$KWh_{RC}$ = ALSO CONTAINS POWER USED FOR ANY DISTRIBUTION AND VENTILATION OF ROOM
DC
NO
203
204
CENTRAL HEATING OR HEATING WITH BOILER....?
YES
ACTIVE HEATING?
YES
205
NO
TYPE OF HEATING
- GAS OIL
- ELECTRIC POWER
- PELLETS
ETC.
NO
206
$kWh_r = kWh_{RC} * \frac{m^2_v}{m^2_l}$
DB
CALCULATION OF POWER USED BY CENTRAL HEATING WITH RESPECT TO THE AREA OF THE ROOM BEING ANALYZED

Fig. 5a

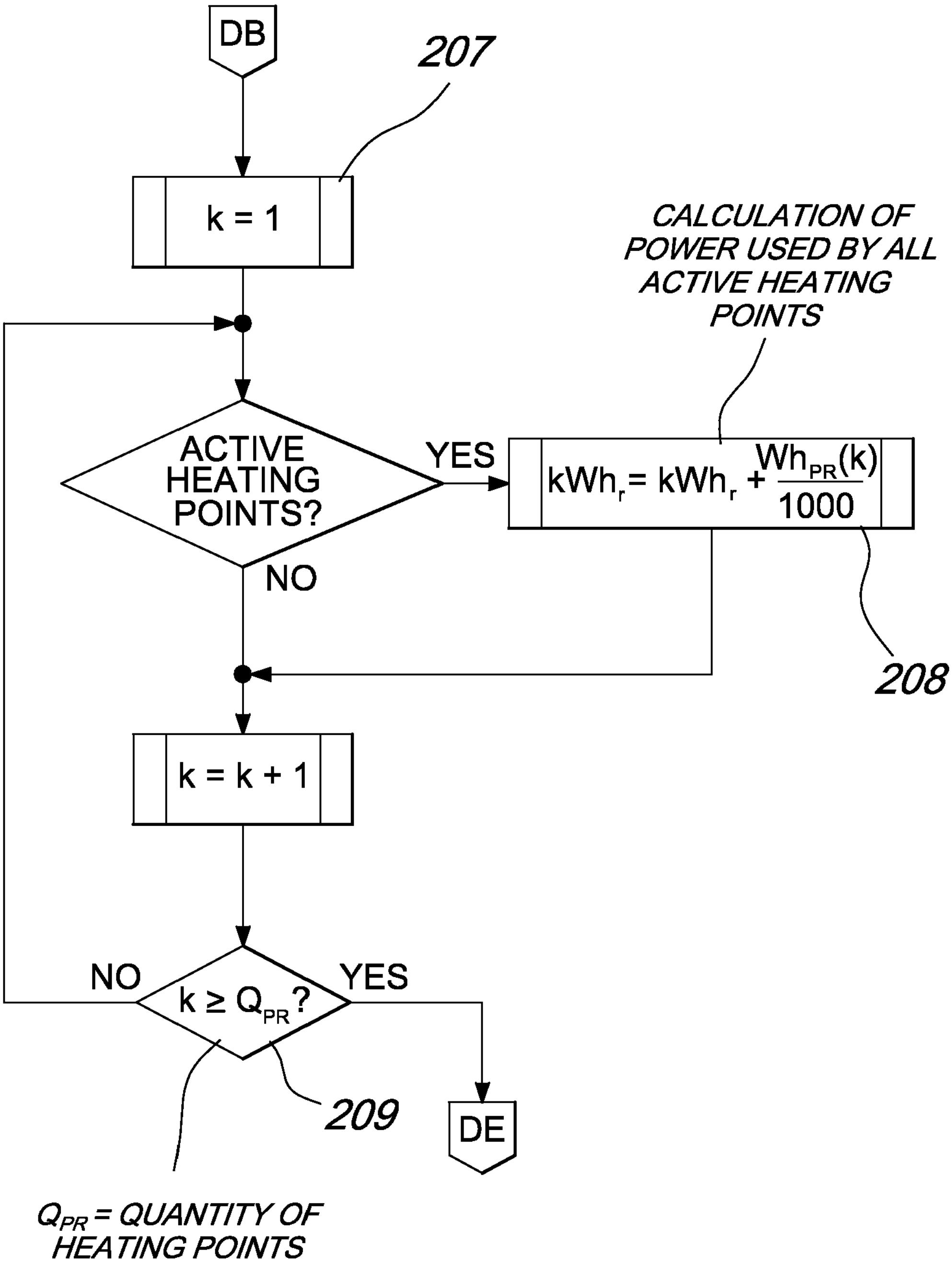
DB
207
k = 1
CALCULATION OF POWER USED BY ALL ACTIVE HEATING POINTS
ACTIVE HEATING POINTS?
YES
$kWh_r = kWh_r + \frac{Wh_{PR}(k)}{1000}$
NO
208
k = k + 1
NO
$k \geq Q_{PR}$?
YES
209
DE
$Q_{PR}$ = QUANTITY OF HEATING POINTS

Fig. 5b

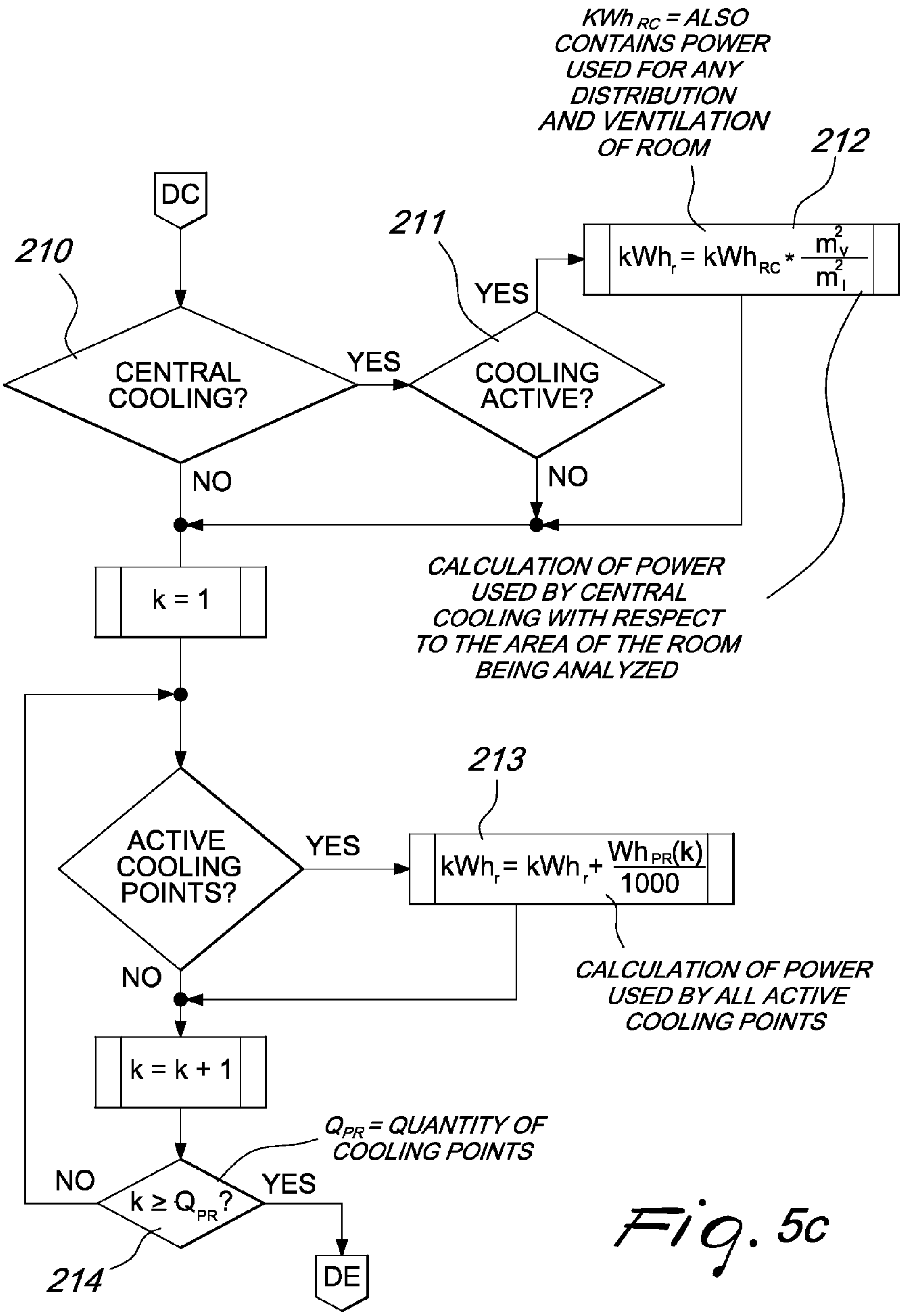
KWh RC = ALSO CONTAINS POWER USED FOR ANY DISTRIBUTION AND VENTILATION OF ROOM
212
DC
211
210
YES
kWh$_r$ = kWh$_{RC}$ * $m_v^2$ / $m_l^2$
CENTRAL COOLING?
YES
COOLING ACTIVE?
NO
NO
k = 1
CALCULATION OF POWER USED BY CENTRAL COOLING WITH RESPECT TO THE AREA OF THE ROOM BEING ANALYZED
213
ACTIVE COOLING POINTS?
YES
kWh$_r$ = kWh$_r$ + Wh$_{PR}$(k) / 1000
NO
CALCULATION OF POWER USED BY ALL ACTIVE COOLING POINTS
k = k + 1
Q$_{PR}$ = QUANTITY OF COOLING POINTS
NO
k ≥ Q$_{PR}$?
YES
214
DE

Fig. 5c

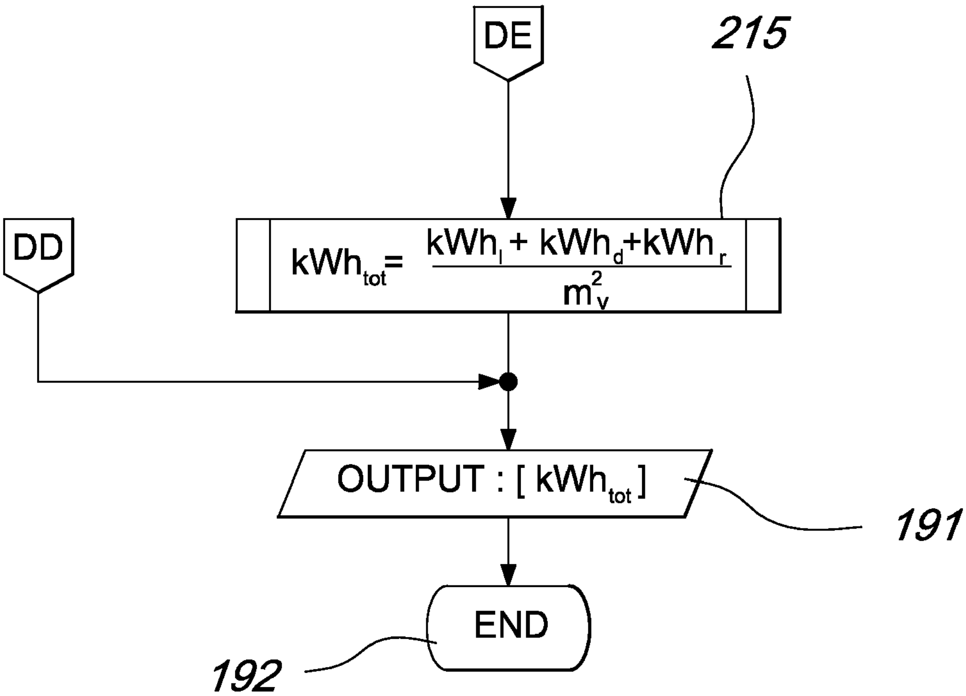
DE
215
DD
$kWh_{tot} = \frac{kWh_l + kWh_d + kWh_r}{m_v^2}$
OUTPUT : [ $kWh_{tot}$ ]
191
END
192

Fig. 5d

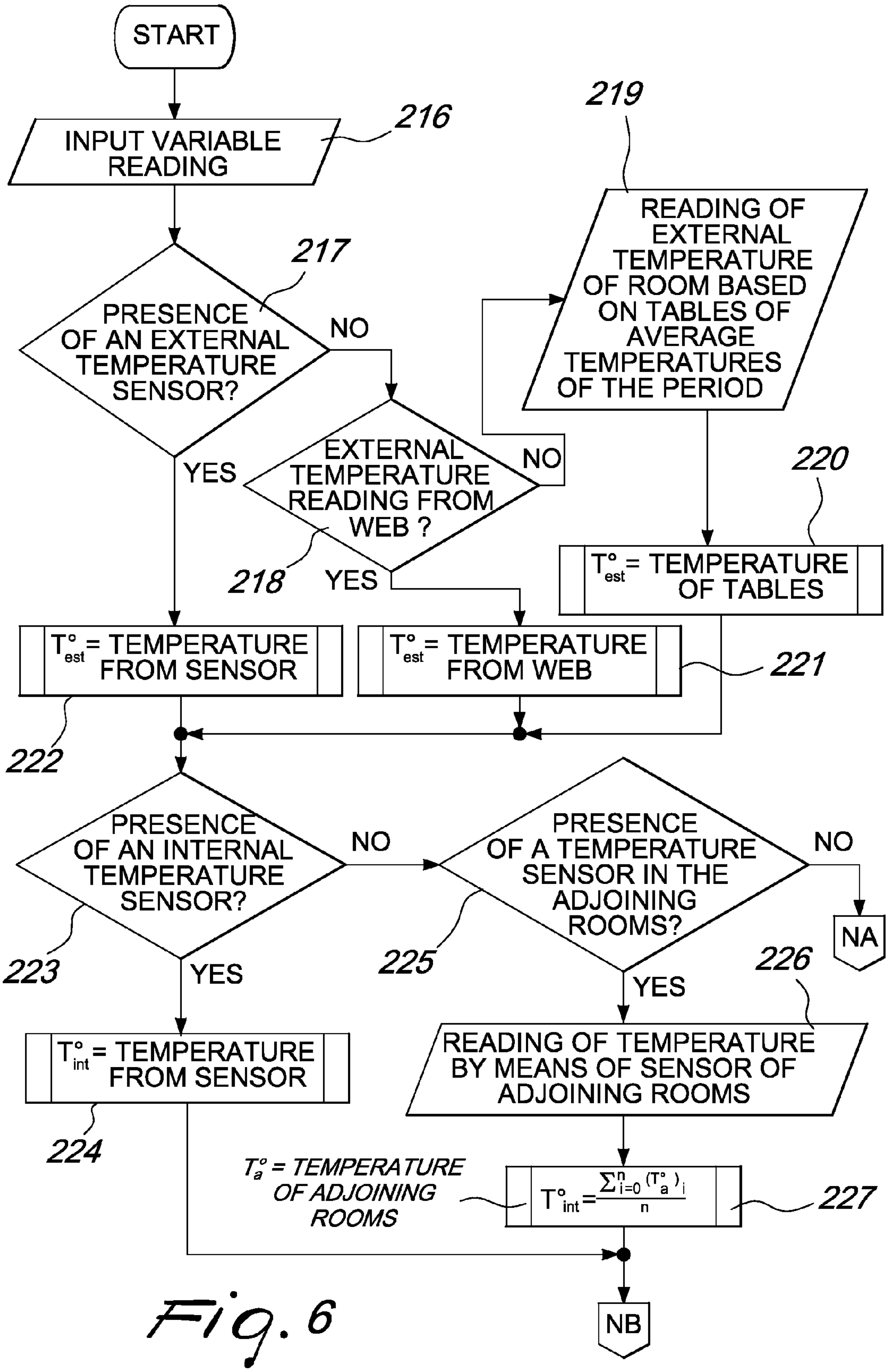

START
INPUT VARIABLE READING
216
PRESENCE OF AN EXTERNAL TEMPERATURE SENSOR?
217
NO
YES
EXTERNAL TEMPERATURE READING FROM WEB ?
218
NO
YES
219
READING OF EXTERNAL TEMPERATURE OF ROOM BASED ON TABLES OF AVERAGE TEMPERATURES OF THE PERIOD
220
T°est = TEMPERATURE OF TABLES
T°est = TEMPERATURE FROM SENSOR
222
T°est = TEMPERATURE FROM WEB
221
PRESENCE OF AN INTERNAL TEMPERATURE SENSOR?
223
NO
YES
PRESENCE OF A TEMPERATURE SENSOR IN THE ADJOINING ROOMS?
225
NO
NA
YES
226
READING OF TEMPERATURE BY MEANS OF SENSOR OF ADJOINING ROOMS
T°int = TEMPERATURE FROM SENSOR
224
T°a = TEMPERATURE OF ADJOINING ROOMS
T°int = Σni=0 (T°a)i / n
227
NB


Fig. 6

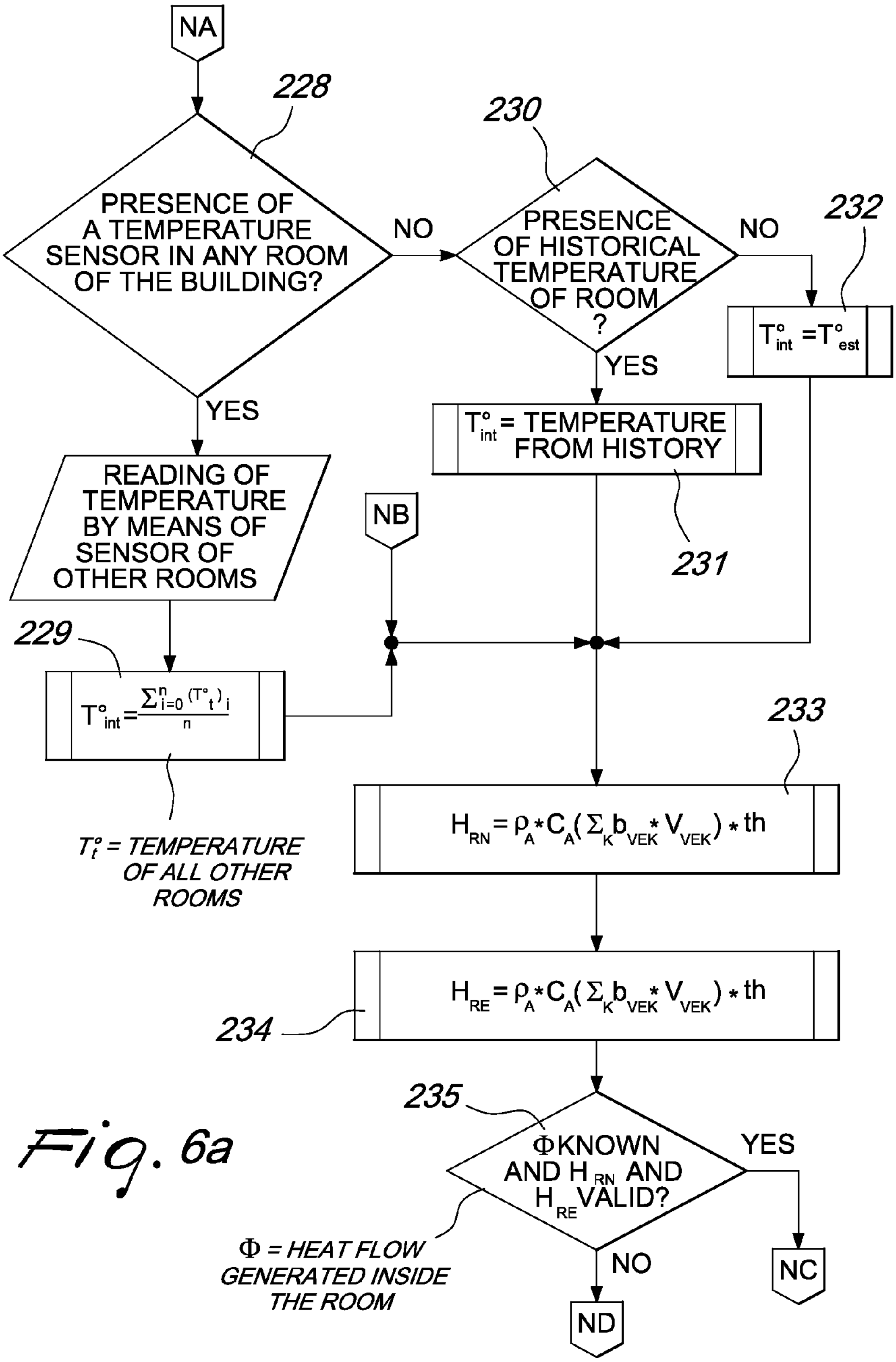
NA
228
PRESENCE OF A TEMPERATURE SENSOR IN ANY ROOM OF THE BUILDING?
NO
230
PRESENCE OF HISTORICAL TEMPERATURE OF ROOM ?
NO
232
T°int =T°est
YES
T°int = TEMPERATURE FROM HISTORY
231
YES
READING OF TEMPERATURE BY MEANS OF SENSOR OF OTHER ROOMS
NB
229
T°int = Σⁿi=0 (T°t)i / n
T°t = TEMPERATURE OF ALL OTHER ROOMS
233
HRN = ρA*CA(ΣK bVEK * VVEK) * th
234
HRE = ρA*CA(ΣK bVEK * VVEK) * th
235
Φ KNOWN AND HRN AND HRE VALID?
YES
NO
Φ = HEAT FLOW GENERATED INSIDE THE ROOM
NC
ND

Fig. 6a

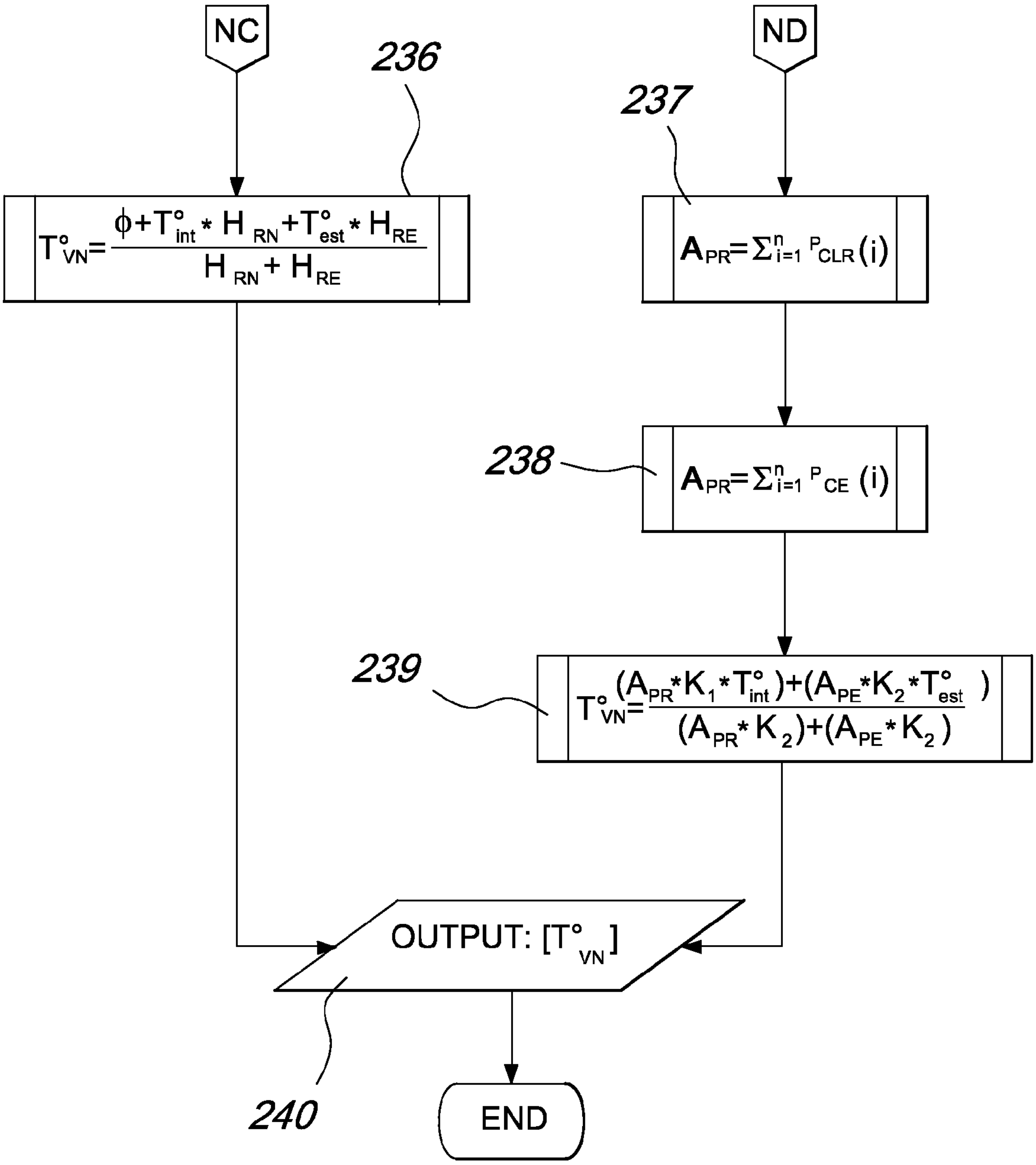
NC
236
$T°_{VN} = \frac{\phi + T°_{int} * H_{RN} + T°_{est} * H_{RE}}{H_{RN} + H_{RE}}$
ND
237
$A_{PR} = \Sigma_{i=1}^{n} P_{CLR}(i)$
238
$A_{PR} = \Sigma_{i=1}^{n} P_{CE}(i)$
239
$T°_{VN} = \frac{(A_{PR} * K_1 * T°_{int}) + (A_{PE} * K_2 * T°_{est})}{(A_{PR} * K_2) + (A_{PE} * K_2)}$
OUTPUT: [$T°_{VN}$]
240
END

Fig. 6b

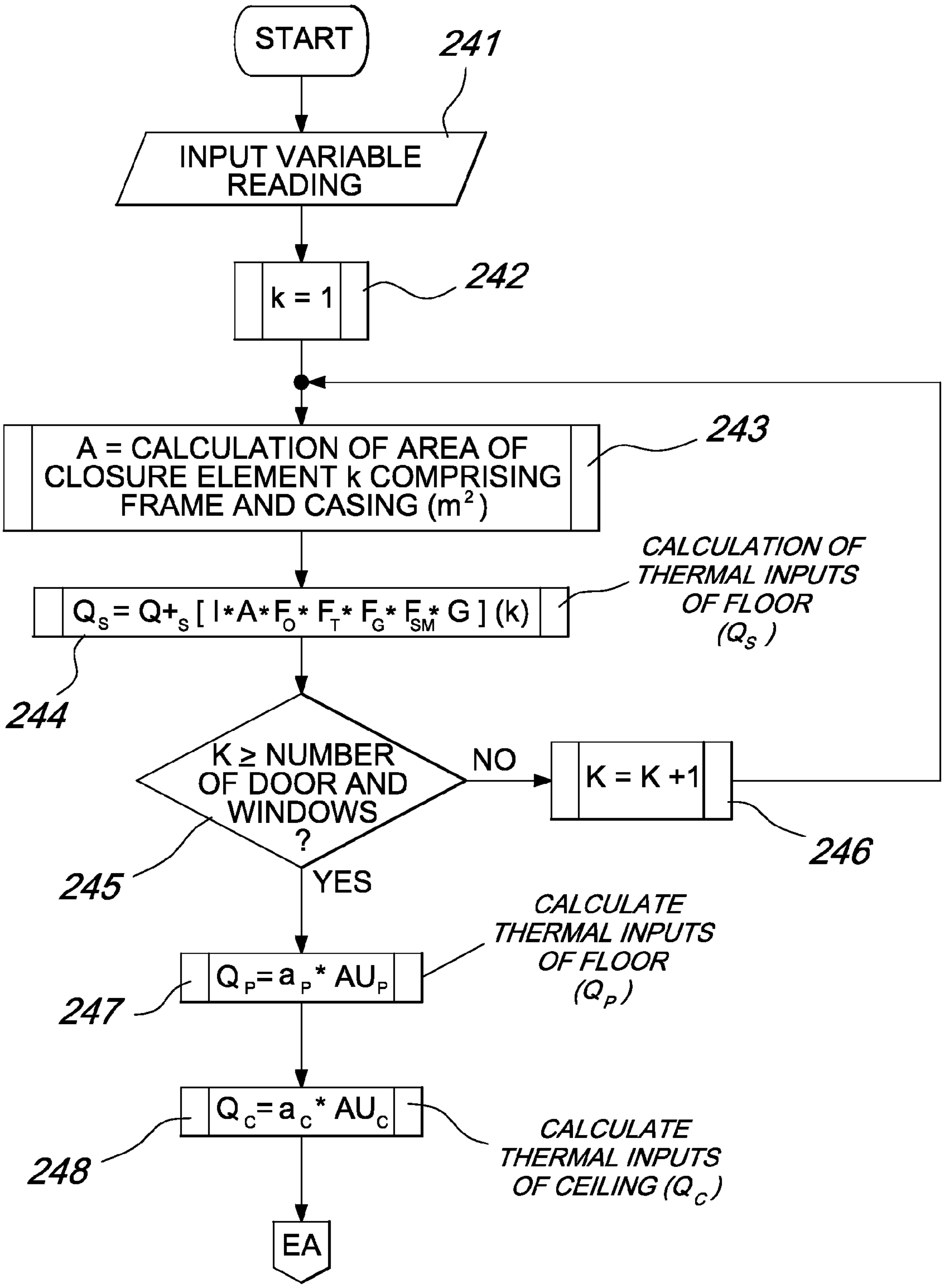
START
241
INPUT VARIABLE READING
k = 1
242
A = CALCULATION OF AREA OF CLOSURE ELEMENT k COMPRISING FRAME AND CASING (m²)
243
Qs = Q+s [ I*A*FO* FT* FG* FSM* G ] (k)
CALCULATION OF THERMAL INPUTS OF FLOOR (Qs )
244
K ≥ NUMBER OF DOOR AND WINDOWS ?
NO
K = K +1
246
245
YES
QP=aP* AUP
CALCULATE THERMAL INPUTS OF FLOOR (QP)
247
QC=aC* AUC
248
CALCULATE THERMAL INPUTS OF CEILING (QC)
EA

Fig. 7

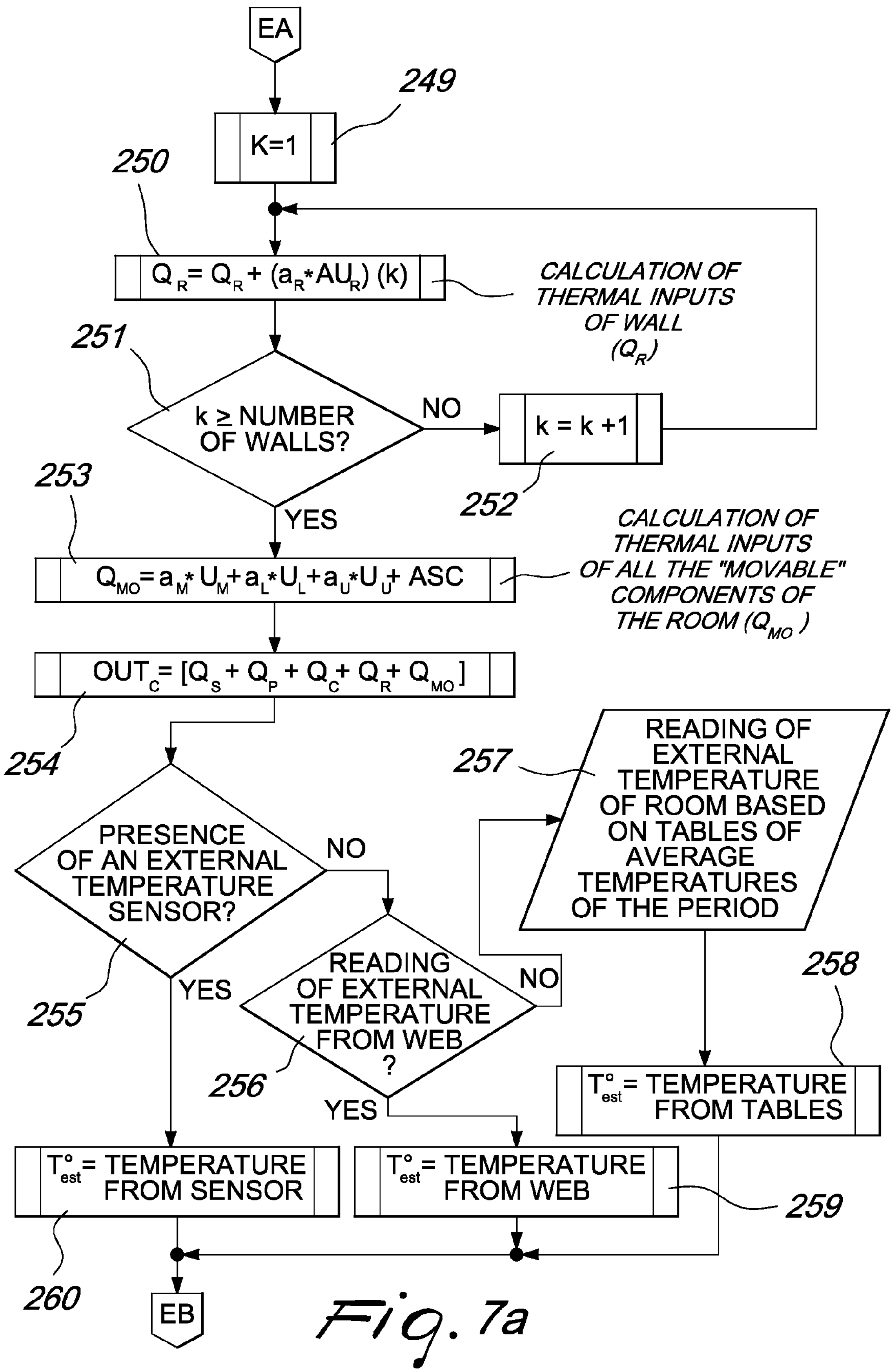
EA
249
K=1
250
$Q_R = Q_R + (a_R * AU_R)$ (k)
CALCULATION OF THERMAL INPUTS OF WALL ($Q_R$)
251
k ≥ NUMBER OF WALLS?
NO
k = k +1
252
YES
253
$Q_{MO} = a_M * U_M + a_L * U_L + a_U * U_U +$ ASC
CALCULATION OF THERMAL INPUTS OF ALL THE "MOVABLE" COMPONENTS OF THE ROOM ($Q_{MO}$)
$OUT_C = [Q_S + Q_P + Q_C + Q_R + Q_{MO}]$
254
257
READING OF EXTERNAL TEMPERATURE OF ROOM BASED ON TABLES OF AVERAGE TEMPERATURES OF THE PERIOD
PRESENCE OF AN EXTERNAL TEMPERATURE SENSOR?
NO
255
YES
READING OF EXTERNAL TEMPERATURE FROM WEB ?
NO
258
256
YES
$T°_{est}$ = TEMPERATURE FROM TABLES
$T°_{est}$ = TEMPERATURE FROM SENSOR
$T°_{est}$ = TEMPERATURE FROM WEB
259
260
EB

Fig. 7a

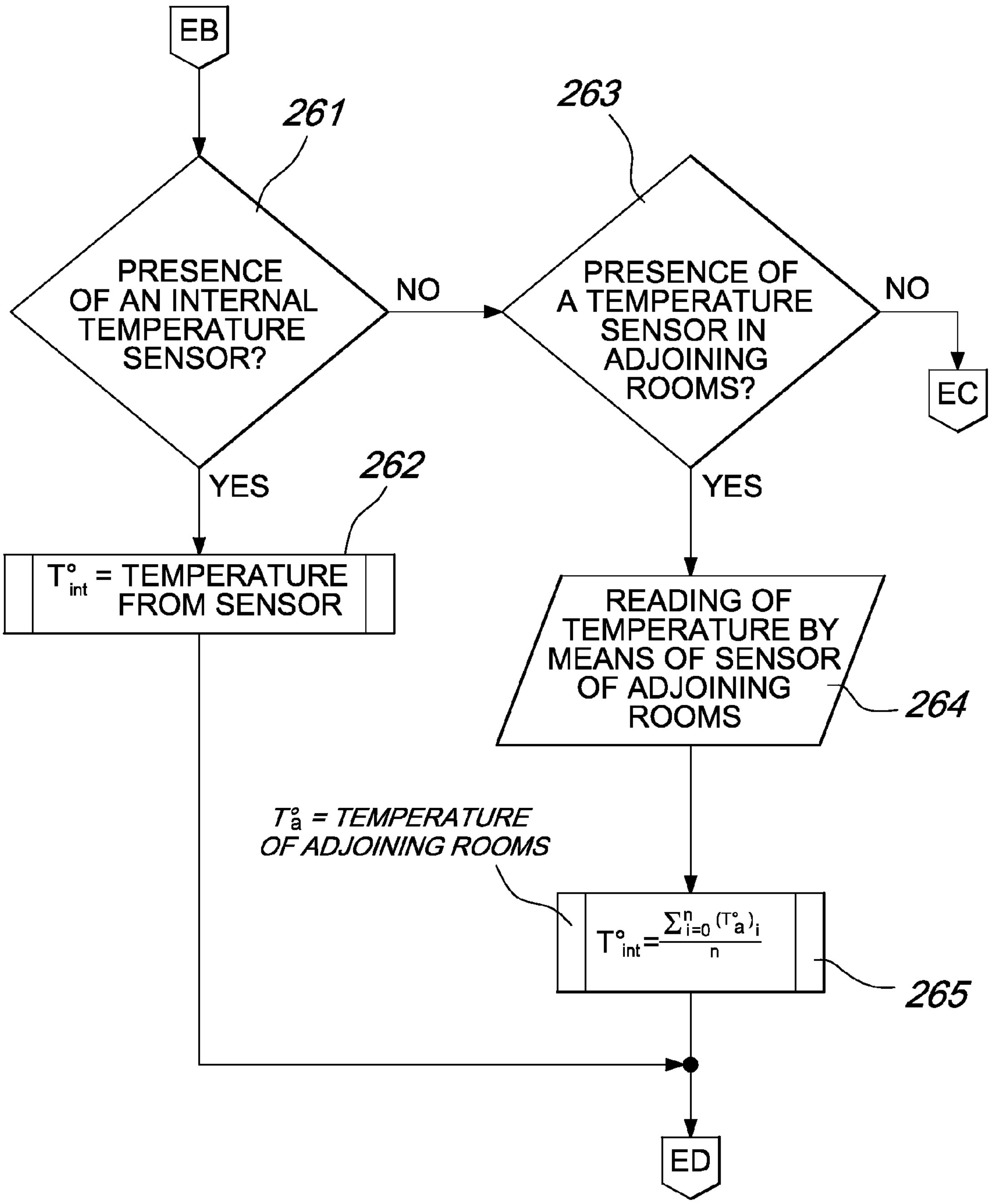
EB
261
263
PRESENCE OF AN INTERNAL TEMPERATURE SENSOR?
NO
PRESENCE OF A TEMPERATURE SENSOR IN ADJOINING ROOMS?
NO
EC
YES
262
YES
$T^{\circ}_{int}$ = TEMPERATURE FROM SENSOR
READING OF TEMPERATURE BY MEANS OF SENSOR OF ADJOINING ROOMS
264
$T^{\circ}_{a}$ = TEMPERATURE OF ADJOINING ROOMS
$T^{\circ}_{int} = \frac{\sum_{i=0}^{n} (T^{\circ}_{a})_i}{n}$
265
ED

Fig. 7b

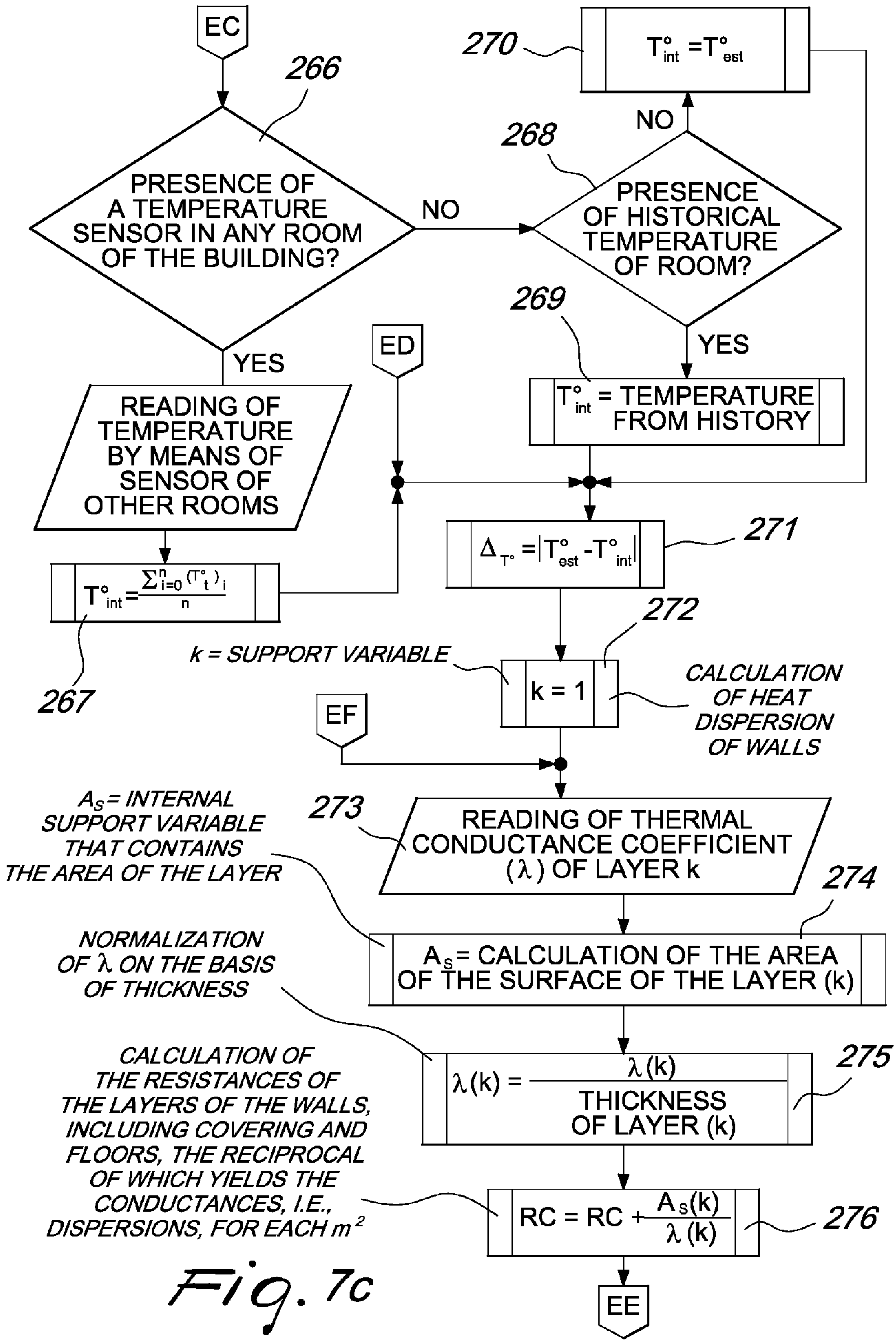
EC
266
PRESENCE OF A TEMPERATURE SENSOR IN ANY ROOM OF THE BUILDING?
NO
YES
270
T°int =T°est
NO
268
PRESENCE OF HISTORICAL TEMPERATURE OF ROOM?
269
YES
T°int = TEMPERATURE FROM HISTORY
ED
READING OF TEMPERATURE BY MEANS OF SENSOR OF OTHER ROOMS
T°int = Σni=0 (T°t)i / n
267
ΔT° =|T°est -T°int|
271
272
k = SUPPORT VARIABLE
k = 1
CALCULATION OF HEAT DISPERSION OF WALLS
EF
AS = INTERNAL SUPPORT VARIABLE THAT CONTAINS THE AREA OF THE LAYER
273
READING OF THERMAL CONDUCTANCE COEFFICIENT (λ) OF LAYER k
274
AS = CALCULATION OF THE AREA OF THE SURFACE OF THE LAYER (k)
NORMALIZATION OF λ ON THE BASIS OF THICKNESS
λ(k) = λ(k) / THICKNESS OF LAYER (k)
275
CALCULATION OF THE RESISTANCES OF THE LAYERS OF THE WALLS, INCLUDING COVERING AND FLOORS, THE RECIPROCAL OF WHICH YIELDS THE CONDUCTANCES, I.E., DISPERSIONS, FOR EACH m2
RC = RC + AS(k) / λ(k)
276
EE

Fig. 7c

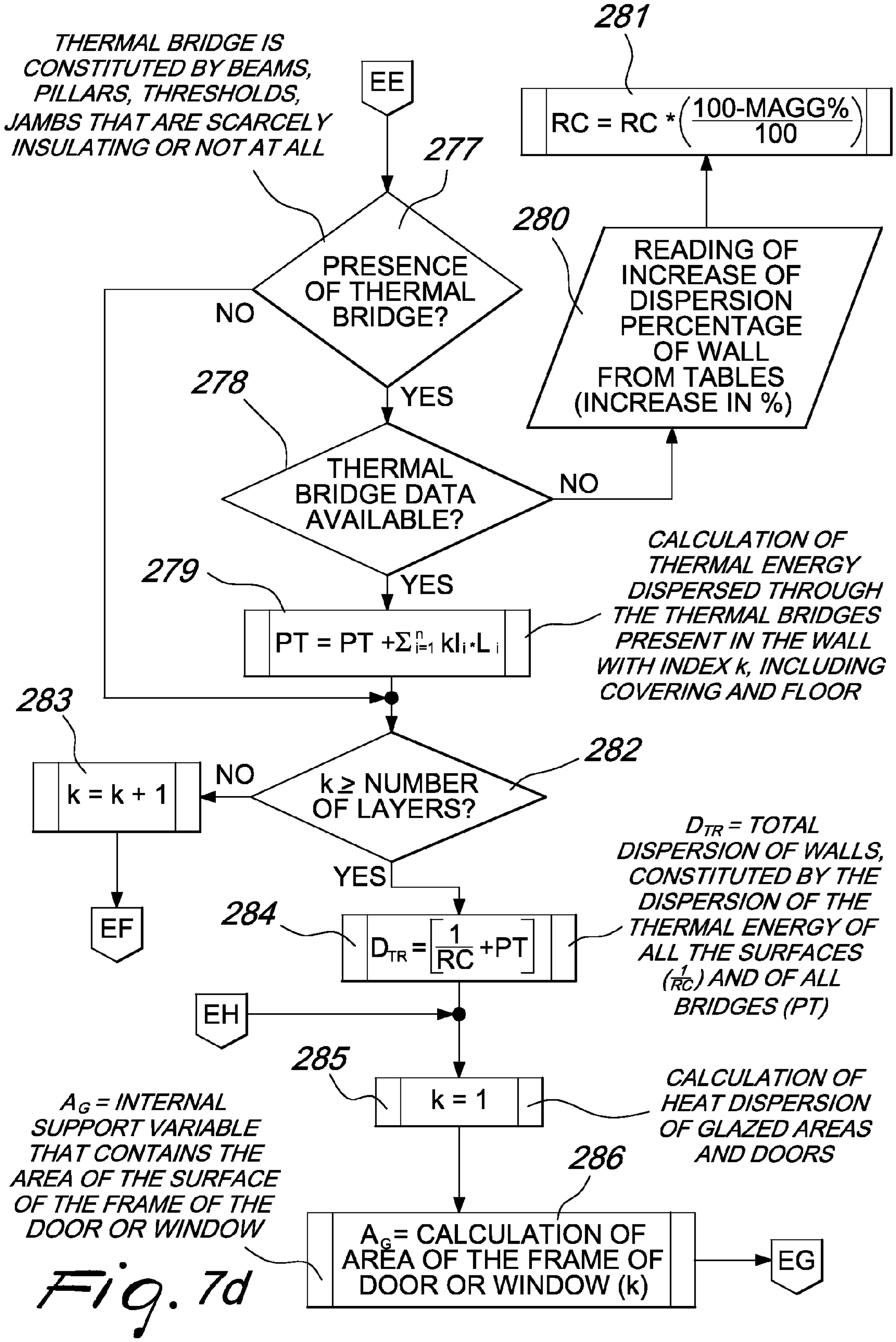
281
RC = RC * (100-MAGG% / 100)
THERMAL BRIDGE IS CONSTITUTED BY BEAMS, PILLARS, THRESHOLDS, JAMBS THAT ARE SCARCELY INSULATING OR NOT AT ALL
EE
277
280
PRESENCE OF THERMAL BRIDGE?
NO
READING OF INCREASE OF DISPERSION PERCENTAGE OF WALL FROM TABLES (INCREASE IN %)
278
YES
THERMAL BRIDGE DATA AVAILABLE?
NO
CALCULATION OF THERMAL ENERGY DISPERSED THROUGH THE THERMAL BRIDGES PRESENT IN THE WALL WITH INDEX k, INCLUDING COVERING AND FLOOR
279
YES
PT = PT +Σ n i=1 kl i ·L i
283
282
k = k + 1
NO
k ≥ NUMBER OF LAYERS?
D TR = TOTAL DISPERSION OF WALLS, CONSTITUTED BY THE DISPERSION OF THE THERMAL ENERGY OF ALL THE SURFACES (1/RC) AND OF ALL BRIDGES (PT)
YES
EF
284
D TR = [1/RC +PT]
EH
285
CALCULATION OF HEAT DISPERSION OF GLAZED AREAS AND DOORS
A G = INTERNAL SUPPORT VARIABLE THAT CONTAINS THE AREA OF THE SURFACE OF THE FRAME OF THE DOOR OR WINDOW
k = 1
286
A G = CALCULATION OF AREA OF THE FRAME OF DOOR OR WINDOW (k)
EG

Fig. 7d

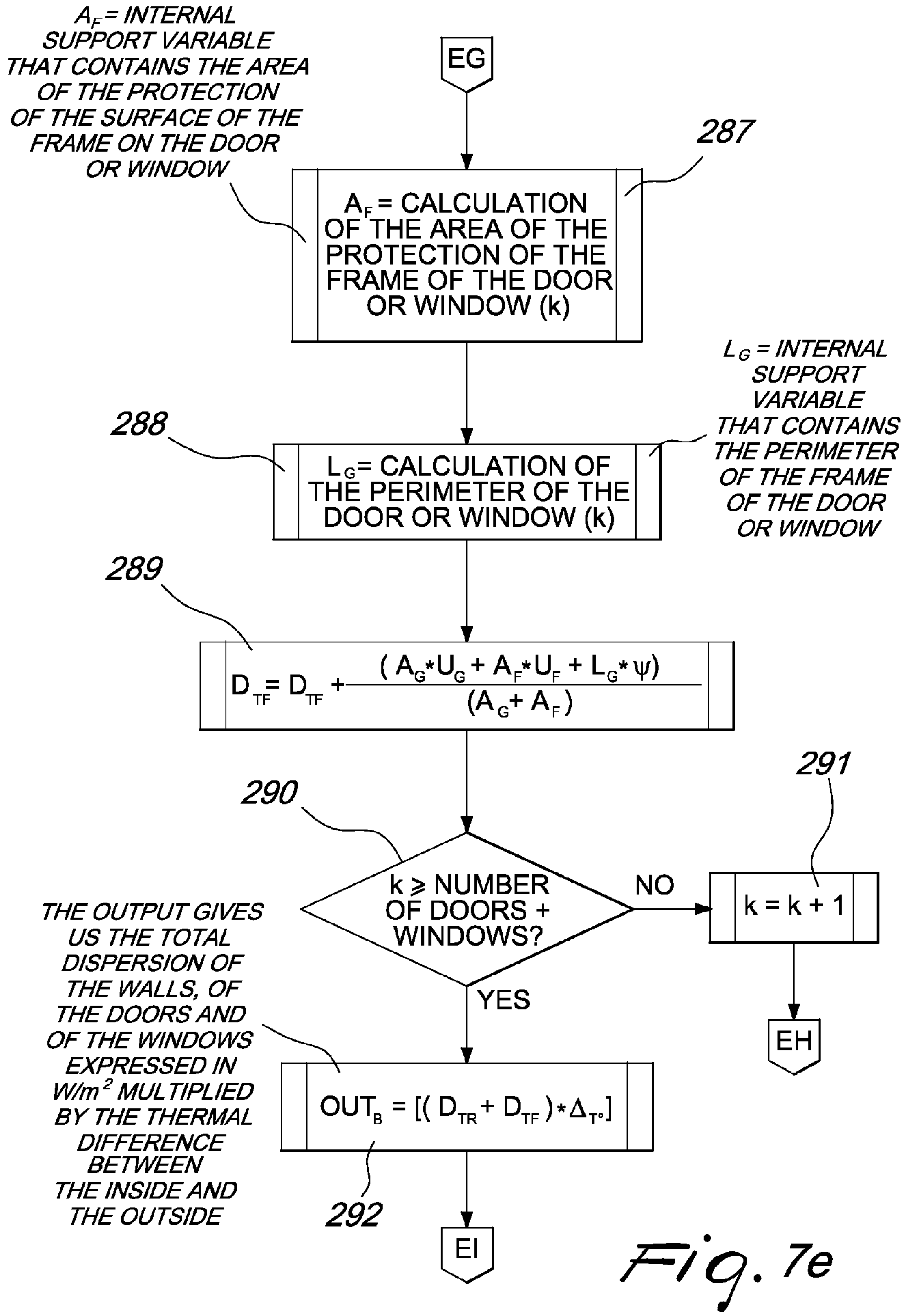

EG
287
AF = CALCULATION OF THE AREA OF THE PROTECTION OF THE FRAME OF THE DOOR OR WINDOW (k)
AF = INTERNAL SUPPORT VARIABLE THAT CONTAINS THE AREA OF THE PROTECTION OF THE SURFACE OF THE FRAME ON THE DOOR OR WINDOW
288
LG= CALCULATION OF THE PERIMETER OF THE DOOR OR WINDOW (k)
LG = INTERNAL SUPPORT VARIABLE THAT CONTAINS THE PERIMETER OF THE FRAME OF THE DOOR OR WINDOW
289
$D_{TF} = D_{TF} + \frac{(A_G * U_G + A_F * U_F + L_G * \psi)}{(A_G + A_F)}$
290
k ≥ NUMBER OF DOORS + WINDOWS?
NO
291
k = k + 1
EH
YES
THE OUTPUT GIVES US THE TOTAL DISPERSION OF THE WALLS, OF THE DOORS AND OF THE WINDOWS EXPRESSED IN W/m2 MULTIPLIED BY THE THERMAL DIFFERENCE BETWEEN THE INSIDE AND THE OUTSIDE
$OUT_B = [(D_{TR} + D_{TF}) * \Delta_{T°}]$
292
EI


Fig. 7e

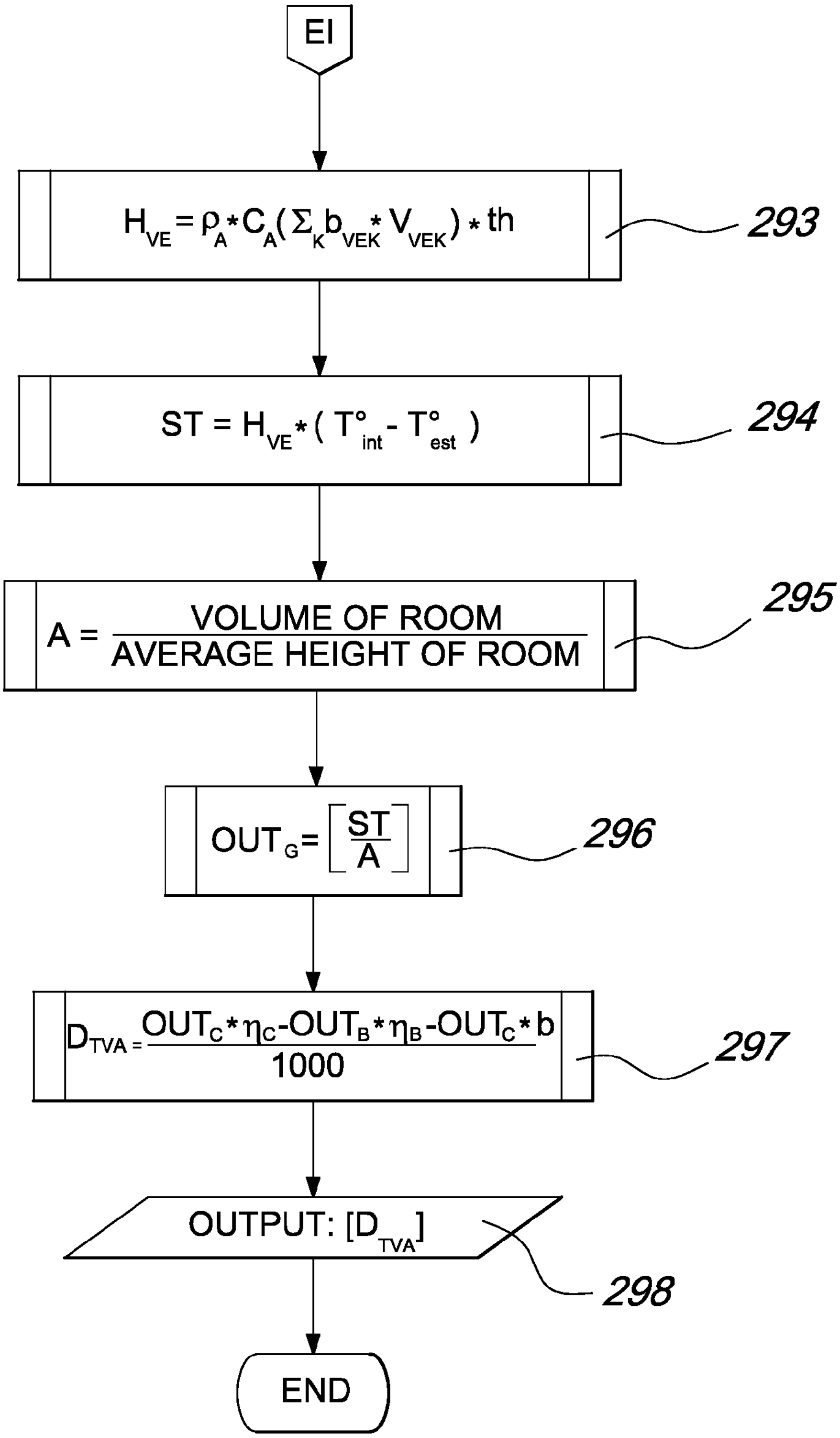
EI
$H_{VE} = \rho_A * C_A(\Sigma_K b_{VEK} * V_{VEK}) * th$
293
$ST = H_{VE} * (T°_{int} - T°_{est})$
294
$A = \frac{\text{VOLUME OF ROOM}}{\text{AVERAGE HEIGHT OF ROOM}}$
295
$OUT_G = \left[\frac{ST}{A}\right]$
296
$D_{TVA} = \frac{OUT_C * \eta_C - OUT_B * \eta_B - OUT_C * b}{1000}$
297
OUTPUT: $[D_{TVA}]$
298
END

Fig. 7f

Europäisches Patentamt
European Patent Office
Office européen des brevets

# EUROPEAN SEARCH REPORT

Application Number
EP 13 15 8606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | GB 2 212 949 A (STONECREST LIMITED [IE]) 2 August 1989 (1989-08-02)<br>* page 2 - page 15; figures 1-3, 6 * | 1<br>2-10 | INV.<br>F24D19/10<br>G06Q50/06 |
| Y | GB 2 432 016 A (UNIV MONTFORT [GB]) 9 May 2007 (2007-05-09)<br>* page 1 - page 24; figures 6, 8, 10 * | 2-10 | |
| A | DE 10 2008 003866 A1 (SCHAERFL ALOIS [DE]) 4 February 2010 (2010-02-04)<br>* the whole document * | 1-10 | |
| A | US 4 217 646 A (BRADFORD GEORGE J [US] ET AL) 12 August 1980 (1980-08-12)<br>* the whole document * | 1-10 | |
| A | JP 2005 283028 A (OSAKA GAS CO LTD) 13 October 2005 (2005-10-13)<br>* the whole document * | 1-10 | |
| A | WO 2010/014923 A1 (BOSCH GMBH ROBERT) 4 February 2010 (2010-02-04)<br>* the whole document * | 1-10 | TECHNICAL FIELDS SEARCHED (IPC) |
| A | US 2010/270933 A1 (CHEMEL BRIAN J [US] ET AL) 28 October 2010 (2010-10-28)<br>* the whole document * | 1-10 | F24D<br>F24H<br>G06Q |

The present search report has been drawn up for all claims

1

| Place of search | Date of completion of the search | Examiner |
|---|---|---|
| Munich | 17 April 2013 | Riesen, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 13 15 8606

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2013

| Patent document cited in search report | Publication date | Patent family member(s) | Publication date |
|---|---|---|---|
| GB 2212949 A | 02-08-1989 | BE 1000596 A7<br>GB 2212949 A<br>IE 873207 L | 14-02-1989<br>02-08-1989<br>26-05-1989 |
| GB 2432016 A | 09-05-2007 | NONE | |
| DE 102008003866 A1 | 04-02-2010 | NONE | |
| US 4217646 A | 12-08-1980 | NONE | |
| JP 2005283028 A | 13-10-2005 | NONE | |
| WO 2010014923 A1 | 04-02-2010 | CN 102132223 A<br>EP 2318891 A1<br>US 2010025483 A1<br>WO 2010014923 A1 | 20-07-2011<br>11-05-2011<br>04-02-2010<br>04-02-2010 |
| US 2010270933 A1 | 28-10-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT MI20121737 A